# EUROPÄISCHE PATENTSCHRIFT

(11) **EP 3 875 541 B1**
(45) Veröffentlichungstag und Bekanntmachung des Hinweises auf die Patenterteilung: **14.08.2024**
(21) Anmeldenummer: 20160750.4
(22) Anmeldetag: 03.03.2020
(51) Int. Cl.: C08L 83/04

(54) **ZUSAMMENSETZUNG UND VERFAHREN ZUR HERSTELLUNG VON SILIKONMASSEN UND DEREN VERWENDUNG**
COMPOSITION AND METHOD FOR PRODUCING SILICONE MASSES AND USE THEREOF
COMPOSITION ET PROCÉDÉ DE FABRICATION DE MASSES EN SILICONE ET LEUR UTILISATION

(43) Veröffentlichungstag der Anmeldung: 08.09.2021
(73) Patentinhaber: PolyU GmbH, 46147 Oberhausen (DE)
(72) Erfinder: LANGERBEINS, Klaus, 46147 (DE)
(74) Vertreter: König Szynka Tilmann von Renesse Patentanwälte Partnerschaft mbB Düsseldorf

(56) Entgegenhaltungen:
- EP-A1- 3 392 313
- EP-A2- 0 327 847

## Beschreibung

Silikonkautschukmassen, sogenannte RTV-(Raumtemperaturvernetzende)-Silikonkautschukmassen, sind als Werkstoffe mit elastischen Eigenschaften schon lange bekannt. Sie werden häufig als Dichtungsmassen oder Klebstoffe z.B. für Glas, Metalle (z.B. Aluminium), Kunststoffe, Holz, Keramik, Stein oder Porzellan eingesetzt. Sie finden breite Anwendung als Kleb- oder Dichtstoff im Bauwesen (insbesondere im Sanitärbereich) und als Beschichtungsmaterialien in der Elektroindustrie. Bei sog. Einkomponenten-RTV-Silikonkautschukmassen handelt es sich um plastisch formbare Mischungen aus α,ω-Dihydroxypolyorganosiloxanen und geeigneten Härtern bzw. Vernetzungsmitteln.

Für die Herstellung von Silikonkautschukmassen werden vorrangig Polyorganosiloxane, welche zwei oder mehrere funktionelle Gruppen tragen, zusammen mit einem Vernetzer verwendet. Große Bedeutung kommt hierbei den α,ω-Dihydroxypoiyorganoshoxanen als difunktionelle Polyorganosiloxane zu. Bekannte Vernetzer zeichnen sich durch mindestens zwei hydrolysierbare Gruppen aus, d.h. durch Hydrolyse werden Abgangsgruppen freigesetzt. Die Abgangsgruppen erlauben eine Klassifizierung der Vernetzer in neutrale, saure oder basische Systeme. Bekannte Abgangsgruppen sind beispielsweise Carbonsäuren, Alkohole und Oxime.

EP 2 030 976 B1 beschreibt Silanverbindungen als Vernetzer, die beim Vernetzen α-Hydroxycarbonsäureester freisetzen. In DE 202015009122 U1 werden Silanvernetzer mit α-Hydroxycarbonsäureamiden als Abgangsgruppe offenbart.

Es ist bekannt, dass die Polymerisation (Vernetzung, Aushärtung) der Silikonkautschukmassen bei Raumtemperatur in Gegenwart von Luftfeuchtigkeit durch die Zugabe eines geeigneten Härtungskatalysators (Katalysator) beschleunigt werden.

Hier sind besonders Zinnverbindungen von großer Bedeutung. DE 69501063 T2 beschreibt die Verwendung von Dibutylzinnbis(acetylacetonat) und Zinnoctylat in bei Raumtemperatur härtenden Silikon-Elastomer-Zusammensetzungen. EP 0298877 B1 beschreibt einen Zinnkatalysator aus Zinnoxid und Beta-Dicarbonyl-Verbindungen für Silikonelastomerzusammensetzungen. DE 4332037 A1 verwendet Dibutyldizinndilaurat als Katalysator in kondensationsvernetzendem Silikon.

Zinnverbindungen zeichnen sich im Allgemeinen durch eine sehr hohe katalytische Aktivität aus. Aufgrund ihrer toxischen Eigenschaften sind sie jedoch nachteilig.

Es sind auch zinnfreie Katalysatoren bekannt, beispielsweise auf Basis von Aluminium-, Zink-, Zirkonium- und Titanverbindungen. DE 4210349 A1 beschreibt die Verwendung von Tetrabutyltitanat, Dibutyl-bis(methylacetoacetato)titanat, Diisopropyl-bis(methylaceto-acetato)titanat und Düsobutyl-bis(ethylacetoacetato)titanat bei der Herstellung von Silikonkautschukmassen. EP 0102268 A1 offenbart Silikonkautschukmassen, die z.B. organische Zirkonverbindungen als Katalysator enthalten.

Nachteilig bei der Verwendung von zinnfreien Katalysatoren sind die vergleichsweise niedrigen katalytischen Aktivitäten. Auch können sie sich nachteilig auf die mechanischen Eigenschaften der daraus resultierenden Silikonkautschukmassen auswirken.

EP 3392313 A1 beschreibt einen Katalysator auf Basis einer Metall-Siloxan-Silanol(-at)-Verbindung. Metall-Siloxan-Silanol(-at)-Verbindungen sind dem Fachmann dem Grunde nach bekannt, beispielsweise auch aus der WO 2005/060671 A2 und der EP 2796493 A1. Diese Verbindungen sind jedoch aufwendig in der Herstellung und Aufbereitung. Sie sind daher teuer.

Eine Aufgabe der vorliegenden Erfindung ist es deshalb, Zusammensetzungen für die Herstellung von Silikonkautschukmassen bereitzustellen, die mindestes einen der oben genannten Nachteile überwindet. Insbesondere ist es eine Aufgabe, Zusammensetzungen für die Herstellung von Silikonkautschukmassen bereitzustellen, die einerseits effektiv, andererseits aber auch kostengünstig sind. Die gewollten mechanischen Eigenschaften der damit herstellbaren Silikonkautschukmassen sollen damit möglichst nicht negativ beeinflusst werden. Idealerweise soll die Zusammensetzung ökologisch und toxikologisch gut vertretbar sein. In einem weiteren Aspekt der Erfindung ermöglicht eine erfindungsgemäße Zusammensetzung eine erhöhte Verarbeitungszeit, etwa durch eine längere Hautbildungszeit.

Gelöst wird diese Aufgabe durch die Verwendung eines Katalysatorgemisches von mindestens zwei unterschiedlichen Katalysatoren, wobei nur einer der Katalysatoren eine Metall-Siloxan-Silanol(-at)-Verbindungen ist.

Gegenstand der Erfindung ist somit eine Zusammensetzung zur Herstellung härtbarer Silikonkautschukmassen enthaltend mindestens zwei Katalysatoren A und B, wobei Katalysator A mindestens eine Metall-Siloxan-Silanol(-at)-Verbindung umfasst und Katalysator B davon verschieden ist. Katalysator B ist somit ausgewählt aus einer Gruppe von Katalysatoren, die Metall-Siloxan-Silanol(-at)-Verbindungen nicht umfasst.

Insbesondere ist Gegenstand der vorliegenden Erfindung eine Zusammensetzung zur Herstellung einer Silikonkautschukmasse enthaltend oder erhältlich durch Vermischen mindestens der folgenden Komponenten:
a. mindestens eine hydroxyfunktionalisierte Polyorganosiloxanverbindung,
b. mindestens einen Vernetzer
c. mindestens zwei unterschiedliche Katalysatoren A und B, wobei der Katalysator A aus der Gruppe der Metall-Siloxan-Silanol(-at)-Verbindungen ausgewählt ist und Katalysator B ausgewählt ist aus einer Gruppe von Katalysatoren, die Metall-Siloxan-Silanol(-at)-Verbindungen nicht umfasst.

Überraschenderweise wurde gefunden, dass das erfindungsgemäße Katalysatorgemisch bei der Verwendung in Silikonkautschukmassen eine hohe katalytische Aktivität aufweist. Durch die hohe katalytische Aktivität ist es möglich, die Menge oder den Anteil der Metall-Siloxan-Silanol(-at)-Verbindung (Katalysator A) zu reduzieren, ohne erhebliche Einbussen an der katalytischen Aktivität hinnehmem zu müssen. Dies hat erhebliche ökonomische Vorteile.

Vorteilhafterweise kann dabei die Verwendung eines Zinnkatalysators minimiert oder sogar ganz vermieden werden. Es ist daher besonders bevorzugt, wenn die erfindungsgemäße Zusammensetzung zinnfrei ist. Dies ist ökologisch vorteilhaft und anwenderfreundlich.

Weiterhin konnte festgestellt werden, dass die Aus- und Durchhärtezeit der erfindungsgemäßen Zusammensetzung deutlich verkürzt ist. Darüber hinaus ermöglicht die erfindungsgemäße Zusammensetzung eine längere Hautbildungs- und Klebfreizeit. Dies erlaubt eine dem Anwender in der Herstellung von Silikonkautschukmassen ein größeres Verarbeitungszeitfenster. Dieses kann beispielweise bei gewichtsmäßig gleichem Katalysatoreinsatz um ca. 30 % verlängert werden, bei gleichzeitiger Reduktion der Durchhärtezeit von ca. 35 %

Ein weiterer Vorteil der Erfinding besteht darin, dass die unter Verwendung der erfindungsgemäßen Zusammensetzung hergestellten Silikonkautschukmassen weicher sind als diejenigen, die bei einer alleinigen Verwendung eines Katalysators A oder B entstehen.

Auch lassen sich die mechanischen Eigenschaften einer Silikonkautschukmasse durch die Verwendung des erfindungsgemäßen Katalysatorgemisches beeinflussen. So ist die Reißdehnung der Silikonkautschukmassen im Vergleich zu Silikonkautschukmassen, die mit üblichen Zinnkatalysatoren oder bei außschließlichen Verwendung von Metall-Siloxan-Silanol(-at)-Verbindungen als Katalysator verbessert.

Gegenstand der Erfindung ist somit auch ein Verfahren zur Bereitstellung von Silikonkautschukmassen mit
- einer Reißdehnung von 100 - 800 %
- einer Shore A Härte von 0 - 50

In einer vorteilhaften Ausführungsform wird die Metall-Siloxan-Silanol(-at)-Verbindung (Katalysator A) in einer molare Konzentration von 0,000001 bis 0,01 mol/kg, bevorzugt im Bereich von 0,000005 bis 0,005 mol/kg Dichtstoff und besonders bevorzugt im Bereich von 0,00007 und 0,001 mol/kg verwendet.

Der Gewichtsanteil der Metall-Siloxan-Silanol-Verbindung an der Gesamtzusammensetzung beträgt vorteilhafterweise 0,001 bis 0,5 Gew.-%, bevorzugt 0,006 bis 0,1 Gew.-% liegt.

Es ist besonders bevorzugt, wenn der Katalysator A und der Katalysator B in einem molaren Verhältnis von 1 : 2,2 in einem Gewichtsverhaltnis von 1 : 1,66 eingesetzt werden.

Ganz besonders bevorzugt ist es, wenn der Katalysator A und der Katalysator B in einem in einem Gewichtsverhaltnis von 1,1 : 0,9 bis 0,9 : 1,1 eingesetzt werden.

Äußerst bevorzugt ist es, wenn die Katalysatoren in einem Gewichtsverhaltnis von 1 : 1 eingesetzt werden.

Zur Viskositäterhöhung (= Stellmittel, damit das Material nicht abfließt, wenn z. B. verfugt wird) und zwecks Festigkeitsaufbau umfasst die erfindungsgemäße Zusammensetzung bevorzugt Kieselsäure, ganz besonders bevorzugt pyrogene Kieselsäure.

Insbesondere wird die erfindungsgemäße Aufgabe gelöst sowie die vorstehenden beschriebenen Vorteile erzielt durch die Verwendung von TiPOSS als Katalysator A in Kombination mit einem Katalysator B ausgewählt aus der Gruppe der Metallkatalysatoren wie Bismut-Neodecanoat, Zink(II)-2-ethylhexanoat, Titantetraisopropylat, Titantetrabutylat, Alumniumtri-sec-butylat, Zirkoniumtetraisopropylat, Zirkoniumtetrabutylat oder Dibutylzinndilaurat, besonders bevorzugt durch die Verwendung von TiPOSS (Katalysator A) und Bismut(III)-tris(neodecanoat) (Katalysator B) in einer erfindungsgemäßen Zusammensetzung.

### Definitionen

Im Sinne der Erfindung sind "Silanole" organische Siliziumverbindungen, bei denen mindestens eine Hydroxygruppe (OH) an das Silizium-Atom gebunden ist (=Si-OH).

Im Sinne der Erfindung sind "Silanolate" organische Siliziumverbindungen, bei denen mindestens eine deprotonierte Hydroxyfunktion (R-O-) an das Silizium-Atom gebunden ist (=Si-O-), wobei dieses negativ geladenen Sauerstoffatom auch an weitere Verbindungen, wie beispielsweise Metalle, gebunden und/oder koordiniert sein kann.

Mit der Bezeichnung "Alkylgruppe" ist eine gesättigte Kohlenwasserstoffkette gemeint. Alkylgruppen weisen insbesondere die allgemeine Formel -CₙH₂ₙ₊₁ auf. Die Bezeichnung "C1- bis C16-Alkylgruppe" bezeichnet insbesondere eine gesättigte Kohlenwasserstoffkette mit 1 bis 16 Kohlenstoffatomen in der Kette. Beispiele für C1- bis C16-Alkylgruppen sind Methyl-, Ethyl-, n-Propyl-, n-Butyl-, Isopropyl-, Isobutyl-, sec-Butyl-, tert-Butyl-, n-Pentyl- und Ethylhexyl. Entsprechend bezeichnet eine "C1- bis C8-Alkylgruppe" insbesondere eine gesättigte Kohlenwasserstoffkette mit 1 bis 8 Kohlenstoffatomen in der Kette. Alkylgruppen können insbesondere auch substituiert sein, auch wenn dies nicht speziell angegeben ist.

"Geradkettige Alkylgruppen" bezeichnen Alkylgruppen, die keine Verzweigungen enthalten. Beispiele für geradkettige Alkylgruppen sind Methyl-, Ethyl-, n-Propyl-, n-Butyl-, n-Pentyl-, n-Hexyl-, n-Heptyl und n-Octyl.

"Verzweigte Alkylgruppen" bezeichnen Alkylgruppen die nicht geradkettig sind, in denen also insbesondere die Kohlenwasserstoffkette eine Gabelung aufweist. Beispiele für verzweigte Alkylgruppen sind Isopropyl-, Isobutyl-, sec-Butyl-, tert-Butyl-, sec-Pentyl-, 3-Pentyl-, 2-Methylbutyl-, Isopentyl-, 3-Methylbut-2-yl, 2-Methylbut-2-yl-, Neopentyl-, Ethylhexyl-, und 2-Ethylhexyl.

"Alkenylgruppen" bezeichnen Kohlenwasserstoffketten, die mindestens eine Doppelbindung entlang der Kette enthalten. Beispielweise weist eine Alkenylgruppe mit einer Doppelbindung insbesondere die allgemeine Formel -CₙH₂ₙ₋₁ auf. Alkenylgruppen können jedoch auch mehr als eine Doppelbindung aufweisen. Die Bezeichnung "C2- bis C16-Alkenylgruppe" bezeichnet insbesondere eine Kohlenwasserstoffkette mit 2 bis 16 Kohlenstoffatomen in der Kette. Die Anzahl der Wasserstoffatome variiert dabei in Abhängigkeit der Anzahl der Doppelbindungen in der Alkenylgruppe. Beispiele für Alkenylgruppen sind Vinyl-, Allyl-, 2-Butenyl- und 2-Hexenyl-.

"Geradkettige Alkenylgruppen" bezeichnen Alkenylgruppen, die keine Verzweigungen enthalten. Beispiele für geradkettige Alkenylgruppen sind Vinyl-, Allyl-, n-2-Butenyl- und n-2-Hexenyl-.

"Verzweigte Alkenylgruppen" bezeichnen Alkenylgruppen die nicht geradkettig sind, in denen also insbesondere die Kohlenwasserstoffkette eine Gabelung aufweist. Beispiele für verzweigte Alkenylgruppen sind 2-Methyl-2-Propenyl-, 2-Methyl-2-Butenyl- und 2-Ethyl-2-Pentenyl-.

"Arylgruppen" bezeichnen monocyclische (z.B. Phenyl-), bicyclische (z.B. Indenyl-, Naphthalenyl, Tetrahydronapthyl, oder Tetrahydroindenyl) und tricyclische (z.B. Fluorenyl-, Tetrahydrofluorenyl-, Anthracenyl-, oder Tetrahydroanthracenyl-) Ringsysteme, in denen das monocyclische Ringsystem oder mindestens einer der Ringe in einem bicyclischen oder tricyclischen Ringsystem aromatisch ist. Insbesondere bezeichnet eine C4- bis C14-Arylgruppe eine Arylgruppe, die 4 bis 14 Kohlenstoffatome aufweist. Arylgruppen können insbesondere auch substituiert sein, auch wenn dies nicht speziell angegeben ist.

Eine "aromatische Gruppe" bezeichnet cyclische, planare Kohlenwasserstoffe mit aromatischem System. Eine aromatische Gruppe mit 4 bis 14 C-Atomen bezeichnet insbesondere eine aromatische Gruppe, die 4 bis 14 Kohlenstoffatome enthält. Die aromatische Gruppe kann insbesondere monocyclisch, bicyclisch oder tricyclisch sein. Eine aromatische Gruppe kann ferner auch 1 bis 5 Heteroatome ausgewählt aus der Gruppe bestehend aus N, O, und S enthalten. Beispiele für aromatische Gruppen sind Benzol, Naphthalin, Anthracen, Phenanthren, Furan, Pyrrol, Thiophen, Isoxazol, Pyridin und Chinolin, wobei in den vorgenannten Beispiele jeweils die notwendige Anzahl an Wasserstoffatomen entfernt ist, um eine Eingliederung in die entsprechende Strukturformel zu ermöglichen.

Eine "Cycloalkylgruppe" bezeichnet einen Kohlenwasserstoffring, der nicht aromatisch ist. Insbesondere bezeichnet eine Cycloalkylgruppe mit 4 bis 14 C-Atomen einen nichtaromatischen Kohlenwasserstoffring mit 4 bis 14 Kohlenstoffatomen. Cycloalkylgruppen können gesättigt oder teilweise ungesättigt sein. Gesättigte Cycloalkylgruppen sind nicht aromatisch und weisen auch keine Doppel- oder Dreifachbindungen auf. Teilweise ungesättigte Cycloalkylgruppen weisen im Gegensatz zu gesättigten Cycloalkylgruppen mindestens eine Doppel- oder Dreifachbindung auf, wobei die Cycloalkylgruppe jedoch nicht aromatisch ist. Cycloalkylgruppen können insbesondere auch substituiert sein, auch wenn dies nicht speziell angegeben ist.

Eine "Aralkylgruppe" bezeichnet eine durch eine Arylgruppe substituierte Alkylgruppe. Eine "C5- bis C15- Aralkylgruppe" bezeichnet insbesondere eine Aralkylgruppe mit 5 bis 15 Kohlenstoffatomen, wobei darin sowohl die Kohlenstoffatome der Alkylgruppe als auch der Arylgruppe enthalten sind. Beispiele für Aralkylgruppen sind Benzylund Phenylethyl. Aralkylgruppen können insbesondere auch substituiert sein, auch wenn dies nicht spezielle angegeben ist.

Ein "cyclisches Ringsystem" bezeichnet einen Kohlenwasserstoffring, der nicht aromatisch ist. Insbesondere bezeichnet ein cyclisches Ringsystem mit 4 bis 14 C-Atomen ein nichtaromatisches Kohlenwasserstoffringsystem mit 4 bis 14 Kohlenstoffatomen. Ein cyclisches Ringsystem kann aus einem einzelnen Kohlenwasserstoffring (monocyclisch), aus zwei Kohlenwasserstoffringen (bicyclisch) oder aus drei Kohlenwasserstoffringen (tricyclisch) bestehen. Insbesondere können cyclische Ringsysteme auch 1 bis 5 Heteroatome, bevorzugt ausgewählt aus der Gruppe bestehend aus N, O, und S enthalten.

"Gesättigte cyclische Ringsysteme" sind nicht aromatisch und weisen auch keine Doppel- oder Dreifachbindungen auf. Beispiele für gesättigte cyclische Ringsysteme sind Cyclopentan, Cyclohexan, Decalin, Norbornan und 4H-Pyran, wobei in den vorgenannten Beispielen jeweils die notwendige Anzahl an Wasserstoffatomen entfernt ist, um eine Eingliederung in die entsprechende Strukturformel zu ermöglichen. Beispielsweise würden in einer Strukturformel HOR*-CH3, wobei R* ein cyclisches Ringsystem mit 6 Kohlenstoffatomen, insbesondere Cyclohexan, ist, zwei Wasserstoffatome von dem cyclischen Ringsystem, insbesondere von Cyclohexan, entfernt sein, um eine Eingliederung in die Strukturformel zu erlauben.

Sofern nichts anderes angegeben ist, bezeichnet N insbesondere Stickstoff. Ferner bezeichnet O insbesondere Sauerstoff, sofern nichts anderes angegeben ist. S bezeichnet insbesondere Schwefel, sofern nichts anderes angegeben ist.

"Optional substituiert" bedeutet, dass in der entsprechenden Gruppe bzw. in dem entsprechenden Rest Wasserstoffatome durch Substituenten ersetzt sein können. Substituenten können insbesondere ausgewählt sein aus der Gruppe bestehend aus C1- bis C4-Alkyl, Methyl-, Ethyl-, Propyl-, Butyl-, Phenyl-, Benzyl-, Halogen-, Fluor-, Chlor-, Brom-, lod-, Hydroxy-, Amino-, Alkylamino-, Dialkylamino-, C1- bis C4-Alkoxy-, Phenoxy-, Benzyloxy-, Cyano-, Nitro-, und Thio-. Wenn eine Gruppe als optional substituiert bezeichnet ist, können 0 bis 50, insbesondere 0 bis 20, Wasserstoffatome der Gruppe durch Substituenten ersetzt sein. Wenn eine Gruppe substituiert ist, ist mindestens ein Wasserstoffatom durch einen Substituenten ersetzt.

"Alkoxy" bezeichnet eine Alkylgruppe, die über ein Sauerstoffatom mit der Hauptkohlenstoffkette verbunden ist.

Unter einem "Alkylat" wird ein Alkoholat oder auch Alkoxid des entsprechenden Alkans verstanden. Beispielsweise ist ein Methanolat das Alkoholat des Methyls. Alkoholate, auch Alkoxide sind Salze aus Metallkationen und Alkoholatanionen, z.B. Natriummethanolat (NaOCH₃).

Die "Reißfestigkeit" gehört zu den durch verschiedene Prüfmethoden bestimmbaren mechanischen Eigenschaften von Polymeren. Sie ist der Quotient (*σ_{R}*) aus der im Augenblick des Reißens gemessenen Kraft *F_{R}* und dem Anfangsquerschnitt *A₀* des Probekörpers.

Die "Reißdehnung" ist das Verhältnis der Längenänderung zur Ausgangslänge nach dem Bruch des Prüfkörpers. Sie drückt die Fähigkeit eines Werkstoffes aus, Formänderungen ohne Rissbildung zu widerstehen. Sie ist der Quotient (*ε_{R}*) aus der im Augenblick des Reißens gemessenen Änderung *L_{R}* - *L₀,* der Messlänge *L_{R}* und der Anfangsmesslänge *L₀* des Probekörpers.

Der "Spannungswert" ist der Quotient (*σᵢ*) aus der bei Erreichen einer bestimmten Dehnung vorhandenen Zugkraft *Fᵢ* und dem Anfangs-querschnitt *A₀*

Die Bestimmung von Zugfestigkeit, Reißdehnung und Spannungswerten im Zugversuch werden nach DIN 53504:2017-03 ermittelt.

Das "Rückstellvermögen" beschreibt die Tendenz eines flexiblen Trägers, die ursprünglichen Maße ganz oder teilweise wieder anzunehmen, nachdem die Kräfte aufgehoben wurden, welche die Ausdehnung oder Verformung verursacht haben. Das mittlere Rückstellvermögen wird gemäß der DIN EN ISO 7389:2004-04 bestimmt.

"Shore-Härte" ist eine gängige Angabe der Härte eines elastischen Stoffs. Sie wird mittels eines Shore-Härte-Prüfers (Durometer) geprüft umfassend einen federbelasteten Stift aus gehärtetem Stahl. Dessen Eindringtiefe in das zu prüfende Material ist ein Maß für die Shore-Härte, die auf einer Skala von 0 Shore (2,5 Millimeter Eindringtiefe) bis 100 Shore (0 Millimeter Eindringtiefe) gemessen wird. Eine hohe Zahl bedeutet also eine große Härte. Es wird je nach zur Messung verwendetem Kegelstumpf, welcher in die Probe drückt, nach Shore A-, Shore B-, Shore C- und Shore D-Härte unterschieden.

Der Wert "Shore A" wird angegeben bei Elastomeren, nach Messung mit einer Nadel mit abgestumpfter Spitze. Die Stirnfläche des Kegelstumpfs hat einen Durchmesser von 0,79 Millimetern, der Öffnungswinkel beträgt 35°. Auflagegewicht: 1 kg, Haltezeit: 15 s. Handmessgeräte müssen meist sofort beim Aufdrücken auf die Probe abgelesen werden, der angezeigte Wert nimmt bei längerer Haltezeit ab. Der Wert 0 für die Shore A-Härte entspricht in etwa der Festigkeit von Gelantine, der Wert 10 der Festigkeit eines Gummibärchens. Werte von 50-70 entsprechen der Festigkeit von Autoreifen und der Shore A-Wert von 100 beschreibt die Härte von Hartplastik. Die Shore A-Härte wird bestimmt gemäß ASTM D2240-15.

"Dichtungsmittel" oder "Dichtungsmassen" bezeichnen elastische, in flüssiger bis zähflüssiger Form oder als biegsame Profile oder Bahnen aufgebrachte Stoffe zum Abdichten einer Oberfläche, insbesondere gegen Wasser, Gase oder andere Medien.

Der Begriff "Dichtstoff" wie hierhin verwendet beschreibt die ausgehärtete erfindungsgemäße Zusammensetzung nach einem der Ansprüche.

Die Bezeichnung "Klebstoff" bezieht sich auf Stoffe, die Flügelteile durch Flächenhaftung (Adhäsion) und/oder innere Festigkeit (Kohäsion) verbinden. Von diesem Begriff sind insbesondere Leim, Kleister, Dispersions-, Lösemittel-, Reaktions- und Kontakt-Klebstoffe erfasst.

"Beschichtungsmittel" sind alle Mittel zum Beschichten einer Oberfläche.

Bei "Vergussmassen" oder auch "Kabelvergussmassen" handelt es sich im Sinne der Erfindung um heiß oder kalt zu verarbeitende Massen zum Vergießen von Kabeln und/oder Kabelzubehörteilen.

Im Sinne der Erfindung handelt es sich bei "Silikonkautschukmassen" um synthetische silikonhaltige Kautschukmassen, die im Rahmen dieser Erfindung auch austauschbar als härtbare Silikonzusammensetzungen bezeichnet werden, was Kautschuk, Polymerisate, Polykondensate, und Polyaddukte einschließt, die durch Vernetzung mit geeigneten Vernetzern in den hochelastischen, gehärteten Zustand überführt werden können. Ferner handelt es sich um plastisch formbare Mischungen, beispielsweise aus α,ω-Dihydroxypolyorganosiloxanen und geeigneten Härtern bzw. Vernetzungsmitteln, die unter Feuchtigkeitsausschluß aufbewahrt werden können, wobei diese Silikonkautschukmassen aber unter dem Einfluss von Wasser oder Luftfeuchtigkeit bei Raumtemperatur polymerisieren.

"RTV-Silikonkautschukmassen" lassen sich in Ein- und Zweikomponentensysteme unterscheiden. Die erste Gruppe (RTV-1) vernetzt bei Raumtemperatur unter dem Einfluss von Luftfeuchtigkeit, wobei die Vernetzung durch Kondensation von SiOH-Gruppen unter Bildung von Si-O-Bindungen erfolgt. Die SiOH-Gruppen werden durch Hydrolyse von hydrolysierbaren Gruppen am Siliciumatom einer intermediär aus einem Polymer mit endständigen OH-Gruppen und einem sogenannten Vernetzer Si(R)ₘ(R^{a})₄₋ₘ entstehenden Spezies gebildet. Bekannte Abgangsgruppen sind beispielsweise Carbonsäuren, Alkohole und Oxime. Bei Zweikomponentenkautschuken (RTV-2) hingegen werden als Vernetzer z. B. Gemische aus Kieselsäureestern (z. B. Ethylsilicat) und zinnorganische Verbindungen verwendet, wobei als Vernetzungsreaktion die Bildung einer Si-O-Si-Brücke aus Si-OR und Si-OH durch Alkoholabspaltung erfolgt.

"Polymere" sind chemische Verbindungen aus Ketten- oder verzweigten Molekülen (Makromolekülen), die ihrerseits aus einer Anzahl von gleichen/gleichartigen oder auch ungleichen Einheiten, den so genannten Monomeren bestehen. Polymere umfassen dabei auch Oligomere. Oligomere sind Polymere, welche eine kleinere Anzahl von Einheiten aufweist. Sofern nicht ausdrücklich anderweitig definiert, fallen erfindungsgemäß Oligomere unter die Begrifflichkeit der Polymere. Polymere können als Homopolymere (= bestehen aus nur einer Monomereinheit), Copolymere (= bestehen aus zwei oder mehreren Monomereinheiten) oder als Polymermischung (= Polymerlegierung, Polymerblends, also Mischungen aus unterschiedlichen Polymeren und Copolymeren) vorkommen.

"Silikonkautschuke" sind in den gummielastischen Zustand überführbare Massen, welche Polyorganosiloxane enthalten, die für Vernetzungsreaktionen zugängliche Gruppen aufweisen. Als solche kommen vorwiegend Wasserstoffatome, Hydroxygruppen und Vinylgruppen in Frage, die sich an den Kettenenden befinden, aber auch in die Kette eingebaut sein können. Silikonkautschuke enthalten verstärkende Stoffe und Füllstoffe, deren Art und Menge das mechanische und chemische Verhalten der durch die Vernetzung entstehenden Silikonelastomere deutlich beeinflussen. Silikonkautschuke können mit geeigneten Pigmenten gefärbt werden. Man unterscheidet nach der notwendigen Vernetzungstemperatur zwischen kalt- (RTV) und heißvernetzenden (HTV) Silikonkautschuken (RTV = Raumtemperatur vernetzend, HTV = Hochtemperatur vernetzend).

Der Begriff "Polysiloxan" oder "Polyorganosiloxan" beschreibt eine erfindungsgemäße Zusammensetzung, die zumindest eine Organosilikonverbindung, vorzugsweise zwei, drei oder mehrere verschiedene Organosilikonverbindungen, enthält. Eine in der Zusammensetzung enthaltene Organosilikonverbindung ist bevorzugt eine oligomere oder polymere Verbindung.

Die polymere Organosilikonverbindung ist vorzugsweise eine difunktionelle Polyorganosiloxanverbindung, besonders bevorzugt eine **hydroxyfunktionalisierte Polyorganosiloxanverbindung,** ganz besonders bevorzugt ein α,ω-dihydroxyl-terminiertes Polyorganosiloxan. Äußerst bevorzugt sind α,ω-dihydroxyl-terminierte Polydiorganosiloxane, insbesondere α,ω-dihydroxyl-terminierte Polydialkylsiloxane, α,ω-dihydroxyl-terminierte Polydialkenylsiloxane oder α,ω-dihydroxylterminierte Polydiarylsiloxane. Neben homopolymeren α,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliziumatom, als auch Copolymere aus Monomeren mit verschiedenen organischen Substituenten an einem Siliziumatom umfasst sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec-und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können α,ω-dihydroxyl-terminierte Polydiorganosiloxane mit teilfluorierten oder perfluorierten organischen Substituenten verwendet werden oder es werden α,ω-dihydroxyl-terminierte Polydiorganosiloxane mit durch hydroxyl und/oder aminogruppensubstituierten organischen Substituenten an den Siliziumatomen, verwendet.

Besonders bevorzugte Organosilikonverbindungen sind α,ω-dihydroxyl-terminierte Polydialkylsiloxane, wie z.B. α,ω-dihydroxyl-terminierte Polydimethylsiloxane, α,ω-dihydroxyl-terminierte Polydiethylsiloxane oder α,ω-dihydroxyl-terminierte Polydivinylsiloxane, sowie α,ω-dihydroxyl-terminierte Polydiarylsiloxane, wie z.B. α,ω-dihydroxyl-terminierte Polydiphenylsiloxane. Dabei sind Polyorganosiloxane besonders bevorzugt, die eine kinematische Viskosität (nach DIN 53019-1:2008-09) von 5.000 bis 120.000 cSt (bei 25°C) haben, insbesondere solche mit einer Viskosität von 20.000 bis 100.000 cSt, und ganz besonders bevorzugt solche mit einer Viskosität von 40.000 bis 90.000 cSt. Es können auch Mischungen aus Polydiorganosiloxanen mit unterschiedlichen Viskositäten verwendet werden.

In einer ganz besonders bevorzugten Ausführungsform wird als hydroxyfunktionalisierte Polyorganosiloxanverbindung in der erfindungsgemäßen Zusammensetzung α,ω-dihydroxyl-terminiertes Polydimethylsiloxan eingesetzt, ganz besonders bevorzugt α,ω-dihydroxyl-terminiertes Polydimethylsiloxan mit einer kinematischen Viskosität (nach DIN 53019-1:2008-09) von etwa 80.000 cSt.

Unter "Vernetzern" (Synonym: Härter) oder auch alternativ "Silanvernetzern" werden insbesondere vernetzungsfähige Silanverbindungen, verstanden, die mindestens zwei durch Hydrolyse abspaltbare Gruppen aufweisen. Mögliche Beispiele für derartige vernetzungsfähige Silanverbindungen sind Si(OCH₃)₄, Si(CH₃)(OCH₃)₃ und Si(CH₃)(C₂H₅)(OCH₃)₂. Vernetzer können auch als "Härter" bezeichnet werden. "Vernetzer" oder auch "reaktiven Silanvernetzern" umfasst insbesondere auch "Vernetzersysteme", die mehr als eine vernetzungsfähige Silanverbindung enthalten können.

"Hydroxycarbonsäureester-Vernetzer" sind Vernetzer der allgemeinen Formel Si(R)ₘ(R^{a})₄₋ₘ, wobei m = 0, 1 oder 2 sein kann, insbesondere m eine ganze Zahl von 0 bis 3 sein kann, wenn mindestens ein R ein Alkoxyrest ist, und R^{a} ein Hydroxycarbonsäureesterrest mit der allgemeinen Strukturformel (A) und wie unten definiert ist.

"Hydroxycarbonsäureamid-Vernetzer" sind Vernetzer der allgemeinen Formel Si(R)ₘ(R^{a})₄₋ₘ, wobei m = 0, 1 oder 2 sein kann, insbesondere m eine ganze Zahl von 0 bis 3 sein kann, wenn mindestens ein R ein Alkoxyrest ist, und R^{a} ein Hydroxycarbonsäureamidrest mit der allgemeinen Strukturformel (B) und wie unten definiert ist.

"Salicylato-Vernetzer" sind Vernetzer der allgemeinen Formel Si(R)ₘ(R^{a})₄₋ₘ, wobei m = 0, 1 oder 2 sein kann, insbesondere m eine ganze Zahl von 0 bis 3 sein kann, wenn mindestens ein R ein Alkoxyrest ist, und R^{a} ein Salicylsäurerest mit der allgemeinen Strukturformel (C1), (C2) oder (C3) und wie unten definiert ist.

"Oxim-Vernetzer" sind Vernetzer der allgemeinen Formel Si(R)ₘ(R^{a})₄₋ₘ, wobei m = 0, 1 oder 2 sein kann, insbesondere m eine ganze Zahl von 0 bis 3 sein kann, wenn mindestens ein R ein Alkoxyrest ist, und R^{a} ein Oximrest mit der allgemeinen Strukturformel (D) und wie unten definiert ist.

"Carbonsäureamid-Vernetzer" sind Vernetzer der allgemeinen Formel Si(R)ₘ(R^{a})₄₋ₘ, wobei m = 0, 1 oder 2 sein kann, insbesondere m eine ganze Zahl von 0 bis 3 sein kann, wenn mindestens ein R ein Alkoxyrest ist, und R^{a} ein Carbonsäureamidrest der allgemeinen Formel -N(Rⁱ)-C(O)-R^{j} ist, wobei R^{j} wie unten definiert ist.

"Acetat-Vernetzer" sind Vernetzer der allgemeinen Formel Si(R)ₘ(R^{a})₄₋ₘ, wobei m = 0, 1 oder 2 sein kann, insbesondere m eine ganze Zahl von 0 bis 3 sein kann, wenn mindestens ein R ein Alkoxyrest ist, und R^{a} ein Essigsäurerest mit der allgemeinen Formel -O-C(O)-R^{f} ist, wobei R^{f} Methyl- ist.

"Amin-Vernetzer" sind Vernetzer der allgemeinen Formel Si(R)ₘ(R^{a})₄₋ₘ, wobei 0, 1 oder 2 sein kann, insbesondere m eine ganze Zahl von 0 bis 3 sein kann, wenn mindestens ein R ein Alkoxyrest ist, und R^{a} ein Aminrest mit der allgemeinen Formel -NH(R^{l}) ist, wobei R^{l} wie unten definiert ist.

Erfindungsgemäß kann die Zusammensetzung auch ein Gemisch aus mindestens zwei unterschiedlichen Vernetzern umfassen. Beispielsweise kann eine Kombination aus einem Salicylato-Vernetzer und einem Oxim-Vernetzer oder Kombination aus zwei unterschiedlichen Salicylato-Vernetzern eingesetzt werden. Der Einsatz von Mischungen von Vernetzern in der Aushärtung von Polyorganosiloxanen kann vorteilhafte Eigenschaften aufweisen. So kann beispielsweise der Anteil eines toxikologisch bedenklichen, übelriechenden und/oder teuren Vernetzers gesenkt werden. Insbesondere kann die Kombination von unterschiedlichen Vernetzern die Eigenschaften der resultierenden Silikonkautschukmassen beeinflussen. Aufgrund der unterschiedlichen Reaktivitäten der Vernetzer können so die Materialeigenschaften der ausgehärteten Silikonkautschukmassen entsprechend gesteuert werden. Oxim-Vernetzer führen eher zu festeren Silikonkautschukmassen und höheren Klebefreizeiten und Hautbildungszeiten aufweisen, wohingegen Acetat-Vernetzer weichere Silikonkautschukmassen erzeugen und geringere Klebefreizeiten und Hautbildungszeiten ermöglichen.

Dem Fachmann ist bekannt, dass es in Vernetzern enthaltend Mischungen verschiedener Verbindungen der allgemeinen Formel Si(R)ₘ(R^{a})₄₋ₘ auch zu Austauschreaktionen zwischen den verschiedenen Gruppen R^{a} der verschiedenen Verbindungen kommen kann. Diese Austauschreaktionen können insbesondere bis zu einem Gleichgewichtszustand ablaufen. Dieser Prozess kann auch als Equilibrierung bezeichnet werden.

Geeignete **Vernetzer** im Sinne der Erfindung sind Vernetzer der allgemeinen Formel Si(R)ₘ(R^{a})₄₋ₘ, wobei jeder R unabhängig voneinander einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte, geradkettige oder verzweigte C2- bis C16-Alkenylgruppe und/oder eine optional substituierte C4- bis C14-Arylgruppe bedeutet und/oder ein Alkoxyrest -OR^{k} bedeutet, wobei R^{k} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und m eine ganze Zahl von 0 bis 2 ist, insbesondere m eine ganze Zahl von 0 bis 3 ist, wenn mindestens ein R ein Alkoxyrest ist, jeder R^{a} unabhängig voneinander ausgewählt ist aus der Gruppe bestehend aus
- einem Hydroxycarbonsäureesterrest mit der allgemeinen Strukturformel (A): 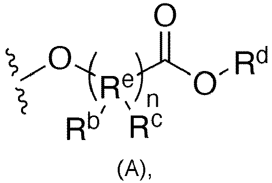 wobei
   jeder R^{b} unabhängig voneinander H oder einen optional substituierten Kohlenwasserstoffrest mit 1 bis 20 Kohlenstoffatomen, insbesondere eine optional substituierte, geradkettige oder verzweigte C1- bis C16- Alkylgruppe oder eine optional substituierte C4- bis C14-Arylgruppe, bedeutet,
   jeder R^{c} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
   R^{d} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
   R^{e} ein Kohlenstoffatom oder einen optional substituierten Kohlenwasserstoffrest mit 0 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und n eine ganze Zahl von 1 bis 10 ist,
   oder Oligomere oder Polymere des Vernetzers,
   wobei
   wenn R^{e} ein Kohlenstoffatom ist, R^{b} und R^{c} nicht H bedeuten und R^{b} nicht H und R^{c} nicht Methyl- bedeuten und R^{b} nicht Methyl- und R^{c} nicht H bedeuten,
- einem Hydroxycarbonsäureamidrest mit der allgemeinen Strukturformel (B): 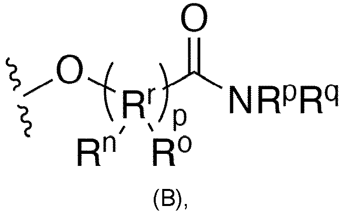 wobei
   jeder Rⁿ unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
   jeder R^{o} unabhängig voneinander H oder einen optional substituierten Kohlenwasserstoffrest mit 1 bis 20 Kohlenstoffatomen, insbesondere eine optional substituierte, geradkettige oder verzweigte C1- bis C16- Alkylgruppe oder eine optional substituierte C4- bis C14-Arylgruppe, bedeutet,
   R^{p} und R^{q} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
   R^{r} ein Kohlenstoffatom oder einen optional substituierten Kohlenwasserstoffrest mit 0 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und
   p eine ganze Zahl von 1 bis 10 ist,
- einem Salicylsäurerest mit der allgemeinen Strukturformel (C1), (C2), (C3) oder Mischungen davon: 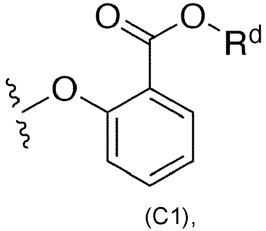 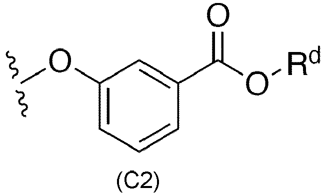 oder 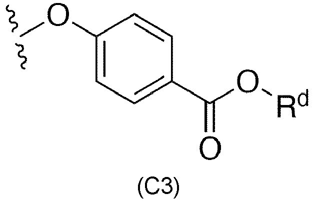 wobei
   jeder R^{d} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine C5- bis C15-Aralkylgruppe oder eine optional substituierte C4- bis C14-Arylgruppe bedeutet,
- einem Oximrest mit der allgemeinen Strukturformel (D): 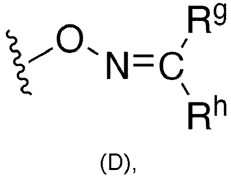 wobei
   R^{g} und R^{h} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeuten,
- einem Carbonsäureamidrest -N(Rⁱ)-C(O)-R^{j}, wobei R' H oder einen optional substituierten Kohlenwasserstoffrest mit 1 bis 20 Kohlenstoffatomen, insbesondere eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und R^{j} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet,
- einem Carbonsäurerest -O-C(O)-R^{f}, wobei R^{f} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe bedeutet, insbesondere einem Essigsäurerest -O-C(O)-R^{f}, wobei R^{f} Methyl- ist, bedeutet (Acetat-Vernetzer), und/oder
- einem Aminrest -NH(R¹), wobei R¹ H oder einen optional substituierten Kohlenwasserstoffrest mit 1 bis 20 Kohlenstoffatomen, insbesondere eine optional substituierte, geradkettige oder verzweigte C1-bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet und R^{j} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe, bedeutet.

### Hydroxycarbonsäure-Vernetzer

In der allgemeinen Strukturformel (A) ist der Hydroxycarbonsäureesterrest über das Sauerstoffatom der Hydroxygruppe an das Siliciumatom gebunden. Beispielsweise kann eine im erfindungsgemäßen Vernetzer enthaltene Verbindung mit der allgemeinen Strukturformel Si(R)ₘ(R^{a})₄₋ₘ, in der m = 1 ist, die allgemeine Strukturformel (Aa) aufweisen: 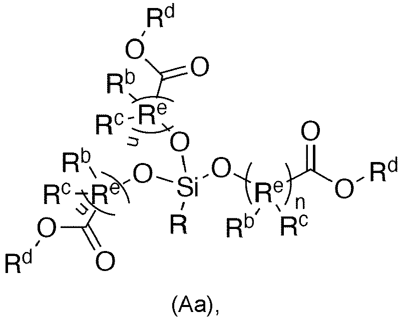 wobei
jeder R^{b} unabhängig voneinander H oder einen optional substituierten Kohlenwasserstoffrest mit 1 bis 20 Kohlenstoffatomen, insbesondere eine optional substituierte, geradkettige oder verzweigte C1- bis C16- Alkylgruppe oder eine optional substituierte C4- bis C14-Arylgruppe, bedeutet,
jeder R^{c} unabhängig voneinander H oder einen optional substituierten Kohlenwasserstoffrest mit 1 bis 20 Kohlenstoffatomen, insbesondere eine optional substituierte, geradkettige oder verzweigte C1- bis C16-Alkylgruppe oder eine optional substituierte C4- bis C14-Arylgruppe, bedeutet,
R^{d} H oder einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe, eine optional substituierte C5- bis C15-Aralkylgruppe oder eine optional substituierte C4- bis C14-Arylgruppe, bedeutet,
R^{e} ein Kohlenstoffatom oder einen optional substituierten Kohlenwasserstoffrest mit 0 bis 20 Kohlenstoffatomen, insbesondere ein optional substituiertes gesättigtes oder teilweise ungesättigtes cyclisches Ringsystem mit 4 bis 14 C-Atomen oder eine optional substituierte aromatische Gruppe mit 4 bis 14 C-Atomen, bedeutet, und n eine ganze Zahl von 1 bis 10 ist,
oder Oligomere oder Polymere des Vernetzers,
wobei
wenn R^{e} ein Kohlenstoffatom ist, R^{b} und R^{c} nicht H bedeuten und R^{b} nicht H und R^{c} nicht Methyl- bedeuten und R^{b} nicht Methyl- und R^{c} nicht H bedeuten.

### Lactato-Vernetzer

Gemäß einer Ausführungsform der allgemeinen Strukturformel (Ab) weist R^{a} die hierin beschriebene allgemeine Strukturformel (A) auf, wobei R^{e} ein Kohlenstoffatom, R^{b} Methyl- und R^{c} H ist, wobei R^{d} H, Methyl-, Ethyl-, n-Propyl, Isopropyl-, n-Butyl-, Isobutyl-, sec-Butyl, tert-Butyl, 2-Ethylhexyl-, Vinyl- oder Phenyl- bedeutet und R bevorzugt ausgewählt ist aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl- oder Phenyl-. Besonders bevorzugt ist R^{d} ausgewählt aus der Gruppe bestehend aus Methyl- und Ethyl- oder n-Propyl. Ganz besonders bevorzugt ist R^{d} Ethyl-, sodass der Rest (A) in der allgemeinen Strukturformel (Ab) oder (Ac) einen 2-Hydroxypropionsäureethylester darstellt. Insbesondere werden erfindungsgemäß die reinen Racemate (R)-2-Hydroxypropionsäureethylester (D-(+)-Milchsäureethylester) und (S)-2-Hydroxypropionsäureethylester (L-(-)-Milchsäureethylester) oder Mischungen davon, einschließlich einer racemischen Mischung umfasst. R ist besonders bevorzugt ausgewählt aus der Gruppe bestehend aus Methyl-, Ethyl- oder Vinyl-.

Weiter kann ein Lactato-Vernetzer auch als Oligomere oder Polymere des Vernetzers vorliegen, wobei
wenn R^{e} ein Kohlenstoffatom ist, R^{b} und R^{c} nicht H bedeuten und R^{b} nicht H und R^{c} nicht Methyl- bedeuten und R^{b} nicht Methyl- und R^{c} nicht H bedeuten.

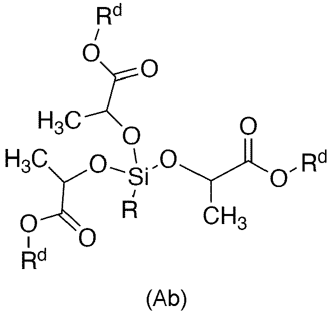

Gemäß einer weiteren Ausführungsform der Erfindung ist in der Verbindung mit der allgemeine Strukturformel Si(R)ₘ(R^{a})₄₋ₘ m = 1, R bedeutet Vinyl- und R^{a} weist die hierin beschriebene allgemeine Strukturformel (A) auf, wobei R^{e} C, R^{b} Methyl-, R^{c} H und R^{d} Methylbedeutet. Diese Verbindung wird insbesondere auch als Tris(methyllactato)vinylsilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Phenyl- und R^{a} weist die hierin beschriebene allgemeine Strukturformel (A) auf, wobei R^{e} C, R^{b} Methyl-, R^{c} H und R^{d} Methylbedeutet. Diese Verbindung wird insbesondere auch als Tris(methyllactato)phenylsilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Propyl- und R^{a} weist die hierin beschriebene allgemeine Strukturformel (A) auf, wobei R^{e} C, R^{b} Methyl-, R^{c} H und R^{d} Methylbedeutet. Diese Verbindung wird insbesondere auch als Tris(methyllactato)propylsilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Methyl- und R^{a} weist die hierin beschriebene allgemeine Strukturformel (A) auf, wobei R^{e} C, R^{b} Methyl-, R^{c} H und R^{d} Methylbedeutet. Diese Verbindung wird insbesondere auch als Tris(methyllactato)methylsilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Ethyl- und R^{a} weist die hierin beschriebene allgemeine Strukturformel (A) auf, wobei R^{e} C, R^{b} Methyl-, R^{c} H und R^{d} Methylbedeutet. Diese Verbindung wird insbesondere auch als Tris(methyllactato)ethylsilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Vinyl- und R^{a} weist die hierin beschriebene allgemeine Strukturformel (A) auf, wobei R^{e} C, R^{b} Methyl-, R^{c} H und R^{d} Ethylbedeutet. Diese Verbindung wird insbesondere auch als Tris(ethyllactato)vinylsilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Phenyl- und R^{a} weist die hierin beschriebene allgemeine Strukturformel (A) auf, wobei R^{e} C, R^{b} Methyl-, R^{c} H und R^{d} Ethylbedeutet. Diese Verbindung wird insbesondere auch als Tris(ethyllactato)phenylsilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Propyl- und R^{a} weist die hierin beschriebene allgemeine Strukturformel (A) auf, wobei R^{e} C, R^{b} Methyl-, R^{c} H und R^{d} Ethylbedeutet. Diese Verbindung wird insbesondere auch als Tris(ethyllactato)propylsilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Methyl- und R^{a} weist die hierin beschriebene allgemeine Strukturformel (A) auf, wobei R^{e} C, R^{b} Methyl-, R^{c} H und R^{d} Ethylbedeutet. Diese Verbindung wird insbesondere auch als Tris(ethyllactato)methylsilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Ethyl- und R^{a} weist die hierin beschriebene allgemeine Strukturformel (A) auf, wobei R^{e} C, R^{b} Methyl-, R^{c} H und R^{d} Ethylbedeutet. Diese Verbindung wird insbesondere auch als Tris(ethyllactato)ethylsilan bezeichnet.

Gemäß einer Ausführungsform der allgemeinen Strukturformel (Ac) weist R^{a} die hierin beschriebene allgemeine Strukturformel (A) auf, wobei R^{e} C, R^{b} Methyl- und R^{c} H ist, wobei R^{d} H, Methyl-, Ethyl-, n-Propyl, Isopropyl-, n-Butyl-, Isobutyl-, sec-Butyl, tert-Butyl, 2-Ethylhexyl-, Vinyl- oder Phenyl- bedeutet. Besonders bevorzugt ist R^{d} ausgewählt aus der Gruppe bestehend aus Methyl- und Ethyl- oder n-Propyl.

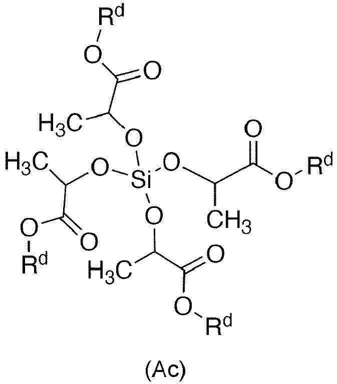

Gemäß einer weiteren alternativen Ausführungsform der Erfindung ist in der Verbindung mit der allgemeine Strukturformel Si(R)ₘ(R^{a})₄₋ₘ m = 0, R^{a} weist die hierin beschriebene allgemeine Strukturformel (A) auf, wobei R^{e} C, R^{b} Methyl-, R^{c} H und R^{d} Ethyl- bedeutet. Diese Verbindung wird insbesondere auch als Tetra(ethyllactato)silan bezeichnet.

Gemäß einer weiteren alternativen Ausführungsform der Erfindung ist in der Verbindung mit der allgemeine Strukturformel Si(R)ₘ(R^{a})₄₋ₘ m = 0, R^{a} weist die hierin beschriebene allgemeine Strukturformel (A) auf, wobei R^{e} C, R^{b} Methyl-, R^{c} H und R^{d} Methyl- bedeutet. Diese Verbindung wird insbesondere auch als Tetra(methyllactato)silan bezeichnet.

Ferner kann jeder Rest R^{a} verschieden sein, wenn mehrere Reste R^{a} an das Siliciumatom gebunden sind. R^{e}, R^{b} und R^{c} sind wie zuvor definiert. Ferner können die Reste R^{b} und R^{c}, wenn R^{e} ein Kohlenstoffatom ist, entlang der Kohlenstoffkette -(CR^{b}R^{c})ₙ-, wobei n eine ganze Zahl von 1 bis 10 ist, für jedes Kohlenstoffatom der Kette unabhängig voneinander verschieden sein. R^{d} ist wie hierin beschrieben definiert. Oligomere und Polymere des Vernetzers sind insbesondere mindestens zwei Monomere Verbindungen mit der allgemeinen Strukturformel Si(R)ₘ(R^{a})₄₋ₘ, in denen mindestens zwei Siliciumatome der verschiedenen Monomere über Siloxansauerstoffe miteinander verbunden sind. Entsprechend der Anzahl an verbindenden Siloxansauerstoffen am Siliciumatom ist die Anzahl der Reste R^{a} reduziert.

### Salicylato-Vernetzer

Gemäß einer weiteren Ausführungsform der Erfindung weist R^{a} die allgemeine Strukturformel (C1) auf, wobei R^{d} wie hierin beschrieben definiert ist. In der allgemeinen Strukturformel (C1) ist der Salicylsäurerest über das Sauerstoffatom der Hydroxygruppe an das Siliciumatom gebunden. Beispielsweise kann eine im erfindungsgemäßen Vernetzer enthaltene Verbindung mit der allgemeinen Strukturformel Si(R)ₘ(R^{a})₄₋ₘ, in der m = 1 ist, gemäß dieser Ausführungsform die allgemeine Strukturformel (Ca) aufweisen:

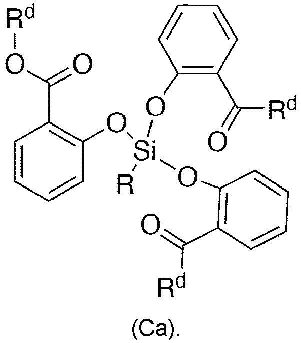

Gemäß einer alternativen Ausführungsform der Erfindung weist R^{a} die allgemeine Strukturformel (C1), (C2) oder (C3) auf, wobei R^{a} weiter substituiert sein kann, insbesondere kann der Phenylring substituiert sein, besonders bevorzugt mit einem weiteren Arylsubstituiert sein und R^{d} wie hierin beschrieben definiert ist.

In einer alternativen Ausführungsform der allgemeinen Strukturformel (C1) ist der Salicylsäurerest über das Sauerstoffatom der Hydroxygruppe an das Siliciumatom gebunden und der Phenylring ist weiter substuitiert, bevorzugt mit einem weiteren Aryl-. Beispielsweise kann eine im erfindungsgemäßen Vernetzer enthaltene Verbindung mit der allgemeinen Strukturformel Si(R)ₘ(R^{a})₄₋ₘ, in der m = 1 ist, gemäß dieser Ausführungsform die allgemeine Strukturformel (Caa) aufweisen:

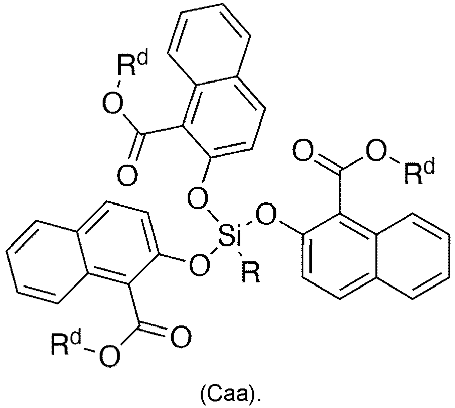

Gemäß einer weiteren Ausführungsform der Erfindung weist R^{a} die allgemeine Strukturformel (C2) auf, wobei R^{d} wie hierin beschrieben definiert ist. In der allgemeinen Strukturformel (C2) ist der Salicylsäurerest über das Sauerstoffatom der Hydroxygruppe an das Siliciumatom gebunden. Beispielsweise kann eine im erfindungsgemäßen Vernetzer enthaltene Verbindung mit der allgemeinen Strukturformel Si(R)ₘ(R^{a})₄₋ₘ, in der m = 1 ist, gemäß dieser Ausführungsform die allgemeine Strukturformel (Cb) aufweisen:

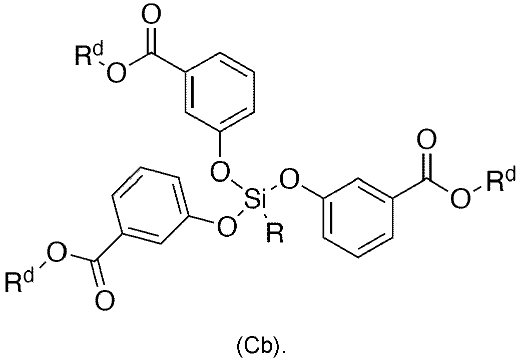

Gemäß einer weiteren Ausführungsform der Erfindung weist R^{a} die allgemeine Strukturformel (C3) auf, wobei R^{d} wie hierin beschrieben definiert ist. In der allgemeinen Strukturformel (C3) ist der Salicylsäurerest über das Sauerstoffatom der Hydroxygruppe an das Siliciumatom gebunden. Beispielsweise kann eine im erfindungsgemäßen Vernetzer enthaltene Verbindung mit der allgemeinen Strukturformel Si(R)ₘ(R^{a})₄₋ₘ, in der m = 1 ist, gemäß dieser Ausführungsform die allgemeine Strukturformel (Cc) aufweisen:

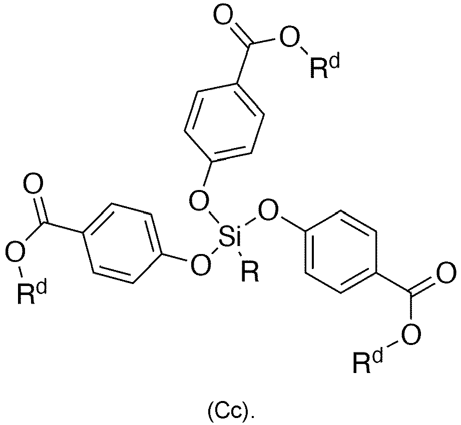

Es wurde gefunden, dass derartige Härter positive Eigenschaften für Dichtstoffformulierungen aufweisen. Zum einen setzen derartige Härter bei der Hydrolyse Salicylsäurederivate frei, die toxikologisch unbedenklich sind. Außerdem wurde gefunden, dass solche Härter bei der Verwendung in Dichtstoffen zu guten mechanischen Eigenschaften der Dichtstoffe führen. Dichtstoffe mit diesen Härtern weisen ferner ein farbloses und transparentes Erscheinen auf.

Gemäß einer Ausführungsform ist in der allgemeinen Strukturformel (C1) R^{d} insbesondere ausgewählt aus der Gruppe bestehend aus Methyl-, Ethyl-, n-Propyl, Isopropyl-, n-Butyl- und 2-Ethylhexyl-. Besonders bevorzugt ist in der allgemeinen Strukturformel (C1) R^{d} ausgewählt aus der Gruppe bestehend aus Ethyl- und 2-Ethylhexyl-. Es ist bekannt, dass Vernetzer enthaltend derartige Verbindungen besonders positive Eigenschaften für Dichtstoffformulierungen aufweisen können, insbesondere in Bezug auf deren mechanische Eigenschaften.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (C1) auf, wobei R^{d} Ethyl- bedeutet. Diese Verbindung wird insbesondere auch als Tris(ethylsalicylato)vinylsilan oder auch als *ortho-*Tris(ethylsalicylato)vinylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (C1) auf, wobei R^{d} Ethyl- bedeutet. Diese Verbindung wird insbesondere auch als Tris(ethylsalicylato)methylsilan oder auch als *ortho-*Tris(ethylsalicylato)methylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (C1) auf, wobei R^{d} Ethyl- bedeutet. Diese Verbindung wird insbesondere auch als Tris(ethylsalicylato)propylsilan oder auch als *ortho-*Tris(ethylsalicylato)propylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (C1) auf, wobei R^{d} Ethyl- bedeutet. Diese Verbindung wird insbesondere auch als Tris(ethylsalicylato)phenylsilan oder auch als *ortho-*Tris(ethylsalicylato)phenylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (C1) auf, wobei R^{d} 2-Ethylhexyl- bedeutet. Diese Verbindung wird insbesondere auch als Tris(2-ethylhexylsalicylato)vinylsilan oder auch als ortho-Tris(2-ethylhexylsalicylato)vinylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (C1) auf, wobei R^{d} 2-Ethylhexyl- bedeutet. Diese Verbindung wird insbesondere auch als Tris(2-ethylhexylsalicylato)methylsilan oder auch als ortho-Tris(2-ethylhexylsalicylato)methylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Ethyl- und R^{a} weist die hierin beschriebene allgemeine Strukturformel (C1) auf, wobei R^{d} 2-Ethylhexyl- bedeutet. Diese Verbindung wird insbesondere auch als Tris(2-ethylhexylsalicylato)ethylsilan oder auch als ortho-Tris(2-ethylhexylsalicylato)ethylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (C1) auf, wobei R^{d} 2-Ethylhexyl- bedeutet. Diese Verbindung wird insbesondere auch als Tris(2-ethylhexylsalicylato)propylsilan oder auch als ortho-Tris(2-ethylhexylsalicylato)propylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (C1) auf, wobei R^{d} 2-Ethylhexyl- bedeutet. Diese Verbindung wird insbesondere auch als Tris(2-ethylhexylsalicylato)phenylsilan oder auch als ortho-Tris(2-ethylhexylsalicylato)phenylsilan bezeichnet.

Gemäß einer weiteren Ausführungsform der Erfindung ist in der Verbindung mit der allgemeinen Strukturformel (Caa), R Vinyl- und R^{d} bedeutet Ethyl-. Diese Verbindung wird insbesondere auch als Tris(2-Naphthalincarbonsäure-3-hydroxy-ethyl)vinylsilan bezeichnet.

Gemäß einer weiteren Ausführungsform der Erfindung ist in der Verbindung mit der allgemeinen Strukturformel (Caa), R Methyl- und R^{d} bedeutet Ethyl-. Diese Verbindung wird insbesondere auch als Tris(2-Naphthalincarbonsäure-3-hydroxy-ethyl)methylsilan bezeichnet.

Gemäß einer weiteren Ausführungsform der Erfindung ist in der Verbindung mit der allgemeinen Strukturformel (Caa), R und R^{d} jeweils Ethyl- bedeuten. Diese Verbindung wird insbesondere auch als Tris(2-Naphthalincarbonsäure-3-hydroxy-ethyl)ethylsilan bezeichnet.

Gemäß einer weiteren Ausführungsform der Erfindung ist in der Verbindung mit der allgemeinen Strukturformel (Caa), R Propyl- und R^{d} bedeutet Ethyl-. Diese Verbindung wird insbesondere auch als Tris(2-Naphthalincarbonsäure-3-hydroxy-ethyl)propylsilan bezeichnet.

Gemäß einer weiteren Ausführungsform der Erfindung ist in der Verbindung mit der allgemeinen Strukturformel (Caa), R Phenyl- und R^{d} bedeutet Ethyl-. Diese Verbindung wird insbesondere auch als Tris(2-Naphthalincarbonsäure-3-hydroxy-ethyl)phenylsilan bezeichnet.

Gemäß einer Ausführungsform ist in der allgemeinen Strukturformel (C2) R^{d} insbesondere ausgewählt aus der Gruppe bestehend aus Methyl-, Ethyl-, n-Propyl, Isopropyl-, n-Butyl- und 2-Ethylhexyl-. Besonders bevorzugt ist in der allgemeinen Strukturformel (C2) R^{d} ausgewählt aus der Gruppe bestehend aus Ethyl- und 2-Ethylhexyl-. Es ist bekannt, dass Vernetzer enthaltend derartige Verbindungen besonders positive Eigenschaften für Dichtstoffformulierungen aufweisen können, insbesondere in Bezug auf deren mechanische Eigenschaften.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (C2) auf, wobei R^{d} Ethyl- bedeutet. Diese Verbindung wird insbesondere auch als *meta*-Tris(ethylsalicylato)vinylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (C2) auf, wobei R^{d} Ethyl- bedeutet. Diese Verbindung wird insbesondere auch als *meta*-Tris(ethylsalicylato)methylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Ethyl- und R^{a} weist die hierin beschriebene allgemeine Strukturformel (C2) auf, wobei R^{d} Ethyl- bedeutet. Diese Verbindung wird insbesondere auch als *meta*-Tris(ethylsalicylato)ethylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (C2) auf, wobei R^{d} Ethyl- bedeutet. Diese Verbindung wird insbesondere auch als *meta*-Tris(ethylsalicylato)propylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (C2) auf, wobei R^{d} Ethyl- bedeutet. Diese Verbindung wird insbesondere auch als *meta*-Tris(ethylsalicylato)phenylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (C2) auf, wobei R^{d} 2-Ethylhexyl- bedeutet. Diese Verbindung wird insbesondere auch als *meta*-Tris(2-ethylhexylsalicylato)vinylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (C2) auf, wobei R^{d} 2-Ethylhexyl- bedeutet. Diese Verbindung wird insbesondere auch als *meta*-Tris(2-ethylhexylsalicylato)methylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Ethyl- und R^{a} weist die hierin beschriebene allgemeine Strukturformel (C2) auf, wobei R^{d} 2-Ethylhexyl- bedeutet. Diese Verbindung wird insbesondere auch als *meta*-Tris(2-ethylhexylsalicylato)ethylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (C2) auf, wobei R^{d} 2-Ethylhexyl- bedeutet. Diese Verbindung wird insbesondere auch als *meta*-Tris(2-ethylhexylsalicylato)propylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (C2) auf, wobei R^{d} 2-Ethylhexyl- bedeutet. Diese Verbindung wird insbesondere auch als *meta-*Tris(2-ethylhexylsalicylato)phenylsilan bezeichnet.

Gemäß einer Ausführungsform ist in der allgemeinen Strukturformel (C3) R^{d} insbesondere ausgewählt aus der Gruppe bestehend aus Methyl-, Ethyl-, n-Propyl, Isopropyl-, n-Butyl- und 2-Ethylhexyl-. Besonders bevorzugt ist in der allgemeinen Strukturformel (C3) R^{d} ausgewählt aus der Gruppe bestehend aus Ethyl- und 2-Ethylhexyl-. Es ist bekannt, dass Vernetzer enthaltend derartige Verbindungen besonders positive Eigenschaften für Dichtstoffformulierungen aufweisen können, insbesondere in Bezug auf deren mechanische Eigenschaften.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (C3) auf, wobei R^{d} Ethyl- bedeutet. Diese Verbindung wird insbesondere auch als *para*-Tris(ethylsalicylato)vinylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (C3) auf, wobei R^{d} Ethyl- bedeutet. Diese Verbindung wird insbesondere auch als *para*-Tris(ethylsalicylato)methylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Ethyl- und R^{a} weist die hierin beschriebene allgemeine Strukturformel (C3) auf, wobei R^{d} Ethyl- bedeutet. Diese Verbindung wird insbesondere auch als *para*-Tris(ethylsalicylato)ethylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (C3) auf, wobei R^{d} Ethyl- bedeutet. Diese Verbindung wird insbesondere auch als *para*-Tris(ethylsalicylato)propylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (C3) auf, wobei R^{d} Ethyl- bedeutet. Diese Verbindung wird insbesondere auch als *para*-Tris(ethylsalicylato)phenylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (C3) auf, wobei R^{d} 2-Ethylhexyl- bedeutet. Diese Verbindung wird insbesondere auch als *para*-Tris(2-ethylhexylsalicylato)vinylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (C3) auf, wobei R^{d} 2-Ethylhexyl- bedeutet. Diese Verbindung wird insbesondere auch als *para*-Tris(2-ethylhexylsalicylato)methylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Ethyl- und R^{a} weist die hierin beschriebene allgemeine Strukturformel (C3) auf, wobei R^{d} 2-Ethylhexyl- bedeutet. Diese Verbindung wird insbesondere auch als *para*-Tris(2-ethylhexylsalicylato)ethylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (C3) auf, wobei R^{d} 2-Ethylhexyl- bedeutet. Diese Verbindung wird insbesondere auch als p*ara*-Tris(2-ethylhexylsalicylato)propylsilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (C3) auf, wobei R^{d} 2-Ethylhexyl- bedeutet. Diese Verbindung wird insbesondere auch als *para*-Tris(2-ethylhexylsalicylato)phenylsilan bezeichnet.

In einer weiteren Ausführungsform der Erfindung kann ein Salicylato-Vernetzer auch vier Reste R^{a} am Siliciumatom aufweisen, wobei der Salicylsäurerest über das Sauerstoffatom der Hydroxygruppe an das Siliciumatom gebunden ist und eine im erfindungsgemäßen Vernetzer enthaltene Verbindung mit der allgemeinen Strukturformel Si(R)ₘ(R^{a})₄₋ₘ, in der m = 0 darstellt, worin R^{a} die allgemeine Strukturformel (C1), (C2) oder (C3) aufweist und R^{d} wie hierin beschrieben definiert ist.

Praktische Versuche haben ergeben, dass sich optimale Ergebnisse einstellen, wenn die im erfindungsgemäßen Vernetzer enthaltene Verbindung mit der allgemeinen Strukturformel Si(R)ₘ(R^{a})₄₋ₘ ausgewählt ist aus der Gruppe bestehend aus Tris(ethylsalicylato)vinylsilan, Tris(ethylsalicylato)methylsilan, Tris(ethylsalicylato)ethylsilan, Tris(ethylsalicylato)propylsilan, Tris(ethylsalicylato)phenylsilan, Tris(2-ethylhexylsalicylato)vinylsilan, Tris(2-ethylhexylsalicylato)methylsilan, Tris(2-ethylhexylsalicylato)propylsilan, Tris(2-ethylhexylsalicylato)phenylsilan, Tris(2-Naphthalincarbonsäure-3-hydroxy-ethyl)vinylsilan, Tris(2-Naphthalincarbonsäure-3-hydroxy-ethyl)methylsilan, Tris(2-Naphthalincarbonsäure-3-hydroxy-ethyl)ethylsilan, Tris(2-Naphthalincarbonsäure-3-hydroxy-ethyl)propylsilan, Tris(2-Naphthalincarbonsäure-3-hydroxy-ethyl)phenylsilan und/oder die jeweils entsprechenden meta- oder para-Verbindungen davon. Es hat sich gezeigt, dass Vernetzer enthaltend eine dieser bevorzugten Verbindungen Dichtstoffformulierungen ergeben, die gute Eigenschaften aufweisen. Zum einen setzen diese Dichtstoffe Salicylsäurederivate frei, die toxikologisch unbedenklich sind. Zum anderen können farblose und transparente Dichtstoffe erhalten werden. Zudem weisen Dichtstoffformulierungen mit Vernetzern enthaltend eine dieser bevorzugten Verbindungen gute mechanische Eigenschaften auf.

In einer besonders bevorzugten Ausführungsform wird als Salicylato-Vernetzer in der erfindungsgemäßen Zusammensetzung Tris(2-ethylhexylsalicylato)vinylsilan, Tris(2-ethylhexylsalicylato)methylsilan, Tris(2-ethylhexylsalicylato)propylsilan oder Mischungen daraus eingesetzt, ganz besonders bevorzugt Tris(2-ethylhexylsalicylato)propylsilan.

### Oxim-Vernetzer

In der allgemeinen Strukturformel (D) ist der Oximrest über das Sauerstoffatom der Hydroxygruppe an das Siliciumatom gebunden. Beispielsweise kann eine im erfindungsgemäßen Vernetzer enthaltene Verbindung mit der allgemeinen Strukturformel Si(R)ₘ(R^{a})₄₋ₘ, in der m = 0 ist, die allgemeine Strukturformel (Da) aufweisen:

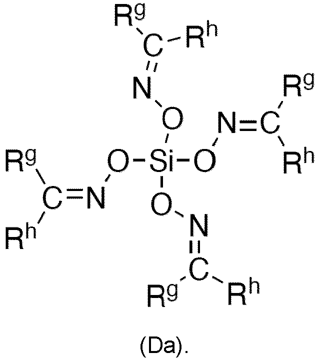

Ferner kann demnach in der Verbindung mit der allgemeine Strukturformel Si(R)ₘ(R^{a})₄₋ₘ auch kein R vorhanden und entsprechend vier Reste R^{a} vorhanden sein, wenn vier Reste R^{a} an das Siliciumatom gebunden sind. R^{g} und R^{h} sind wie zuvor definiert.

Gemäß einer Ausführungsform der allgemeinen Strukturformel (Da) weist R^{a} die hierin beschriebene allgemeine Strukturformel (D) auf, wobei R^{g} und R^{h} unabhängig voneinander insbesondere ausgewählt sind aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl- und Phenyl-. Besonders bevorzugt ist R^{g} und R^{h} unabhängig voneinander ausgewählt aus der Gruppe bestehend aus Methyl- und Ethyl-, n-Propyl.

Gemäß einer weiteren Ausführungsform der Erfindung ist in der Verbindung mit der allgemeine Strukturformel Si(R)ₘ(R^{a})₄₋ₘ m = 0, R^{a} weist die hierin beschriebene allgemeine Strukturformel (D) auf, wobei R^{g} n-Propyl- und R^{h} Methyl- bedeutet. Diese Verbindung wird insbesondere auch als Tetra(2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 0, R^{a} weist die hierin beschriebene allgemeine Strukturformel (D) auf, wobei R^{g} Ethyl- und R^{h} Methyl- bedeutet. Diese Verbindung wird insbesondere auch als Tetra(2-butanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 0, R^{a} weist die hierin beschriebene allgemeine Strukturformel (D) auf, wobei R^{g} und R^{h} jeweils Methyl- bedeutet. Diese Verbindung wird insbesondere auch als Tetra(2-propanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 0, R^{a} weist die hierin beschriebene allgemeine Strukturformel (D) auf, wobei R^{g} und R^{h} jeweils Ethyl- bedeutet. Diese Verbindung wird insbesondere auch als Tetra(3-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 0, R^{a} weist die hierin beschriebene allgemeine Strukturformel (D) auf, wobei R^{g} Methyl- und R^{h} Isobutyl- bedeutet. Diese Verbindung wird insbesondere auch als Tetra(4-Methyl-2-pentanonoximo)silan bezeichnet.

In der allgemeinen Strukturformel (D) ist der Oximrest über das Sauerstoffatom der Hydroxygruppe an das Siliciumatom gebunden. Beispielsweise kann eine im erfindungsgemäßen Vernetzer enthaltene Verbindung mit der allgemeinen Strukturformel Si(R)ₘ(R^{a})₄₋ₘ, in der m = 1 ist, die allgemeine Strukturformel (Db) aufweisen:

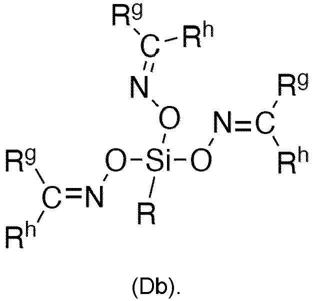

Es wurde gefunden, dass derartige Härter positive Eigenschaften für Dichtstoffformulierungen aufweisen. So weisen die resultierenden ausgehärteten Dichtstoffe verbesserte mechanische Eigenschaten auf - Shore A-Härten von mind. 3 und eine Reißdehnung von mind. 100 %. Dichtstoffe mit diesen Härtern weisen ferner ein farbloses und transparentes Erscheinen auf.

Gemäß einer Ausführungsform ist in der allgemeinen Strukturformel (Db) jeder R unabhängig voneinander insbesondere ausgewählt ist aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl-, Phenyl-, Methoxy- oder Ethoxy- und R^{a} weist die hierin beschriebene allgemeine Strukturformel (D) auf, wobei R^{g} und R^{h} unabhängig voneinander insbesondere ausgewählt sind aus der Gruppe bestehend aus Methyl-, Ethyl-, n-Propyl, Isopropyl-, n-Butyl-, Isobutyl-, 2-Ethylhexyl-, Vinyl- und Phenyl-. Besonders bevorzugt ist hierbei R ausgewählt aus der Gruppe bestehend aus Methyl-, Ethyl- Vinyl- und Methoxy-, ganz besonders bevorzugt Vinyl-, Methyl- und/oder Methoxy ist sowie R^{g} und R^{h} besonders bevorzugt unabhänig voneinander ausgewählt sind aus der Gruppe bestehend aus Methyl-, Ethyl-, Propyl-, und Isobutyl-. Es ist bekannt, dass Vernetzer enthaltend derartige Verbindungen besonders positive Eigenschaften für Dichtstoffformulierungen aufweisen können, insbesondere in Bezug auf deren mechanische Eigenschaften.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (D) auf, wobei R^{g} n-Propyl- und R^{h} Methyl- bedeutet. Diese Verbindung wird insbesondere auch als Vinyl-tris(2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (D) auf, wobei R^{g} n-Propyl- und R^{h} Methyl- bedeutet. Diese Verbindung wird insbesondere auch als Methyl-tris(2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Ethyl- und R^{a} weist die hierin beschriebene allgemeine Strukturformel (D) auf, wobei R^{g} n-Propyl- und R^{h} Methyl- bedeutet. Diese Verbindung wird insbesondere auch als Ethyl-tris(2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (D) auf, wobei R^{g} n-Propyl- und R^{h} Methyl- bedeutet. Diese Verbindung wird insbesondere auch als Propyl-tris(2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (D) auf, wobei R^{g} n-Propyl- und R^{h} Methyl- bedeutet. Diese Verbindung wird insbesondere auch als Phenyl-tris(2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (D) auf, wobei R^{g} und R^{h} jeweils Methyl- bedeutet. Diese Verbindung wird insbesondere auch als Vinyl-tris(2-propanoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (D) auf, wobei R^{g} und R^{h} jeweils Methyl- bedeutet. Diese Verbindung wird insbesondere auch als Methyl-tris(2-propanoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Ethyl- und R^{a} weist die hierin beschriebene allgemeine Strukturformel (D) auf, wobei R^{g} und R^{h} jeweils Methyl- bedeutet. Diese Verbindung wird insbesondere auch als Ethyl-tris(2-propanoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (D) auf, wobei R^{g} und R^{h} jeweils Methyl- bedeutet. Diese Verbindung wird insbesondere auch als Propyl-tris(2-propanoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (D) auf, wobei R^{g} und R^{h} jeweils Methyl- bedeutet. Diese Verbindung wird insbesondere auch als Phenyl-tris(2-propanoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (D) auf, wobei R^{g} Ethyl- und R^{h} Methyl- bedeutet. Diese Verbindung wird insbesondere auch als Vinyl-tris(2-butanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (D) auf, wobei R^{g} Ethyl- und R^{h} Methyl- bedeutet. Diese Verbindung wird insbesondere auch als Methyl-tris(2-butanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Ethyl- und R^{a} weist die hierin beschriebene allgemeine Strukturformel (D) auf, wobei R^{g} Ethyl- und R^{h} Methyl- bedeutet. Diese Verbindung wird insbesondere auch als Ethyl-tris(2-butanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (D) auf, wobei R^{g} Ethyl- und R^{h} Methyl- bedeutet. Diese Verbindung wird insbesondere auch als Propyl-tris(2-butanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (D) auf, wobei R^{g} Ethyl- und R^{h} Methyl- bedeutet. Diese Verbindung wird insbesondere auch als Phenyl-tris(2-butanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (D) auf, wobei R^{g} und R^{h} jeweils Ethyl- bedeutet. Diese Verbindung wird insbesondere auch als Vinyl-tris(3-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (D) auf, wobei R^{g} und R^{h} jeweils Ethyl- bedeutet. Diese Verbindung wird insbesondere auch als Methyl-tris(3-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Ethyl- und R^{a} weist die hierin beschriebene allgemeine Strukturformel (D) auf, wobei R^{g} und R^{h} jeweils Ethyl- bedeutet. Diese Verbindung wird insbesondere auch als Ethyl-tris(3-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (D) auf, wobei R^{g} und R^{h} jeweils Ethyl- bedeutet. Diese Verbindung wird insbesondere auch als Propyl-tris(3-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (D) auf, wobei R^{g} und R^{h} jeweils Ethyl- bedeutet. Diese Verbindung wird insbesondere auch als Phenyl-tris(3-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Vinyl- und R^{a} weist die hierin beschriebene allgemeine Strukturformel (D) auf, wobei R^{g} Methyl- und R^{h} Isobutyl- bedeutet. Diese Verbindung wird insbesondere auch als Vinyl-tris(4-Methyl-2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} weist die hierin beschriebene allgemeine Strukturformel (D) auf, wobei R^{g} Methyl- und R^{h} Isobutyl- bedeutet. Diese Verbindung wird insbesondere auch als Methyl-tris(4-Methyl-2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Ethyl- und R^{a} weist die hierin beschriebene allgemeine Strukturformel (D) auf, wobei R^{g} Methyl- und R^{h} Isobutyl- bedeutet. Diese Verbindung wird insbesondere auch als Ethyl-tris(4-Methyl-2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Propyl- und R^{a} weist die hierin beschriebene allgemeine Strukturformel (D) auf, wobei R^{g} Methyl- und R^{h} Isobutyl- bedeutet. Diese Verbindung wird insbesondere auch als Propyl-tris(4-Methyl-2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Phenyl- und R^{a} weist die hierin beschriebene allgemeine Strukturformel (D) auf, wobei R^{g} Methyl- und R^{h} Isobutyl- bedeutet. Diese Verbindung wird insbesondere auch als Phenyl-tris(4-Methyl-2-pentanonoximo)silan bezeichnet.

In der allgemeinen Strukturformel (D) ist der Oximrest über das Sauerstoffatom der Hydroxygruppe an das Siliciumatom gebunden. Beispielsweise kann eine im erfindungsgemäßen Vernetzer enthaltene Verbindung mit der allgemeinen Strukturformel Si(R)ₘ(R^{a})₄₋ₘ, in der m = 2 ist, die allgemeine Strukturformel (Dc) aufweisen:

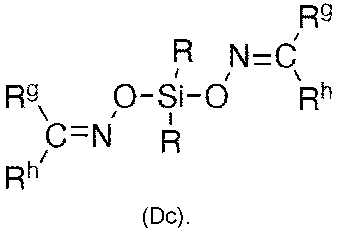

Ferner kann jeder Rest R verschieden sein, wenn mehrere Reste R an das Siliciumatom gebunden sind. R^{g} und R^{h} sind wie zuvor definiert.

Gemäß dieser Ausführungsform ist in der allgemeinen Strukturformel (Dc) jeder R unabhängig voneinander insbesondere ausgewählt ist aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl-, Phenyl-, Methoxy- oder Ethoxy- und R^{a} weist die hierin beschriebene allgemeine Strukturformel (D) auf, wobei R^{g} und R^{h} unabhängig voneinander insbesondere ausgewählt sind aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl- und Phenyl-. Besonders bevorzugt ist hierbei R ausgewählt aus der Gruppe bestehend aus Methyl-, Vinyl- und Methoxy-, ganz besonders bevorzugt Vinyl- und/oder Methoxy ist sowie R^{g} und R^{h} besonders bevorzugt unabhänig voneinander ausgewählt sind aus der Gruppe bestehend aus Methyl-, Ethyl- und Isobutyl-.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Methyl-, insbesondere bedeutet ein R Vinyl- und ein anderer Rest R bedeutet Methyl-, und R^{a} weist die hierin beschriebene allgemeine Strukturformel (D) auf, wobei R^{g} und R^{h} jeweils Methyl- bedeutet. Diese Verbindung wird insbesondere auch als Methylvinyl-di-(2-propanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Methyl-, insbesondere bedeutet ein R Vinyl- und ein anderer Rest R bedeutet Methyl-, und R^{a} weist die hierin beschriebene allgemeine Strukturformel (D) auf, wobei R^{g} Ethyl- und R^{h} Methyl- bedeutet.

Diese Verbindung wird insbesondere auch als Methylvinyl-di-(2-butanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Methyl-, insbesondere bedeutet ein R Vinyl- und ein anderer Rest R bedeutet Methyl-, und R^{a} weist die hierin beschriebene allgemeine Strukturformel (D) auf, wobei R^{g} n-Propyl- und R^{h} Methyl- bedeutet. Diese Verbindung wird insbesondere auch als Methylvinyl-di-(2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Methyl-, insbesondere bedeutet ein R Vinyl- und ein anderer Rest R bedeutet Methyl-, und R^{a} weist die hierin beschriebene allgemeine Strukturformel (D) auf, wobei R^{g} und R^{h} jeweils Ethyl- bedeutet. Diese Verbindung wird insbesondere auch als Methylvinyl-di-(3-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Methoxy-, insbesondere bedeutet ein R Vinyl- und ein anderer Rest R bedeutet Methoxy-, und R^{a} weist die hierin beschriebene allgemeine Strukturformel (D) auf, wobei R^{g} und R^{h} jeweils Methylbedeutet. Diese Verbindung wird insbesondere auch als Methoxyvinyl-di-(2-propanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Methoxy-, insbesondere bedeutet ein R Vinyl- und ein anderer Rest R bedeutet Methoxy-, und R^{a} weist die hierin beschriebene allgemeine Strukturformel (D) auf, wobei R^{g} Ethyl- und R^{h} Methylbedeutet. Diese Verbindung wird insbesondere auch als Methoxyvinyl-di-(2-butanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Methoxy-, insbesondere bedeutet ein R Vinyl- und ein anderer Rest R bedeutet Methoxy-, und R^{a} weist die hierin beschriebene allgemeine Strukturformel (D) auf, wobei R^{g} n-Propyl- und R^{h} Methylbedeutet. Diese Verbindung wird insbesondere auch als Methoxyvinyl-di-(2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Methoxy-, insbesondere bedeutet ein R Vinyl- und ein anderer Rest R bedeutet Methoxy-, und R^{a} weist die hierin beschriebene allgemeine Strukturformel (D) auf, wobei R^{g} und R^{h} jeweils Ethylbedeutet. Diese Verbindung wird insbesondere auch als Methoxyvinyl-di-(3-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Phenyl-, insbesondere bedeutet ein R Vinyl- und ein anderer Rest R bedeutet Phenyl-, und R^{a} weist die hierin beschriebene allgemeine Strukturformel (D) auf, wobei R^{g} und R^{h} jeweils Methyl- bedeutet. Diese Verbindung wird insbesondere auch als Phenylvinyl-di-(2-propanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Phenyl-, insbesondere bedeutet ein R Vinyl- und ein anderer Rest R bedeutet Phenyl-, und R^{a} weist die hierin beschriebene allgemeine Strukturformel (D) auf, wobei R^{g} Ethyl- und R^{h} Methyl- bedeutet. Diese Verbindung wird insbesondere auch als Phenylvinyl-di-(2-butanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Phenyl-, insbesondere bedeutet ein R Vinyl- und ein anderer Rest R bedeutet Phenyl-, und R^{a} weist die hierin beschriebene allgemeine Strukturformel (D) auf, wobei R^{g} n-Propyl- und R^{h} Methyl- bedeutet. Diese Verbindung wird insbesondere auch als Phenylvinyl-di-(2-pentanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 2, R bedeutet Vinyl- und Phenyl-, insbesondere bedeutet ein R Vinyl- und ein anderer Rest R bedeutet Phenyl-, und R^{a} weist die hierin beschriebene allgemeine Strukturformel (D) auf, wobei R^{g} und R^{h} jeweils Ethyl- bedeutet. Diese Verbindung wird insbesondere auch als Phenylvinyl-di-(3-pentanonoximo)silan bezeichnet.

In der allgemeinen Strukturformel (Dd) ist der Oximrest über das Sauerstoffatom der Hydroxygruppe an das Siliciumatom gebunden. Beispielsweise kann eine im erfindungsgemäßen Vernetzer enthaltene Verbindung mit der allgemeinen Strukturformel Si(R)ₘ(R^{a})₄₋ₘ, in der m = 3 ist, die allgemeine Strukturformel (Dd) aufweisen:

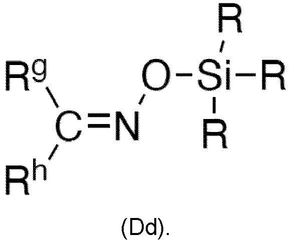

Ferner kann jeder Rest R verschieden sein, wobei mindestens ein Rest R eine hydrolysierbare Abgangsgruppe (bspw. ein Alkoxyrest -OR^{k}) darstellt, wenn drei Reste R an das Siliciumatom gebunden sind. R^{g} und R^{h} sind wie zuvor definiert.

Gemäß dieser Ausführungsform ist in der allgemeinen Strukturformel (Dd) jeder R unabhängig voneinander insbesondere ausgewählt aus der Gruppe bestehend aus Methyl-, Ethyl-, n-Propyl, Isopropyl-, n-Butyl-, Isobutyl-, 2-Ethylhexyl-, Vinyl-, Phenyl- und -OR^{k} (Alkoxyrest), wovon mindestens ein R ein Alkoxyrest -OR^{k} ist, wobei R^{k} einen optional substituierten Kohlenwasserstoffrest mit 1 bis 20 Kohlenstoffatomen, insbesondere eine optional substituierte, geradkettige oder verzweigte C1- bis C16-Alkylgruppe, eine optional substituierte C4- bis C14-Cycloalkylgruppe oder eine optional substituierte C4- bis C14-Arylgruppe oder eine optional substituierte C5- bis C15-Aralkylgruppe bedeutet, bevorzugt der Alkoxyrest Methoxy- oder Ethoxy- bedeutet und R^{a} weist die hierin beschriebene allgemeine Strukturformel (D) auf, wobei R^{g} und R^{h} unabhängig voneinander insbesondere ausgewählt sind aus der Gruppe bestehend aus Methyl-, Ethyl-, n-Propyl, Isopropyl-, n-Butyl-, Isobutyl-, 2-Ethylhexyl-, Vinyl- und Phenyl-. Besonders bevorzugt ist R hierbei ausgewählt aus der Gruppe bestehend aus Methyl-, Vinyl- und Methoxy-, Ethoxy- ganz besonders bevorzugt Vinyl- und/oder Methoxy ist sowie R^{g} und R^{h} besonders bevorzugt unabhänig voneinander ausgewählt sind aus der Gruppe bestehend aus Methyl-, Ethyl- und Isobutyl-.

Gemäß einer weiteren Ausführungsform der Erfindung ist in der Verbindung mit der allgemeine Strukturformel Si(R)ₘ(R^{a})₄₋ₘ m = 3, R bedeutet Vinyl- und Methoxy-, insbesondere ein R bedeutet Vinyl- und zwei andere Reste R bedeuten jeweils Methoxy-, und R^{a} weist die hierin beschriebene allgemeine Strukturformel (D) auf, wobei R^{g} und R^{h} jeweils Methyl- bedeutet. Diese Verbindung wird insbesondere auch als Dimethoxyvinyl-(2-propanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 3, R bedeutet Vinyl- und Methoxy-, insbesondere ein R bedeutet Vinyl- und zwei andere Reste R bedeuten jeweils Methoxy-, und R^{a} weist die hierin beschriebene allgemeine Strukturformel (D) auf, wobei wobei R^{g} Ethyl- und R^{h} Methyl- bedeutet. Diese Verbindung wird insbesondere auch als Dimethoxyvinyl-(2-butanonoximo)silan bezeichnet.

Gemäß einer weiteren Ausführungsform der Erfindung ist in der Verbindung mit der allgemeinen Strukturformel Si(R)ₘ(R^{a})₄₋ₘ m = 3, R bedeutet Vinyl- und Methoxy-, insbesondere ein R bedeutet Vinyl- und zwei andere Reste R bedeuten jeweils Methoxy-, und R^{a} weist die hierin beschriebene allgemeine Strukturformel (D) auf, wobei R^{g} n-Propyl- und R^{h} Methyl- bedeutet. Diese Verbindung wird insbesondere auch als Dimethoxyvinyl-(2-pentanonoximo)silan bezeichnet.

Gemäß einer weiteren Ausführungsform der Erfindung ist in der Verbindung mit der allgemeine Strukturformel Si(R)ₘ(R^{a})₄₋ₘ m = 3, R bedeutet Vinyl- und Methoxy-, insbesondere ein R bedeutet Vinyl- und zwei andere Reste R bedeuten jeweils Methoxy-, und R^{a} weist die hierin beschriebene allgemeine Strukturformel (D) auf, wobei R^{g} und R^{h} jeweils Ethyl- bedeutet. Diese Verbindung wird insbesondere auch als Dimethoxyvinyl-(3-propanonoximo)silan bezeichnet.

Gemäß einer weiteren Ausführungsform der Erfindung ist in der Verbindung mit der allgemeine Strukturformel Si(R)ₘ(R^{a})₄₋ₘ m = 3, R bedeutet Vinyl- und Methoxy-, insbesondere ein R bedeutet Vinyl- und zwei andere Reste R bedeuten jeweils Methoxy-, und R^{a} weist die hierin beschriebene allgemeine Strukturformel (D) auf, wobei R^{g} Ethyl- und R^{h} Methyl- bedeutet. Diese Verbindung wird insbesondere auch als Dimethoxyvinyl-(3-butanonoximo)silan bezeichnet.

Gemäß einer weiteren Ausführungsform der Erfindung ist in der Verbindung mit der allgemeine Strukturformel Si(R)ₘ(R^{a})₄₋ₘ m = 3, R bedeutet Vinyl- und Methoxy-, insbesondere ein R bedeutet Vinyl- und zwei andere Reste R bedeuten jeweils Methoxy-, und R^{a} weist die hierin beschriebene allgemeine Strukturformel (D) auf, wobei R^{g} und R^{h} jeweils Ethyl- bedeutet. Diese Verbindung wird insbesondere auch als Dimethoxyvinyl-(3-pentanonoximo)silan bezeichnet.

In einer bevorzugten Ausführungsform der Erfindung umfasst der Vernetzer eine Kombination der bevorzugten Verbindungen aus Vinyl-tris(2-propanonoximo)silan, Methoxyvinyl-di-(2-propanonoximo)silan und Dimethoxyvinyl-(2-propanonoximo)silan, besonders bevorzugt besteht der Vernetzer aus dieser Kombination.

In einer weiter bevorzugten Ausführungsform der Erfindung umfasst der Vernetzer die Verbindung Vinyl-tris(2-pentanonoximo)silan, besonders bevorzugt besteht der Vernetzer daraus.

In einer alternativen bevorzugten Ausführungsform der Erfindung umfasst der Vernetzer die Verbindung Methyl-tris(2-pentanonoximo)silan, besonders bevorzugt besteht der Vernetzer daraus.

In einer weiter bevorzugten Ausführungsform der Erfindung umfasst der Vernetzer eine Kombination der bevorzugten Verbindungen aus Vinyl-tris(2-pentanonoximo)silan und Methyl-tris(2-pentanonoximo)silan, besonders bevorzugt besteht der Vernetzer aus dieser Kombination.

Praktische Versuche haben ergeben, dass sich optimale Ergebnisse einstellen, wenn die im erfindungsgemäßen Vernetzer enthaltene Verbindung mit der allgemeinen Strukturformel Si(R)ₘ(R^{a})₄₋ₘ ausgewählt ist aus der Gruppe bestehend aus Vinyl-tris(2-pentanonoximo)silan, Methyl-tris(2-pentanonoximo)silan, Vinyl-tris(2-propanonoximo)silan, Methoxyvinyl-di-(2-propanonoximo)silan und Dimethoxyvinyl-(2-propanonoximo)silan. Es hat sich gezeigt, dass Vernetzer enthaltend eine dieser bevorzugten Verbindungen Dichtstoffformulierungen ergeben, die gute Eigenschaften aufweisen. Zum einen können farblose und transparente Dichtstoffe erhalten werden und zum anderen weisen Dichtstoffformulierungen mit Vernetzern enthaltend eine dieser bevorzugten Verbindungen gute mechanische Eigenschaften auf.

### Acetat-Vernetzer

In einer alternativen Ausführungform der allgemeinen Strukturformel Si(R)ₘ(R^{a})₄₋ₘ in der jeder Rest R^{a} verschieden sein kann, wenn mehrere Reste R^{a} an das Siliciumatom gebunden sind und jeder R^{a} ein Carbonsäurerest -O-C(O)-R^{f} ist, ist dieser über das Sauerstoffatom der Hydroxygruppe an das Siliciumatom gebunden und R ist ausgewählt aus der Gruppe bestehend aus Methyl-, Ethyl-, n-Propyl, Isopropyl-, n-Butyl-, Isobutyl-, sec-Butyl, tert-Butyl, 2-Ethylhexyl-, Vinyl- und Phenyl-. Hierbei kann m eine ganze Zahl von 0 bis 2 sein, ist bevorzugt gleich 1 und R^{f} ist Methyl-. Bevorzugt ist m = 1, R ist Methyl-, Ethyl-, Propyl- oder Vinyl- und R^{f} ist Methyl-. Ganz besonders bevorzugt ist m = 1, R ist Methyl- oder Vinyl- und R^{f} ist Methyl-. Es ist bekannt, dass Vernetzer enthaltend derartige Verbindungen besonders positive Eigenschaften für Dichtstoffformulierungen aufweisen können, insbesondere in Bezug auf die toxikologische Unbedenklichkeit.

Gemäß einer weiteren Ausführungsform der Erfindung ist eine bevorzugte Verbindung der allgemeinen Strukturformel Si(R)ₘ(R^{a})₄₋ₘ worin m = 1, R bedeutet Vinyl- und R^{a} ein Carbonsäurerest -O-C(O)-R^{f} ist und R^{f} Methyl- darin bedeutet. Diese Verbindung wird insbesondere auch als Vinyltriacetoxysilan bezeichnet.

Gemäß einer weiteren Ausführungsform der Erfindung ist in der Verbindung mit der allgemeinen Strukturformel Si(R)ₘ(R^{a})₄₋ₘ m = 1, R bedeutet Methyl- und R^{a} ein Carbonsäurerest -O-C(O)-R^{f} ist und R^{f} Methyl- bedeutet. Diese Verbindung wird insbesondere auch als Methyltriacetoxysilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Ethyl- und R^{a} ein Carbonsäurerest -O-C(O)-R^{f} ist und R^{f} Methyl- bedeutet. Diese Verbindung wird insbesondere auch als Ethyltriacetoxysilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Propyl- und R^{a} ein Carbonsäurerest -O-C(O)-R^{f} ist und R^{f} Methyl- bedeutet. Diese Verbindung wird insbesondere auch als Propyltriacetoxysilan bezeichnet.

Gemäß einer weiteren Ausführungsform der Erfindung ist in der Verbindung mit der allgemeine Strukturformel Si(R)ₘ(R^{a})₄₋ₘ m = 1, R bedeutet Phenyl- und R^{a} ein Carbonsäurerest -O-C(O)-R^{f} ist und R^{f} Methyl- bedeutet. Diese Verbindung wird insbesondere auch als Phenyltriacetoxysilan bezeichnet.

In einer bevorzugten Ausführungsform der Erfindung umfasst der Vernetzer eine Kombination der Verbindungen aus Vinyltriacetoxysilan und Methyltriacetoxysilan, besonders bevorzugt besteht der Vernetzer aus dieser Kombination.

In einer bevorzugten Ausführungsform der Erfindung umfasst der Vernetzer eine Kombination der Verbindungen aus Methyltriacetoxysilan und Ethyltriacetoxysilan, besonders bevorzugt besteht der Vernetzer aus dieser Kombination.

In einer bevorzugten Ausführungsform der Erfindung umfasst der Vernetzer eine Kombination der Verbindungen aus Ethyltriacetoxysilan und Propyltriacetoxysilan, besonders bevorzugt besteht der Vernetzer aus dieser Kombination.

In einer weiter bevorzugten Ausführungsform der Erfindung umfasst der Vernetzer die Verbindung Vinyltriacetoxysilan, besonders bevorzugt besteht der Vernetzer daraus.

In einer alternativen bevorzugten Ausführungsform der Erfindung umfasst der Vernetzer die Verbindung Methyltriacetoxysilan, besonders bevorzugt besteht der Vernetzer daraus.

In einer alternativen bevorzugten Ausführungsform der Erfindung umfasst der Vernetzer die Verbindung Ethyltriacetoxysilan, besonders bevorzugt besteht der Vernetzer daraus.

In einer alternativen bevorzugten Ausführungsform der Erfindung umfasst der Vernetzer die Verbindung Propyltriacetoxysilan, besonders bevorzugt besteht der Vernetzer daraus.

In einer ganz besonders bevorzugten Ausführungsform wird der Vernetzer ausgewählt aus der Gruppe bestehend aus Oxim-Vernetzern wie Vinyl-tris(2-pentanonoximo)silan, Methyl-tris(2-pentanonoximo)silan, Vinyl-tris(2-propanonoximo)silan, Methoxyvinyl-di-(2-propanonoximo)silan und Dimethoxyvinyl-(2-propanonoximo)silan oder Mischungen daraus oder Acetat-Vernetzern wie Methyltriacetoxysilan oder Ethyltriacetoxysilan.

In einer äußerst bevorzugten Auführungsform wird der Vernetzer ausgewählt aus der Gruppe bestehend aus Vinyl-tris(2-pentanonoximo)silan, Methyl-tris(2-pentanonoximo)silan, Vinyl-tris(2-propanonoximo)silan, Methoxyvinyl-di-(2-propanonoximo)silan und Dimethoxyvinyl-(2-propanonoximo)silan oder Mischungen daraus oder Methyltriacetoxysilan.

Die Bezeichnung **"Katalysator"** bezeichnet einen Stoff, der die Aktivierungsenergie einer bestimmten Reaktion herabsetzt und dadurch die Reaktionsgeschwindigkeit erhöht bzw. eine Reaktion überhaupt ermöglicht.

In einer Ausführungsform umfasst die erfindungsgemäße Zusammensetzung mindestens einen Katalysator A und mindestens einen Katalysator B. Eine bevorzugte Ausüfhrungsform umfasst nur einen Katalysator A und nur einen Katalysator B.

In einer alternativen Ausführungsform umfasst eine erfindungsgemäße Zusammensetzung ein Gemisch aus drei oder vier unterschiedlichen Katalysatoren ausgewählt aus der Gruppe umfassend Katalysator A und Katalysator B. Der Einsatz von drei oder vier unterschiedlichen Katalystoren in der Aushärtung von Polyorganosiloxanen kann vorteilhafte Eigenschaften aufweisen. So kann beispielsweise der Anteil eines toxikologisch bedenklichen und/oder teuren Katalysators gesenkt werden. Insbesondere kann die Kombination von unterschiedlichen Katalysatoren die Eigenschaften der resultierenden Silikonkautschukmassen beeinflussen. Aufgrund der unterschiedlichen Reaktivitäten der Katalysatoren können so die Materialeigenschaften der ausgehärteten Silikonkautschukmassen entsprechend gesteuert werden.

Gemäß der Erfindung umfasst **Katalysator A** mindestens eine Metall-Siloxan-Silanol(-at)-Verbindung.

Mit der Bezeichnung "Metall-Siloxan-Silanol(-at)-Verbindung" werden alle Metall-Siloxan-Verbindungen bezeichnet, die entweder eine oder mehrere Silanol- und/oder Silanolat-Gruppen enthalten. In einer Ausführungsform der Erfindung ist es ebenfalls möglich, dass ausschließlich Metall-Siloxan-Silanolate vorliegen. Solange nicht im Einzelnen zwischen diesen unterschiedlichen Konstellationen differenziert wird, sind alle Kombinationen eingeschlossen
Die Metall-Siloxan-Silanol(-at)-Verbindung kann in einer Ausführungsform der vorliegenden Erfindung als Monomer, Oligomer und/oder Polymer zur Herstellung der silylierten Polymere (SiP) der erfindungsgemäßen Zusammensetzung vorliegen, wobei der Übergang von Oligomeren zu Polymeren gemäß der allgemeinen Definition fließend ist.

Vorzugsweise war das Metall beziehungsweise waren die Metalle in der oligomeren und/oder polymeren Metall-Siloxan-Silanol(-at)-Verbindung endständig und/oder innerhalb der Kette vorhanden.

In der erfindungsgemäßen Zusammensetzung, als auch in der Herstellung Silikonkautschukmassen ist die kettenförmige Metall-Siloxan-Silanol(-at)-Verbindung linear und/oder verzweigt und/oder ein Käfig.

In einer bevorzugten Ausführungsform weist die kettenförmige Metall-Siloxan-Silanol(-at)-Verbindung in der erfindungsgemäßen Zusammensetzung und/oder in der Herstellung der Silikonkautschukmassen der erfindungsgemäßen Zusammensetzung eine Käfigstruktur auf.

Unter einem "Käfig" oder einer oligomeren oder polymeren "Käfigstruktur" wird im Sinne der Erfindung eine dreidimensionale Anordnung der kettenförmigen Metall-Siloxan-Silanol(-at)-Verbindung verstanden, wobei einzelne Atome der Kette die Eckpunkte einer vielflächigen Grundstruktur der Verbindung bilden. Hierbei werden durch die miteinander verknüpften Atome mindestens zwei Flächen aufgespannt, wobei eine gemeinsame Schnittmenge entsteht. In einer Ausführungsform der Verbindung bildet sich beispielsweise eine würfelförmige Grundstruktur der Verbindung aus. Eine Einkäfig-Struktur oder auch singulär vorliegende Käfig-Struktur, also eine Verbindung, die sich über einen vereinzelt vorliegenden Käfig definiert, stellt die Struktur (IVc) dar. Verbindungen, welche innerhalb der Verbindung mehrere Käfige aufweisen können durch die Verbindungen (I) sowie (la) bis (Id) beschrieben werden. Ein Käfig kann erfindungsgemäß "offen" oder auch "geschlossen" vorliegen. Je nachdem ob alle Eckpunkte so verbunden, verknüpft oder koordiniert sind, dass eine geschlossene Käfigstruktur entsteht. Ein Beispiel für einen geschlossenen Käfig stellen die Strukturen (II), (IV), (IVb), (IVc).

Der Begriff "kernig" schreibt erfindungsgemäß die Kernigkeit einer Verbindung, wie viele Metall-Atome darin enthalten sind. Eine einkernige Verbindung weist ein Metall-Atom auf, eine mehr- bzw. zweikernige Verbindung hingegen zwei Metall-Atome innerhalb einer Verbindung auf. Die Metalle können dabei direkt miteinander verbunden sein oder über ihre Substituenten verknüpft. Ein Beispiel für eine erfindungsgemäße einkernige Verbindung stellen z. B. die Strukturen (IV), (IVb), (IVc), (la) (Ib) oder (Ic) dar; eine zweikernige Verbindung stellt Struktur (Id) dar.

Eine einkernige Einkäfig-Struktur stellen die Metall-Siloxan-Silanol(-at)-Verbindungen (IV), (IVb) und (IVc) dar. Einkernige Zweikäfig-Strukturen sind z. B. die Strukturen (la), (Ib) oder (Ic).

Bevorzugt umfasst die Metall-Siloxan-Silanol(-at)-Verbindung in der Herstellung der Silikonkautschukmassen der erfindungsgemäßen Zusammensetzung ein oligomeres Metall-Silsesquioxan.

Insbesondere umfasst die Metall-Siloxan-Silanol(-at)-Verbindung in der Herstellung der Silikonkautschukmassen der erfindungsgemäßen Zusammensetzung ein polyhedrales Metall-Silsesquioxan.

In einer Ausführungsform weißt die Metall-Siloxan-Silanol(-at)-Verbindung in der erfindungsgemäßen Zusammensetzung und/oder in der Herstellung der Silikonkautschukmassen die allgemeine Formel R*_{q}SiᵣOₛMₜ auf, wobei jeder R* unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1- bis C10-Alkyl), jedes M unabhängig voneinander ausgewählt sind aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2. 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
q eine ganze Zahl von 4 bis 19 ist,
r eine ganze Zahl von 4 bis 10 ist,
s eine ganze Zahl von 8 bis 30 ist, und
t eine ganze Zahl von 1 bis 8 ist.

In einer weiteren Ausführungsform weißt die Metall-Siloxan-Silanol(-at)-Verbindung in der erfindungsgemäßen Zusammensetzung und/oder in der Herstellung der Silikonkautschukmassen die allgemeine Formel R^{#}₄Si₄O₁₁Y₂Q₂X₄Z₃ auf, wobei jedes X unabhängig voneinander ausgewählt ist aus der Gruppe bestehend aus Si, M¹, -M³L¹_{Δ}, M³, oder -Si(R⁸)-O-M³L¹_{Δ}, wobei M¹ und M³ unabhängig voneinander ausgewählt sind aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und
wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
jedes Z unabhängig voneinander ausgewählt ist aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
jedes R^{#}, R⁵, R⁶ und R⁷ unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional s ubstituiertem C5- bis C10-Aryl; jedes Y unabhängig voneinander -O-M²-L³_{Δ} bedeutet, oder zwei Y zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus - OH, -O-Methyl, -O-Ethyl, -O-Propyl, -O-Butyl, -O-Octyl, -O-Isopropyl, und -O-Isobutyl, und jedes M² unabhängig voneinander ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
jedes Q unabhängig voneinander H, M⁴L⁴_{Δ}, -SiR⁸, -M³L¹_{Δ}, eine Einfachbindung verknüpft mit M³ von X oder eine Einfachbindung verknüpft mit dem Si-Atom des Rests -Si(R⁸)-O-M³L¹_{Δ} bedeutet, wobei M³, R⁸ und L' wie für X definiert sind, wobei M⁴ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,und wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl,
mit dem Vorbehalt, dass mindestens ein X M³, -M³L¹_{Δ} oder -Si(R⁸)-O-M³L¹_{Δ} bedeutet.

Dem Fachmann ist bekannt, dass sich die Anzahl (Δ) möglicher Liganden für L¹_{Δ}, L²_{Δ}, L³_{Δ}, L⁴_{Δ}, direkt aus der Anzahl freier Valenzen des eingesetzten Metallatoms ergibt, wobei die Valenzzahl die Wertigkeit des Metalls beschreibt.

In einer weiteren Ausführungsform weißt die Metall-Siloxan-Silanol(-at)-Verbindung in der erfindungsgemäßen Zusammensetzung und/oder in der Herstellung der Silikonkautschukmassen die allgemeine Formel (Y_{0,25}R^{#}SiO_{1,25})₄(Z_{0,75}Y_{0,25}XO)₄(OQ)₂ auf, wobei jedes X unabhängig voneinander ausgewählt ist aus der Gruppe bestehend aus Si, M¹, -M³L¹_{Δ}, M³, oder -Si(R⁸)-O-M³L¹_{Δ}, wobei M¹ und M³ unabhängig voneinander ausgewählt sind aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl;
jedes Z unabhängig voneinander ausgewählt ist aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
jedes R^{#}, R⁵, R⁶ und R⁷ unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl;
jedes Y unabhängig voneinander -O-M²-L³_{Δ} bedeutet, oder zwei Y zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und jedes M² unabhängig voneinander ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
jedes Q unabhängig voneinander H, M⁴L⁴_{Δ}, -SiR⁸, -M³L¹_{Δ}, eine Einfachbindung verknüpft mit M³ von X oder eine Einfachbindung verknüpft mit dem Si-Atom des Rests -Si(R⁸)-O-M³L¹_{Δ} bedeutet, wobei M³, R⁸ und L¹ wie für X definiert sind, wobei M⁴ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L⁴ ausgewählt ist aus der Gruppe bestehend aus -OH und - O- (C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl,
mit dem Vorbehalt, dass mindestens ein X M³, -M³L¹_{Δ} oder -Si(R⁸)-O-M³L¹_{Δ} bedeutet.
Bevorzugt weißt die Metall-Siloxan-Silanol(-at)-Verbindung in der erfindungsgemäßen Zusammensetzung und/oder der Herstellung der Silikonkautschukmassen die allgemeine Formel Si₄O₉R¹R²R³R⁴X¹X²X³X⁴OQ¹OQ²Y¹Y²Z¹Z²Z³ auf, wobei X¹, X² und X³ unabhängig voneinander ausgewählt sind aus Si oder M¹, wobei M¹ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L2 ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C 10-Aryl;
Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und M² ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und X⁴ -M³L¹_{Δ} oder M³ bedeutet und Q¹ und Q² jeweils H oder eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s- und p-Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
   oder
X⁴ -M³L¹_{Δ} bedeutet und Q² H oder eine Einfachbindung verknüpft mit M³ bedeutet und Q¹, H, m⁴L⁴_{Δ} oder -SiR⁸ bedeutet, wobei M⁴ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 2., 3., 4., 5. und 8. Nebengruppe und Metallen der 1., 2., 3., 4. und 5. Hauptgruppe, insbesondere aus der Gruppe bestehend aus Zn, Sc, Ti, Zr, Hf, V, Pt, Ga, Sn und Bi, wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl,
   oder
X⁴, Q¹ und Q² unabhängig voneinander -M³L¹_{Δ} bedeuten,
   oder
X⁴ -Si(R⁸)-O-M³L¹ bedeutet, Q² eine Einfachbindung verknüpft mit dem Si-Atom von X⁴ bedeutet und Q¹ -M⁴L⁴_{Δ} bedeutet,
   oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

In einer weiteren Ausführungsform weist das Metallsilsesquioxan in der erfindungsgemäßen Zusammensetzung und/oder in der Herstellung der Silikonkautschukmassen die allgemeine Formel
(X⁴)(Z¹Y¹X²O)(Z²X¹O₂)(Z³X³O₂)(R¹Y²SiO)(R³SiO)(R⁴SiO₂)(R²SiO₂)(Q¹)(Q²) auf, wobei X¹, X² und X³ unabhängig voneinander ausgewählt sind aus Si oder M¹, wobei M¹ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C 10-Aryl;
Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und M² ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und
X⁴ -M³L¹_{Δ} oder M³ bedeutet und Q¹ und Q² jeweils H oder eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
   oder
X⁴ -M³L¹_{Δ} bedeutet und Q² H oder eine Einfachbindung verknüpft mit M³ bedeutet und Q¹ H, M⁴L⁴_{Δ} oder -SiR⁸ bedeutet, wobei M⁴ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 2., 3., 4., 5. und 8. Nebengruppe und Metallen der 1., 2., 3., 4. und 5. Hauptgruppe, insbesondere aus der Gruppe bestehend aus Zn, Sc, Ti, Zr, Hf, V, Pt, Ga, Sn und Bi, wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl,
   oder
X⁴, Q¹ und Q² unabhängig voneinander -M³L¹_{Δ} bedeuten,
   oder
X⁴ -Si(R⁸)-O-M³L¹_{Δ} bedeutet, Q² eine Einfachbindung verknüpft mit dem Si-Atom von X⁴ bedeutet und Q¹ -M⁴L⁴_{Δ} bedeutet,
   oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

In einem weiteren Sinne der Erfindung kann der erfindungsgemäß eingesetzte Katalysator A auf Basis einer Metall-Siloxan-Silanol(-at)-Verbindung durch die Struktur (I) beschrieben werden, 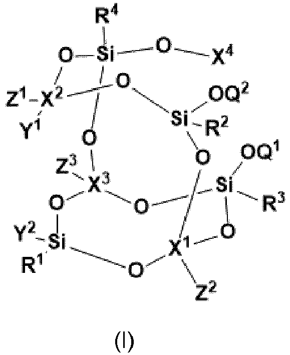 wobei
X¹, X² und X³ unabhängig voneinander ausgewählt sind aus Si oder M¹, wobei M¹ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl;
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C 10-Aryl;
Y¹ und Y² unabhängig voneinander -O-M²-L³_{Δ} bedeuten, oder Y¹ und Y² zusammengenommen sind und zusammen -O-M²(L³_{Δ})-O- oder -O- bedeuten, wobei L³ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L³ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M² ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn, Bi,
und X⁴ -M³L¹_{Δ} oder M³ bedeutet und Q¹ und Q² jeweils H oder eine Einfachbindung verknüpft mit M³ bedeuten, wobei L¹ ausgewählt ist aus der Gruppe bestehend aus -OH und -O-(C1-bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn, Bi,
   oder
X⁴ -M³L¹ bedeutet und Q² H oder eine Einfachbindung verknüpft mit M³ bedeutet und Q¹ H, M⁴L⁴_{Δ} oder -SiR⁸ bedeutet, wobei M⁴ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und wobei L⁴ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L⁴ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei R⁸ ausgewählt ist aus der Gruppe bestehend aus optional substituiertem C1- bis C20-Alkyl, optional substituiertem C3- bis C6-Cycloalkyl, optional substituiertem C2- bis C20-Alkenyl und optional substituiertem C6- bis C10-Aryl,
   oder
X⁴, Q¹ und Q² unabhängig voneinander -M³L¹_{Δ} bedeuten,
   oder
X⁴ -Si(R⁸)-O-M³L¹_{Δ} bedeutet, Q² eine Einfachbindung verknüpft mit dem Si-Atom von X⁴ bedeutet und Q¹ -M⁴L⁴_{Δ} bedeutet,
   oder
X⁴ -Si(R⁸)-O-M³L¹_{Δ} bedeutet, Q² eine Einfachbindung verknüpft mit dem Si-Atom von X⁴ bedeutet und Q¹ eine Einfachbindung verknüpft mit dem M³-Atom von X⁴ bedeutet.

In einer weiteren bevorzugten Ausführungsform weißt die Metall-Siloxan-Silanol(-at)-Verbindung in der Herstellung der Silikonkautschukmassen die allgemeinen Formel (I) auf, wobei X¹, X² und X³ unabhängig voneinander Si bedeuten,
X⁴ -M³L¹_{Δ} bedeutet und Q¹ und Q² jeweils eine Einfachbindung verknüpft mit M³ bedeuten, wobei L¹ ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ jeweils unabhängig voneinander aus optional substituierten C1- bis C20-Alkyl, optional substituierten C3- bis C8-Cycloalkyl, optional substituierten C2- bis C20-Alkenyl und optional substituierten C5- bis C10 Aryl ausgewählt sind,
R¹, R², R³ jeweils unabhängig voneinander aus optional substituierten C1- bis C20-Alkyl, optional substituierten C3- bis C8-Cycloalkyl, optional substituierten C2- bis C20-Alkenyl und optional substituierten C5- bis C10 Aryl ausgewählt sind,
Y¹ und Y² zusammengenommen sind und zusammen -O- bilden.

In einer Ausführungsform kann die Metall-Siloxan-Silanol(-at)-Verbindung gemäß Formel (I) in der erfindungsgemäßen Zusammensetzung und/oder in der Herstellung der Silikonkautschukmassen in Abhängigkeit der vorhandenen Äquivalente an Metall einkernig als Monomer oder mehrkernig als Dimer (zweikernig), Trimer (dreikernig), Multimer (multikernig) und/oder Mischungen daraus vorliegen, sodass beispielsweise Strukturen gemäß der Formeln (la) bis (Id) möglich sind,

Weitere erfindungsgemäß einsetzbare mehrkernige Metall-Siloxan-Silanol(-at)-Verbindung sind die Strukturen (la), (Ib), (IC) oder (Id), 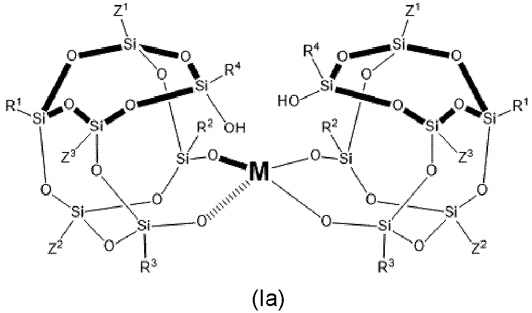 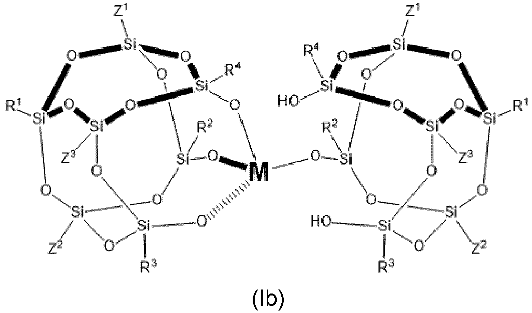 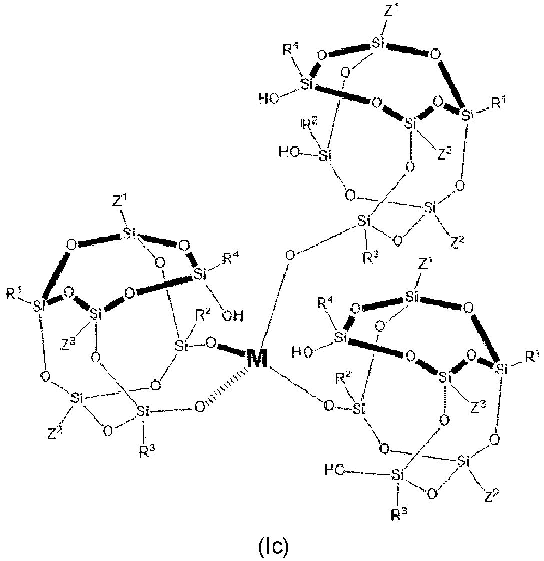 wobei
M ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und jeder R (R¹ bis R⁴) unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1- bis C10-Alkyl). Das vierwertige Metall M stellt hierbei einen gemeinsamen Teil mehrerer Käfige dar. Dabei ist dem Fachmann bekannt, dass die Anzahl der Bindungen zum Metall M abhängig ist von der Wertigkeit des Metalls M. Die Strukturformeln (Ia) bis (Ic) sind gegebenenfalls entsprechend anzupassen.

In einer Ausführungsform der erfindungsgemäßen Zusammensetzung kommt darin und/oder in der Herstellung der Silikonkautschukmassen eine Mischung der Metall-Siloxan-Silanol(-at)-Verbindungen gemäß Formel (I), (Ia), (Ib) und (Ic) zum Einsatz.

Ferner kann die mehrkernige Metall-Siloxan-Silanol(-at)-Verbindung gemäß Formel (Id) in der erfindungsgemäßen Zusammensetzung und/oder in der Herstellung der Silikonkautschukmassen 6-fach koordinierte Metallzentren aufweisen, sodass Strukturen gemäß Formel (Id) möglich sind 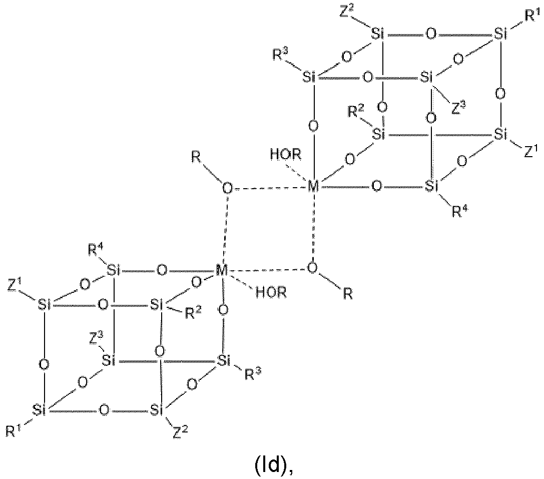 wobei jedes M unabhängig ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, und jeder R unabhängig voneinander ausgewählt ist aus der Gruppe bestehend aus optional substituiertem C1- bis C20-Alkyl, optional substituiertem C3- bis C8-Cycloalkyl, optional substituiertem C2- bis C20-Alkenyl, optional substituiertem C5- bis C10-Aryl, -OH und -O-(C1- bis C10-Alkyl).

Im Sinne der Erfindung beschreibt der Begriff "einkernig" die vereinzelt, also singulär vorliegende Käfig-Struktur des erfindungsgemäßen Katalysators auf Basis einer Metall-Siloxan-Silanol(-at)-Verbindung. Einkernige Katalysatoren auf Basis einer Metall-Siloxan-Silanol(-at)-Verbindung können durch die Struktur (IV) sowie ebenfalls durch die Strukturen (I) und (II) umfasst werden. 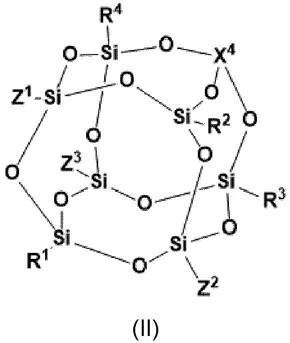 wobei
X⁴ -M³L¹_{Δ} bedeutet, wobei L¹ ausgewählt ist aus der Gruppe bestehend aus -OH und -O-(C1-bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl;
R¹, R², R³ und R⁴ jeweils unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C10-Aryl.
Ferner betrifft die in der zur Herstellung der erfindungsgemäßen silylierten Polymere eingesetzten Metall-Siloxan-Silanol(-at)-Verbindungen der allgemeinen Strukturformel (II), wobei X⁴ -M³L¹_{Δ} bedeutet wobei L¹ ausgewählt ist aus der Gruppe bestehend aus -OH und - O-(C1- bis C10-Alkyl), insbesondere -O-(C1- bis C8-Alkyl) oder -O-(C1- bis C6-Alkyl), oder wobei L¹ ausgewählt ist aus der Gruppe bestehend aus -OH, -O-Methyl, -O-Ethyl, -O-Propyl, -O-Butyl, -O-Octyl, -O-Isopropyl, und -O-Isobutyl, und wobei M³ ausgewählt ist aus der Gruppe bestehend aus s und p Block Metallen, d und f Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
Z¹, Z² und Z³ unabhängig voneinander ausgewählt sind aus der Gruppe bestehend aus L², R⁵, R⁶ und R⁷, wobei L² ausgewählt ist aus der Gruppe bestehend aus -OH und -O-(C1- bis C10-Alkyl), insbesondere -O-(C1- bis C8-Alkyl) oder -O-(C1- bis C6-Alkyl), oder wobei L² ausgewählt ist aus der Gruppe bestehend aus -OH, -O-Methyl, -O-Ethyl, -O-Propyl, -O-Butyl, -O-Octyl, -O-Isopropyl, und -O-Isobutyl und
R¹, R², R³, R⁴, R⁵, R⁶ und R⁷ unabhängig voneinander ausgewählt sind aus der Gruppe bestehend aus optional substituiertem C1- bis C20-Alkyl, optional substituiertem C3- bis C8-Cycloalkyl, optional substituiertem C2- bis C20-Alkenyl und optional substituiertem C5- bis C 10-Aryl.

In einer besonders vorteilhaften Ausführungsform können die silylierten Polymere (SiP) der erfindungsgemäßen Zusammensetzung durch eine katalysierte Reaktion mit Heptaisobutyl POSS-Titanium(IV)-Ethoxid (TiPOSS) als eine Metall-Siloxan-Silanol(-at)-Verbindung hergestellt worden sein und/oder die Zusammensetzung diese beinhalten. Hierbei steht die Abkürzung "TiPOSS" für das einkernige Titan-metallisierte Silsesquioxan der Strukturformel (IV) und kann äquivalent zu "Heptaisobutyl POSS-Titanium(IV)-Ethoxid" im Sinne der Erfindung verwendet werden.

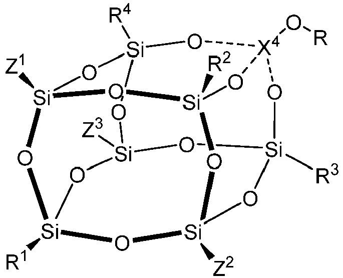

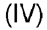

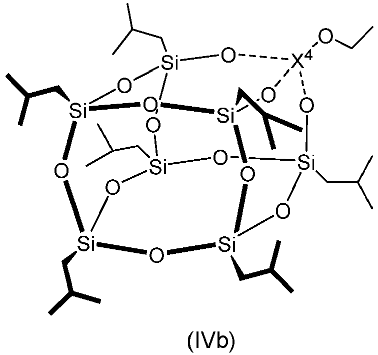

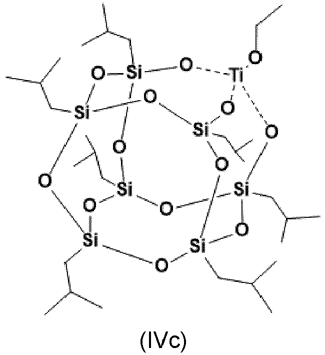

In der erfindungsgemäßen Zusammensetzung und/oder in der Herstellung der Silikonkautschukmassen kann die Metall-Siloxan-Silanol(-at)-Verbindung eine Mischung enthaltend die Strukturen (I), (Ia), (Ib), (Ic), (Id), (II), (IV), (IVb), (IVc) darstellen.

In einer bevorzugten Ausführungsform ist das Metall in der Metall-Siloxan-Silanol(-at)-Verbindung ein Titan.

Ganz besonders bevorzugte Katalysatoren aus der Gruppe der Metall-Siloxan-Silanol(-at)-Verbindungen sind das Heptaisobutyl POSS-Titanium(IV)-Ethoxid (TiPOSS) und das Heptaisobutyl POSS-Zinn(IV)-Ethoxid (SnPOSS). Davon bevorzugt ist das Heptaisobutyl POSS-Titanium(IV)-Ethoxid (TiPOSS).

Der **Katalysator B** ist vorzugsweise eine metall-organische Verbindung. Besonders bevorzugt sind zinn-, bismut-, zink-, calcium-, natrium-, zirkonium-, aluminium- oder titanorganische Verbindungen. Ganz besonders bevorzugt sind Zinn-, Bismut-, Zink-, Calcium-, Natrium-, Zirkonium-, Aluminium-, Blei-, Vanadium- oder Titan-Carboxylate. Äußerst bevorzugt sind Bismut-Caboxylate oder Aluminium-Caboxylate.

"Carboxylate" sind Salze einer Carbonsäure. Die Carboxy-Gruppe (-COO-) ist dabei negativ geladen und als positiv geladene Gegenionen kommen beispielsweise Metall-Ionen in Frage.

Der Katalysator B kann ausgewählt sein aus der Gruppe bestehend Tetraalkyltitanaten, wie Tetramethyltitanat, Tetraethyltitanat, Tetra-n-propyltitanat, Tetra-isopropyltitanat, Tetra-n-butyltitanat, Tetra-isobutyltitanat, Tetra-sec-butyltitanat, Tetraoctyltitanat, Tetra-(2-ethylhexyl)-titanat, Dialkyltitanate ((RO)2TiO2, worin R z.B. für iso-Propyl, n-Butyl, iso-Butyl steht), wie Isopropyl-n-butyltitanat; Titan-Acetylacetonat-Chelate, wie Di-isopropoxy-bis(acetylacetonat)titanat, Di-isopropoxy-bis(ethylacetylacetonat)titanat, Di-n-butyl-bis(acetylacetonat)titanat, Di-n-butyl-bis(ethylacetoacetat)titanat, Tri-isopropoxid-bis(acetylacetonat)titanat, Zirkontetraalkylate, wie Zirkontetraethylat, Zirkontetrabutylat, Zirkontetrabutyrat, Zirkontetrapropylat, Zirkoncarboxylate, wie Zirkondiacetat; Zirkon-Acetylacetonat-Chelate, wie Zirkontetra(acetylacetonat), Tributoxyzirkonacetylacetonat, Dibutoxyzirkon(bisacetylacetonat), Aluminiumtrisalkylate, wie Aluminiumtriisopropylat, Aluminium-sec-butyat; Aluminium-Acetylacetonat-Chelate, wie Aluminiumtris(acetylacetonat) und Aluminiumtris(ethylacetylacetonat), Organozinnverbindungen wie Dibutylzinndilaurat (DBTL), Dibutylzinnmaleat, Dibutylzinndiacetat, Zinn(II)-2-ethylhexanoat (Zinnoctoat), Zinn-Naphthenat, Dimethylzinndineodecanoat, Dioctylzinndineodecanoat, Dimethylzinndioleat, Dioctylzinndilaurat, Dimethylzinnmercaptide, Dibutylzinnmercaptide, Dioctylzinnmercaptide, Dibutylzinndithioglycolat, Dioctylzinnglycolat, Dimethylzinnglycolate, eine Lösung aus Dibutylzinnoxid, Reaktionsprodukte von Zink-Salzen und organischen Carbonsäuren (Carboxylate) wie Zink(II)-2-ethylhexanoat oder Zink(II)-neodecanoat, Gemische aus Bismut- und Zinkcarboxylaten, Reaktionsprodukte von Calcium-Salzen und organischen Carbonsäuren (Carboxylate) wie Calcium-bis(2-ethylhexanoat) oder Calcium-neodecanoat, Reaktionsprodukte von Natrium-Salzen und organischen Carbonsäuren (Carboxylate) wie Natrium(2-ethylhexanoat) oder Natrium-neodecanoat, Gemische aus Calcium- und Natriumcarboxylaten, Reaktionsprodukte von Bismut-Salzen und organischen Carbonsäuren wie Bismut(III)-tris(2-ethylhexonat) und Bismut(III)-tris(neodecanoat) sowie Bismut-Komplexverbindungen, Organoblei-Verbindungen wie Blei-Octylat, Organovanadium-Verbindungen oder Mischungen davon, bevorzugt ausgewählt aus Bismut-, Zink-, Aluminium-, Calcium-, Natrium-, und/oder Zirkonium-Carboxylaten, ganz besonders bevorzugt ausgewählt aus Dibutylzinndilaurat (DBTL), Zinn(II)-2-ethylhexanoat (Zinnoctoat), Zink(II)-2-ethylhexanoat, Zink(II)-neodecanoat (Zinn-Neodecanoat), Bismut(III)-tris(2-ethylhexonat), Bismut(III)-tris(neodecanoat) (Bismut-Neodecanoat), Titan-tetraisopropylat, Titan-tetrabutylat, Aluminium-sec-butylat, Zirkonium-tetraisopropylat, Zirkonium-tetrabutylat, Calcium-bis(2-ethylhexanoat), Natrium(2-ethylhexanoat) oder Mischungen davon, äußerst bevorzugt Bismut(III)-tris(neodecanoat), Bismut(III)-tris(2-ethylhexonat) oder Mischungen davon, äußerst bevorzugt Bismut(III)-tris(neodecanoat) ist

Der Katalysator B kann bevorzugt ausgewählt sein aus der Gruppe bestehend aus Dibutylzinndilaurat (DBTL), Zinn(II)-2-ethylhexanoat (Zinnoctoat), Zink(II)-2-ethylhexanoat, Zink(II)-neodecanoat, Bismut(III)-tris(2-ethylhexonat), Bismut(III)-tris(neodecanoat), Titan-tetraisopropylat, Titan-tetrabutylat, Aluminiumtri-sec-butylat, Zirkonium-tetraisopropylat, Zirkonium-tetrabutylat oder Mischungen davon.

Bei dem Katalysator B handelt es sich besonders bevorzugt um Bismut(III)-tris(neodecanoat), Dibutylzinndilaurat (DBTL), Zink(II)-2-ethylhexanoat, Zirkonium-tetraisopropylat, Zirkonium-tetrabutylat oder Mischungen davon.

Bei dem Katalysator B handelt es sich ganz besonders bevorzugt um Bismut(III)-tris(neodecanoat).

In einer bevorzugten erfindungsgemäßen Zusammensetzung ist Katalysator A bevorzugt TiPOSS oder SnPOSS und Katalysator B ausgewählt aus der Gruppe bestehend aus Bismut(III)-tris(neodecanoat), Dibutylzinndilaurat (DBTL), Zink(II)-2-ethylhexanoat, Zirkonium-tetraisopropylat, Zirkonium-tetrabutylat oder Mischungen davon, besonders bevorzugt ist Katalysator A TiPOSS und Katalysator B Bismut(III)-tris(neodecanoat).

Bevorzugsweise liegen die genannten Katalysatoren A und B dabei in einem Verhältnis zueinander zwischen 1:10 und 10:1 vor, weiter bevorzugt liegen die Katalysatoren A und B in einem Verhältnis zwischen 1:8 und 8:1 zueinander vor, insbesondere bevorzugt liegen die Katalysatoren A und B in einem Verhältnis zwischen 1:5 und 5:1 zueinander vor, weiter insbesonders bevorzugt liegen die Katalysatoren A und B in einem Verhältnis zwischen 1:2 und 2:1 zueinander vor, ganz besonders bevorzugt in einem Verhältnis von 0,9:1,1 und 1,1:0,9 zueinander, äußerst bevorzugt in einem Verhältnis von 1:1 zueinander vorliegen, bezogen auf Gewichtsprozent.

In einer weiter bevorzugten erfindungsgemäßen Zusammensetzung liegt die Gesamtkatalysatormenge, zusammengesetzt aus mindestens einem Katalysator A und einem Katalysator B, zwischen 5 und 30000 ppm, weiter bevorzugt zwischen 15 und 20000 ppm, besonders bevorzugt zwischen 20 und 15000 ppm, ganz besonders bevorzugt zwischen 20 und 10000 ppm, bezogen auf das Gesamtgewicht der Zusammensetzung.

In einer alternativen Ausführungsform einer erfindungsgemäßen Zusammensetzung werden drei Katalysatoren, einen Katalysator A und zwei Katalysatoren B, eingesetzt.

In einer weiteren alternativen Ausführungsform einer erfindungsgemäßen Zusammensetzung werden drei Katalysatoren, zwei Katalysatoren A und ein Katalysator B, eingesetzt.

In einer weiteren alternativen Ausführungsform einer erfindungsgemäßen Zusammensetzung werden vier Katalysatoren, zwei Katalysatoren A und zwei Katalysatoren B, eingesetzt.

In einer weiteren alternativen Ausführungsform einer erfindungsgemäßen Zusammensetzung werden vier Katalysatoren, ein Katalysator A und drei Katalysatoren B, eingesetzt.

In einer weiteren alternativen Ausführungsform einer erfindungsgemäßen Zusammensetzung werden vier Katalysatoren, drei Katalysatoren A und ein Katalysator B, eingesetzt.

In einer besonders bevorzugten Ausführungsform wird der Vernetzer ausgewählt aus der Gruppe bestehend aus Oxim-Vernetzern wie Vinyl-tris(2-pentanonoximo)silan, Methyl-tris(2-pentanonoximo)silan, Vinyl-tris(2-propanonoximo)silan, Ethyl-tris(2-propanonoximo)silan, Methoxyvinyl-di-(2-propanonoximo)silan, Dimethoxyvinyl-(2-propanonoximo)silan, Methyl-tris(2-butanonoximo)silan, Phenyl-tris(2-butanonoximo)silan, Vinyl-tris(2-butanonoximo)silan und Tetra(2-butanonoximo)silan oder Mischungen daraus, Acetat-Vernetzern wie Methyltriacetoxysilan, Ethyltriacetoxysilan, Propyltriacetoxysilan oder Vinyltriacetoxysilan oder Mischungen daraus, Lactato-Vernetzern wie Tris(ethyllactato)methylsilan oder Tris(ethyllactato)vinylsilan oder Mischungen daraus, Salicylato-Vernetzern wie Tris(2-ethylhexylsalicylato)vinylsilan, Tris(2-ethylhexylsalicylato)methylsilan, Tris(2-ethylhexylsalicylato)propylsilan oder Mischungen daraus oder eine Mischungen aus allen vorgenannten Vernetzern und Katalysator A ausgewählt aus der Gruppe bestehend aus einkernigen metallisierten Silsesquioxanen der Strukturformel (IV) oder Mischungen daraus und Katalysator B ausgewählt aus der Gruppe bestehend aus Dibutylzinndilaurat (DBTL), Zinn(II)-2-ethylhexanoat (Zinnoctoat), Zink(II)-2-ethylhexanoat, Zink(II)-neodecanoat, Bismut(III)-tris(2-ethylhexonat), Bismut(III)-tris(neodecanoat), Titan-tetraisopropylat, Titan-tetrabutylat, Aluminiumtri-sec-butylat, Zirkonium-tetraisopropylat, Zirkonium-tetrabutylat oder Mischungen daraus.

In einer ganz besonders bevorzugten Ausführungsform wird der Vernetzer ausgewählt aus der Gruppe bestehend aus Oxim-Vernetzern wie Vinyl-tris(2-pentanonoximo)silan, Methyl-tris(2-pentanonoximo)silan, Vinyl-tris(2-propanonoximo)silan, Methoxyvinyl-di-(2-propanonoximo)silan und Dimethoxyvinyl-(2-propanonoximo)silan oder Mischungen daraus oder Acetat-Vernetzern wie Methyltriacetoxysilan und Katalysator A ausgewählt aus der Gruppe bestehend aus einkernigen metallisierten Silsesquioxanen der Strukturformel (IV) oder Mischungen daraus und Katalysator B ausgewählt aus der Gruppe bestehend aus Dibutylzinndilaurat (DBTL), Zinn(II)-2-ethylhexanoat (Zinnoctoat), Zink(II)-2-ethylhexanoat, Zink(II)-neodecanoat, Bismut(III)-tris(2-ethylhexonat), Bismut(III)-tris(neodecanoat), Titan-tetraisopropylat, Titan-tetrabutylat, Aluminiumtri-sec-butylat, Zirkonium-tetraisopropylat, Zirkonium-tetrabutylat oder Mischungen daraus.

In einer äußerst bevorzugten Auführungsform wird der Vernetzer ausgewählt aus der Gruppe bestehend aus Vinyl-tris(2-pentanonoximo)silan, Methyl-tris(2-pentanonoximo)silan, Vinyl-tris(2-propanonoximo)silan, Methoxyvinyl-di-(2-propanonoximo)silan und Dimethoxyvinyl-(2-propanonoximo)silan oder Mischungen daraus oder Methyltriacetoxysilan und Katalysator A ausgewählt aus der Gruppe bestehend aus einkernigen titan- oder zinn-metallisierte Silsesquioxan der Strukturformel (IVb) oder Mischungen daraus und Katalysator B ausgewählt aus der Gruppe bestehend aus Bismut(III)-tris(neodecanoat), Dibutylzinndilaurat (DBTL), Zink(II)-2-ethylhexanoat, Zirkonium-tetraisopropylat, Zirkonium-tetrabutylat oder Mischungen daraus.

In einer ganz bevorzugten Auführungsform wird der Vernetzer ausgewählt aus der Gruppe bestehend aus Vinyl-tris(2-pentanonoximo)silan, Methyl-tris(2-pentanonoximo)silan, Vinyl-tris(2-propanonoximo)silan, Methoxyvinyl-di-(2-propanonoximo)silan und Dimethoxyvinyl-(2-propanonoximo)silan oder Mischungen daraus und Katalysator A ist TiPOSS oder SnPOSS und Katalysator B ist Bismut(III)-tris(neodecanoat).

Falls gewünscht, kann die erfindungsgemäße Zusammensetzung weitere übliche Zusätze umfassen. Übliche Zusätze sind Füllstoffe, Farbmittel, Weichmacher, Thixotropiermittel, Benetzungsmittel, Haftmittel, Katalysatoren und andere.

Als **Füllstoffe** können sowohl verstärkende als auch nichtverstärkende, sowie thioxotropie beeinflußende Füllstoffe verwendet werden. Bevorzugt werden anorganische Füllstoffe verwendet, wie z.B. hochdisperse, pyrogene oder gefällte Kieselsäuren, Ruß, Quarzpulver, Kreide, oder Metallsalze oder Metalloxide, wie z.B. Titanoxide. Daneben finden auch Kunststoffhohlkugeln und Glaskugeln, sowie Fettsäureamide und hydrogenisiertes Rizinusöl als Thixotropiermittel Verwendung. Ein besonders bevorzugter Füllstoff ist eine hochdisperse Kieselsäure, wie sie beispielsweise unter dem Namen CAB-O-SIL 150 von Cabot oder Aerosil 150 bzw Aerosil 200 erhältlich ist. Ganz besonders bevorzugt ist pyrogene Kieselsäure (150 und 200 m²/g, Aerosil, Evonik). Füllstoffe wie hochdisperse Kieselsäuren, insbesondere pyrogene Kieselsäuren, können auch als Thixotropiermittel verwendet werden. Metalloxide können auch als Farbmittel verwendet werden, z.B. Titanoxide als weiße Farbmittel. Die Füllstoffe können auch durch üblichen Verfahren oberflächenmodifiziert werden, z.B. können mit Silanen hydrophobierte Kieselsäuren verwendet werden.

Als **Weichmacher** können an sich bekannte Polydiorganosiloxane ohne funktionelle Endgruppen, die sich somit von den erfindungsgemäß verwendeten hydroxyfunktionalisierten Polyorganosiloxanverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind. Weichmacher haben bevorzugt eine kinematische Viskosität von 1 bis 5.000 cSt (bei 25°C), insbesondere von 50 bis 500 cSt, und besonders bevorzugt von 90 bis 200 cSt. Beispiele für Weichmacher umfassen Polydimethylsiloxane mit einer Viskosität von 90 bis 120 cSt., insbesondere von 100 cSt, Paraffinöle, Phthalate (Diisononylphthalet) und Diisononylcyclohexanester DINCH^{®} und polysubstituierte Alkylbenzole.

Als Benetzungs- und/oder Haftmittel (**Haftvermittler**) können an sich bekannte Silanverbindungen mit organischen Substituenten am Siliciumatom verwendet werden, die sich von den erfindungsgemäß verwendeten hydroxyfunktionalisierten Polyorganosiloxanverbindungen unterscheiden. Beispielsweise können Organosilane mit reaktiven Amin-, Carbonsäure-, Epoxy- oder Thiolgruppen verwendet werden. Spezielle Beispiele für Haftmittel (Haftvermittler) mit reaktiven Amin-, Carbonsäure- oder Thiolgruppen umfassen Aminosilane, wie Aminoethylaminopropyltrialkoxysilane. Konkrete Beispiele solcher Haftmittel (Haftvermittler) sind 3-Aminopropyltriethoxysilan, 3-Aminopropyltrimethoxysilan, Aminoethylamino-propyltrimethoxysilan, Butylaminopropyltriethoxysilan, Butylaminopropyltrimethoxysilan, Propylaminopropyltriethoxysilan, Propylaminopropyltrimethoxysilan, N-Cyclohexyl-3-aminopropyltrimethoxysilan, N-Cyclohexyl-3-aminopropyltriethoxysilan, und sogenanntens Co-oligomeric diamino/alkyl functional silan, welches als Dynasylan 1146 von Evonik erhältlich ist.

Als Haftmittel (Haftvermittler) können ebenfalls die folgenden Silanverbindungen mit anderen funktionellen Gruppen eingesetzt werden. Beispielsweise können Organosilane mit tertiären Amin-, Harnstoff-, Amid-, Carbamat- oder Isocyanuratgruppen verwendet werden. Konkrete Beispiele solcher Haftmittel (Haftvermittler) sind N,N'-Bis(triethoxysilylpropyl) harnstoff, Tris(triethoxysilylpropyl)diethylentriharnstoff, Dimethylaminopropyltrimethoxysilan, 1,3,5-Tris(trimethoxysilylpropyl)-isocyanurat, N-Methyl(3-Trimethoxysilyl)-propyl)-carbamat und N-Ethyl(3-Triethoxysilyl)-propyl)-carbamat. Insbesondere können auch Mischungen dieser Substanzen als Haftmittel (Haftvermittler) eingesetzt werden.

Desweiteren können die Mischungen UV-Schutzmittel (z. B. Hals = hindered Amine lights stabilizers) und Trocknungsmittel (z. B. Vinyltrimethoxysilan) enthalten.

Die erfindungsgemäße Zusammensetzung kann 30 bis 80 Gew.-%, bevorzugt 35 bis 70 Gew.-%, weiter bevorzugt 40 bis 60 Gew.%, der hydroxyfunktionalisierten Polyorganosiloxanverbindung umfassen, jeweils bezogen auf das Gesamtgewicht der erfindungsgemäßen Zusammensetzung.

Die erfindungsgemäße Zusammensetzung kann ferner 5 bis 50 Gew.-%, bevorzugt 10 bis 40 Gew.-%, Füllstoff umfassen, insbesondere als Thixotrophiermittel, jeweils bezogen auf das Gesamtgewicht der erfindungsgemäßen Zusammensetzung.

Die erfindungsgemäße Zusammensetzung weiterhin kann 10 bis 50 Gew.-%, bevorzugt 20 bis 40 Gew.-%, Weichmacher umfassen, jeweils bezogen auf das Gesamtgewicht der erfindungsgemäßen Zusammensetzung.

Vorteilhafte Ausgestaltungen der Erfindung werden nachfolgend im Einzelnen erläutert.

Eine Ausführungsform der Erfindung ist eine Zusammensetzung enthaltend die folgenden Komponenten:
- mindestens eine hydroxyfunktionalisierte Polyorganosiloxanverbindung,
- mindestens einen Vernetzer,
- mindestens zwei Katalysatoren A und B, wobei der Katalysator A aus der Gruppe der Metall-Siloxan-Silanol(-at)-Verbindungen ausgewählt ist und Katalysator B ausgewählt ist aus einer Gruppe von Katalysatoren, die Metall-Siloxan-Silanol(-at)-Verbindungen nicht umfasst.

Eine weitere Ausführungsform der Erfindung ist eine Zusammensetzung enthaltend die folgenden Komponenten:
- mindestens eine α,ω-Dihydroxypoiyorganosiioxanverbindung,
- mindestens einen Vernetzer,
- mindestens zwei Katalysatoren A und B, wobei der Katalysator A mindestens eine Metall-Siloxan-Silanol(-at)-Verbindung der allgemeinen Formel R*_{q}SiᵣOₛMₜ und wie hierin definiert ist aufweist,
und Katalysator B ausgewählt ist aus der Gruppe von metall-organischen Verbindungen.

Eine weitere Ausführungsform der Erfindung ist eine Zusammensetzung enthaltend die folgenden Komponenten:
- mindestens ein α,ω-Dihydroxypoiyorganosiioxan, welches eine kinematische Viskosität nach DIN 53019-1:2008-09 von mindestens 10.000 cSt aufweist, bevorzugt mindestens 20.000 cSt, besonders bevorzugt mindestes 50.000 cSt, ganz besonders bevorzugt eine kinematische Viskosität von etwa 80.000 cSt aufweist,
- mindestens einen Vernetzer aus der Gruppe ausgewählt bestehend aus Hydroxycarbonsäureester-Vernetzer, Hydroxycarbonsäureamid-Vernetzer, Salicylato-Vernetzer, Oxim-Vernetzer, Carbonsäureamid-Vernetzer, Acetat-Vernetzer, Amin-Vernetzer oder Misch-Vernetzer,
- mindestens zwei Katalysatoren A und B, wobei der Katalysator A mindestens eine Siloxan-Silanol(-at)-Verbindung ein Metall-Silsesquioxan der Struktur (IV) umfasst und wie hierin definiert ist

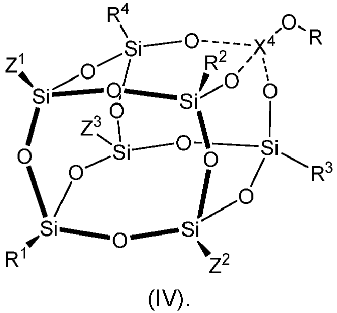

Eine weitere Ausführungsform der Erfindung ist eine Zusammensetzung enthaltend die folgenden Komponenten:
- mindestens ein α,ω-Dihydroxypoiyorganosiioxan, welches eine kinematische Viskosität nach DIN 53019-1:2008-09 mindestes 50.000 cSt, ganz besonders bevorzugt eine kinematische Viskosität von etwa 80.000 cSt aufweist,
- mindestens einen Vernetzer aus der Gruppe ausgewählt bestehend aus Salicylato-Vernetzer, Oxim-Vernetzer, und/oder Acetat-Vernetzer,
- mindestens zwei Katalysatoren A und B, wobei der Katalysator A mindestens eine Metall-Siloxan-Silanol(-at)-Verbindung der Struktur (IVb) umfasst und wie hierin definiert ist, 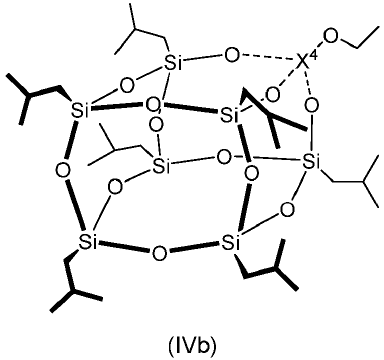 und Katalysator B ausgewählt ist aus der Gruppe bestehend aus Tetraalkyltitanaten, wie Tetramethyltitanat, Tetraethyltitanat, Tetra-n-propyltitanat, Tetra-isopropyltitanat, Tetra-n-butyltitanat, Tetra-isobutyltitanat, Tetra-sec-butyltitanat, Tetraoctyltitanat, Tetra-(2-ethylhexyl)-titanat, Dialkyltitanate ((RO)₂TiO₂, worin R z.B. für iso-Propyl, n-Butyl, iso-Butyl steht), wie Isopropyl-n-butyltitanat; Titan-Acetylacetonat-Chelate, wie Di-isopropoxy-bis(acetylacetonat)titanat, Di-isopropoxy-bis(ethylacetylacetonat)titanat, Di-n-butyl-bis(acetylacetonat)titanat, Di-n-butyl-bis(ethylacetoacetat)titanat, Tri-isopropoxid-bis(acetylacetonat)titanat, Zirkontetraalkylate, wie Zirkontetraethylat, Zirkontetrabutylat, Zirkontetrabutyrat, Zirkontetrapropylat, Zirkoncarboxylate, wie Zirkondiacetat; Zirkon-Acetylacetonat-Chelate, wie Zirkontetra(acetylacetonat), Tributoxyzirkonacetylacetonat, Dibutoxyzirkon(bisacetylacetonat), Aluminiumtrisalkylate, wie Aluminiumtriisopropylat, Aluminium-sec-butyat; Aluminium-Acetylacetonat-Chelate, wie Aluminiumtris(acetylacetonat) und Aluminiumtris(ethylacetylacetonat), Organozinnverbindungen wie Dibutylzinndilaurat (DBTL), Dibutylzinnmaleat, Dibutylzinndiacetat, Zinn(II)-2-ethylhexanoat (Zinnoctoat), Zinn-Naphthenat, Dimethylzinndineodecanoat, Dioctylzinndineodecanoat, Dimethylzinndioleat, Dioctylzinndilaurat, Dimethylzinnmercaptide, Dibutylzinnmercaptide, Dioctylzinnmercaptide, Dibutylzinndithioglycolat, Dioctylzinnglycolat, Dimethylzinnglycolate, eine Lösung aus Dibutylzinnoxid, Reaktionsprodukte von Zink-Salzen und organischen Carbonsäuren (Carboxylate) wie Zink(II)-2-ethylhexanoat oder Zink(II)-neodecanoat, Gemische aus Bismut- und Zinkcarboxylaten, Reaktionsprodukte von Calcium-Salzen und organischen Carbonsäuren (Carboxylate) wie Calcium-bis(2-ethylhexanoat) oder Calcium-neodecanoat, Reaktionsprodukte von Natrium-Salzen und organischen Carbonsäuren (Carboxylate) wie Natrium(2-ethylhexanoat) oder Natrium-neodecanoat, Gemische aus Calcium- und Natriumcarboxylaten, Reaktionsprodukte von Bismut-Salzen und organischen Carbonsäuren wie Bismut(III)-tris(2-ethylhexonat) und Bismut(III)-tris(neodecanoat) sowie Bismut-Komplexverbindungen, Organoblei-Verbindungen wie Blei-Octylat, Organovanadium-Verbindungen oder Mischungen davon, bevorzugt ausgewählt aus Bismut-, Zink-, Aluminium-, Calcium-, Natrium-, und/oder Zirkonium-Carboxylaten, ganz besonders bevorzugt ausgewählt aus Dibutylzinndilaurat (DBTL), Zinn(II)-2-ethylhexanoat (Zinnoctoat), Zink(II)-2-ethylhexanoat, Zink(II)-neodecanoat (Zinn-Neodecanoat), Bismut(III)-tris(2-ethylhexonat), Bismut(III)-tris(neodecanoat) (Bismut-Neodecanoat), Titan-tetraisopropylat, Titan-tetrabutylat, Aluminium-sec-butylat, Zirkonium-tetraisopropylat, Zirkonium-tetrabutylat, Calcium-bis(2-ethylhexanoat), Natrium(2-ethylhexanoat) oder Mischungen davon, äußerst bevorzugt Bismut(III)-tris(neodecanoat), Bismut(III)-tris(2-ethylhexonat) oder Mischungen davon, äußerst bevorzugt Bismut(III)-tris(neodecanoat) ist.

Eine bevorzugte Ausführungsform der Erfindung ist eine Zusammensetzung enthaltend die folgenden Komponenten:
- mindestens ein α,ω-Dihydroxypoiyorganosiioxan, welches eine kinematische Viskosität nach DIN 53019-1:2008-09 mindestes 50.000 cSt, ganz besonders bevorzugt eine kinematische Viskosität von etwa 80.000 cSt aufweist,
- mindestens einen Vernetzer aus der Gruppe ausgewählt bestehend aus Salicylato-Vernetzer, Oxim-Vernetzer, und/oder Acetat-Vernetzer,
- mindestens zwei Katalysatoren A und B, wobei der Katalysator A Heptaisobutyl POSS-Zinn(IV)-Ethoxid (SnPOSS) oder Heptaisobutyl POSS-Titanium(IV)-Ethoxid (TiPOSS) ist und Katalysator B ausgewählt ist aus der Gruppe bestehend aus Dibutylzinndilaurat (DBTL), Zinn(II)-2-ethylhexanoat (Zinnoctoat), Zink(II)-2-ethylhexanoat, Zink(II)-neodecanoat (Zinn-Neodecanoat), Bismut(III)-tris(2-ethylhexonat), Bismut(III)-tris(neodecanoat) (Bismut-Neodecanoat), Titan-tetraisopropylat, Titan-tetrabutylat, Aluminium-sec-butylat, Zirkonium-tetraisopropylat, Zirkonium-tetrabutylat oder Mischungen davon, äußerst bevorzugt Bismut(III)-tris(neodecanoat) ist.

Eine Dichstoffformulierung der erfindungsgemäßen Zusammensetzung umfasst die folgenden Komponenten:
- mindestens eine hydroxyfunktionalisierte Polyorganosiloxanverbindung,
- mindestens einen Vernetzer,
- mindestens zwei Katalysatoren A und B, wobei der Katalysator A aus der Gruppe der Metall-Siloxan-Silanol(-at)-Verbindungen ausgewählt ist und Katalysator B ausgewählt ist aus einer Gruppe von Katalysatoren, die Metall-Siloxan-Silanol(-at)-Verbindungen nicht umfasst,

- Weichmacher,
- Füllstoffe und
- Haftvermittler.

Eine weitere Dichstoffformulierung der erfindungsgemäßen Zusammensetzung umfasst die folgenden Komponenten:
- mindestens eine α,ω-Dihydroxypoiyorganoshoxanverbindung,
- mindestens einen Vernetzer,
- mindestens zwei Katalysatoren A und B, wobei der Katalysator A mindestens eine Metall-Siloxan-Silanol(-at)-Verbindung der allgemeinen Formel R*_{q}SiᵣOₛMₜ und wie hierin definiert ist aufweist,
   und Katalysator B ausgewählt ist aus der Gruppe von metall-organischen Verbindungen,
   - Weichmacher wie Polydiorganosiloxane ohne funktionelle Endgruppen, die sich somit von den erfindungsgemäß verwendeten hydroxyfunktionalisierten Polyorganosiloxanverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind,
   - Füllstoffe wie hochdisperse, pyrogene oder gefällte Kieselsäuren, Ruß, Quarzpulver, Kreide, und/oder Metallsalze oder Metalloxide, wie z.B. Titanoxide und
   - Haftvermittler wie Silanverbindungen mit organischen Substituenten am Siliciumatom, die sich von den erfindungsgemäß verwendeten hydroxyfunktionalisierten Polyorganosiloxanverbindungen unterscheiden.

Eine bevorzugte Dichstoffformulierung der erfindungsgemäßen Zusammensetzung umfasst die folgenden Komponenten:
- mindestens ein α,ω-Dihydroxypoiyorganosiioxan, welches eine kinematische Viskosität nach DIN 53019-1:2008-09 mindestes 50.000 cSt, ganz besonders bevorzugt eine kinematische Viskosität von etwa 80.000 cSt aufweist,
- mindestens einen Vernetzer aus der Gruppe ausgewählt bestehend aus Salicylato-Vernetzer, Oxim-Vernetzer, und/oder Acetat-Vernetzer,
- mindestens zwei Katalysatoren A und B, wobei der Katalysator A Heptaisobutyl POSS-Zinn(IV)-Ethoxid (SnPOSS) oder Heptaisobutyl POSS-Titanium(IV)-Ethoxid (TiPOSS) ist und Katalysator B ausgewählt ist aus der Gruppe bestehend aus Dibutylzinndilaurat (DBTL), Zinn(II)-2-ethylhexanoat (Zinnoctoat), Zink(II)-2-ethylhexanoat, Zink(II)-neodecanoat (Zinn-Neodecanoat), Bismut(III)-tris(2-ethylhexonat), Bismut(III)-tris(neodecanoat) (Bismut-Neodecanoat), Titan-tetraisopropylat, Titan-tetrabutylat, Aluminium-sec-butylat, Zirkonium-tetraisopropylat, Zirkonium-tetrabutylat oder Mischungen davon, äußerst bevorzugt Bismut(III)-tris(neodecanoat) ist,
   - Weichmacher wie Polydiorganosiloxane ohne funktionelle Endgruppen, die sich somit von den erfindungsgemäß verwendeten hydroxyfunktionalisierten Polyorganosiloxanverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind,
- Füllstoffe wie hochdisperse, pyrogene oder gefällte Kieselsäuren, Ruß, Quarzpulver, Kreide, und/oder Metallsalze oder Metalloxide, wie z.B. Titanoxide und
- Haftvermittler wie Silanverbindungen mit organischen Substituenten am Siliciumatom, die sich von den erfindungsgemäß verwendeten hydroxyfunktionalisierten Polyorganosiloxanverbindungen unterscheiden.

### Beispiele

### Beispiel I)

Die katalytische Wirkung von TiPOSS auf die feuchtigkeitsinduzierte Polymerisationsreaktion von hydroxyfunktionalisierten α,ω-Dihydroxypolyorganosiloxanen mit Vernetzern zur Bildung von Silikonpolymeren an sich ist bekannt. Überraschenderweise konnte jedoch festgestellt werden, dass die feuchtigkeitsinduzierte Polymerisationsreaktion von α,ω-Dihydroxypolyorganosiloxanen mit Vernetzern, die über hydrolysierbare Abgangsgruppen verfügen, durch die Verwendung eines Gemischs aus Heptaisobutyl POSS-Titanium(IV)-Ethoxid (TiPOSS) und Katalysatoren auf Basis von Titan, Bismut, Zink, Aluminium, Zirkonium und Zinn beschleunigt werden können. Es konnte überraschenderweise festgestellt werden, dass die unter Verwendung von Katalysatorgemischen aus TiPOSS und metallorganischen Verbindungen wie Bismut(III)-tris(neodecanoat)hergestellten Silikonpolymere vorteilhafte Eigenschaften in der Verarbeitung und in den Produkteigenschaften haben. Dies bedeutet im Wesentlichen ein längeres Verarbeitungsfenster bei insgesamt schnellerer Durchhärtung. Zudem werden weiche Produkte zugänglich, die über eine deutlich erhöhte Dehnung/Elastizität verfügen.

Die Untersuchung der Aktivität der Katalysatormischungen aus TiPOSS und den metallorganischen Verbindungen von Titan, Bismut, Zink, Aluminium, Zirkonium und Zinn für die Aushärtung von Silikonmassen erfolgte im Vergleich zur Aushärtung bei alleiniger Verwendung von TiPOSS. Hierfür wurden exemplarisch RTV-1 Silikon-Basisrezepturen verwendet, aufgebaut aus einem α,ω-Dihydroxy-polydimethylsiloxan (80.000 cSt) und einem Polydimethylsiloxan Weichmacher (100 cSt). Als Vernetzter kamen Oxim-abspaltende Silane (Vinyl-tris(2-pentanonoximo)silan und Methyl-tris(2-pentanonoximo)silan), eine Mischung aus Vinyl-tris(2-propanonoximo)silan, Methoxyvinyl-di-(2-propanonoximo)silan, Dimethoxyvinyl-(2- propanonoximo)silan sowie ein Acetat-abspaltendes Silan Methyltriacetoxysilan zum Einsatz.

Auf das Zumischen von Haftvermittlern (z. B. 3-Aminopropyl-trimethoxysilan) und einer pyrogenen Kieselsäure wurde zunächst verzichtet, um den Einfluss dieser Verbindungen auf die Aushärtegeschwindigkeit auszuschließen. Der Einfluss von Haftvermittler und Kieselsäure auf den Aushärteprozess wurde anhand einer Beispielrezeptur unter Verwendung eines Katalysatorgemischs aus TiPOSS und Bismut(III)-tris(neodecanoat)verifiziert.

### Experimenteller Teil:

Verwendete Rohstoffe für die Herstellung der Silikonpolymere SP:
α,ω-Dihydroxypolydimethylsiloxan, 80.000 cSt (CAS, 70131-67-8)
Polydimethylsiloxan, 100 cSt, Sigma-Aldrich (CAS, 63148-62-9)
Vinyl-tris(2-pentanonoximo)silan, OS 1600, Nitrochemie, (CAS, 37859-55-5)
Methyl-tris(2-pentanonoximo)silan, OS 2600, Nitrochemie (CAS58190-62-8)
Mischung aus Vinyl-tris(2-propanonoximo)silan, Methoxyvinyl-di-(2-propanonoximo)silan, Dimethoxyvinyl-(2-propanonoximo)silan, LM 100, Nitrochemie (CAS, 795571-44-1)
Methyltriacetoxysilan, TCI Chemicals (CAS 4253-34-3)
Pyrogene Kieselsäure, 200 m2/g, Evonik (CAS 112945-52-5)
TiPOSS, 20 %ig, gelöst in Hexamoll DINCH, BASF, (CAS 166412-78-8, DINCH) Dibutylzinndilaurat, DBTL; Kosmos 19, Evonik, (CAS 7758-7)
Bismut-Neodecanoat, Kat 315EU, Borchers (CAS 34364-26-6)
Zink(II)-2-ethylhexanoat, Kat 22, Borchers (CAS 301-10-0)
Titan-tetraisopropylat, TCI Chemicals (CAS 546-68-9)
Titan-tetrabutylat, TCI Chemicals (CAS 5593-70-4)
Aluminium-tri-sec-butylat, TCI Chemicals (CAS 2269-22-9)
Zirkonium-tetraisopropylat, TCI Chemicals (CAS 23519-77-9)
Zirkonium-tetrabutylat, TCI Chemicals (CAS 1071-76-7)
3-Aminopropyltrimethoxysilan (AMMO), TCI Chemicals (CAS 13822-56-5)

### Herstellung der für die Aushärteversuche benötigten Silikonmassen SP1-SP5, SP16-SP39, (Pentanonoximvernetzer) und SP6-SP10 (Propanonoximvernetzer)

α,ω-Dihydroxypolydimethylsiloxan 80.000 cSt und Polydimethylsiloxan 100cSt wurden unter Luftabschluss mit den Vernetzern Vinyl-tris(2-pentanonoximo)silan und Methyl-tris(2-pentanonoximo)silan (SP1-SP5, SP16-SP39) oder einer Mischung aus Vinyl-tris-(2-propanonoximo)silan, Methoxyvinyl-di-(2- propanonoximo)silan und Dimethoxyvinyl-(2-propanonoximo)silan (SP6-SP10) verrührt.

### Herstellung der für die Aushärteversuche benötigten Silikonmassen SP11 - SP15 (Acetatvernetzer)

α,ω-Dihydroxypolydimethylsiloxan 80.000 cSt und Polydimethylsiloxan 100cSt wurden unter Luftabschluss verrührt. In die erhaltene Masse wurde TiPOSS und die angegebene Gemischmenge aus TiPOSS und Bismut(III)-tris(neodecanoat)sowie TiPOSS und DBTL nach Tabelle 1 durch Verrühren eingearbeitet.

### Prüfung des Aushärteverhaltens der Silikonmassen SP1 - SP10, SP16-SP35 und SP36-SP39

Die Prüfung des Aushärteverhaltens der Silikonmassen SP1 - SP10, SP16-SP35 und SP36-SP39 erfolgte durch die Bestimmung der Hautbildungszeit, Klebfreizeit KF und Durchhärtezeit an ~ 4 mm starken Proben bei 23°C/50 % r. Lf. Die Proben wurden mit TiPOSS, DBTL, Bismut-Neodecanoat, Zink(II)-2-ethylhexanoat, Titan-tetraisopropylat, Titan-tetrabutylat, Aluminiumtri-sec-butylat, Zirkonium-tetraisopropylat, Zirkonium-tetrabutylat und Gemischen aus TiPOSS und den genannten Katalysatoren nach Tabelle 1, Tabelle 2 und Tabelle 3 angesetzt und ausgehärtet.

### Prüfung des Aushärteverhaltens der Silikonmassen SP11 - SP15

Die Prüfung des Aushärteverhaltens der Silikonmassen SP11 - SP15 erfolgte durch die Bestimmung der Hautbildungszeit, Klebfreizeit KF und Durchhärtezeit an ~ 4 mm starken Proben bei 23°C/50 % r. Lf. Die Proben wurden mit der entsprechenden Vernetzer-Menge Methyltriacetoxysilan verrührt und ausgehärtet.

### Herstellung und Prüfung des Aushärteverhaltens der Silikonmassen SP40 - SP43

α,ω-Dihydroxypolydimethylsiloxan 80.000 cSt und Polydimethylsiloxan 100cSt wurden unter Luftabschluss mit den Vernetzern Vinyl-tris(2-pentanonoximo)silan und Methyl-tris(2-pentanonoximo)silan (SP40 und SP41) oder einer Mischung aus Vinyl-tris-(2-propanonoximo)silan, Methoxyvinyl-di-(2-propanonoximo)silan und Dimethoxyvinyl-(2-propanonoximo)silan (SP42-SP43) verrührt. Anschließend wurde Kieselsäure, TiPOSS und die angegebene Gemischmenge aus TiPOSS und Bismut(III)-tris(neodecanoat)sowie Haftvermittler eingerührt. Die erhaltenen Silikonpolymere wurden bei 23°C/50 % r. Lf. ausgehärtet und die Hautbildungszeit, Klebfreizeit KF und Durchhärtezeit an ~ 4 mm starken Proben bestimmt.

**Tabelle 1: Bestandteile der Silikonmassen SP1 - SP15, Aushärteverhalten bei 23°C/50 % r. Lf. und techn. Werte**

| | **Pentanonoxim-Vernetzer** | | | | | **Propanonoxim-Vernetzer** | | | | | **Acetat-Vernetzer** | | | | |
|---|---|---|---|---|---|---|---|---|---|---|---|---|---|---|---|
| **Komponente** | **SP1** | **SP2** | **SP3** | **SP4** | **SPS** | **SP6** | **SP7** | **SP8** | **SP9** | **SP10** | **SP11** | **SP12** | **SP13** | **SP14** | **SP15** |
| α,ω-Dihydroxydimethylpolysiloxan 80.000 cSt | 62,1 | 62 | 62,1 | 62,1 | 62,1 | 62,1 | 62 | 62 | 62,1 | 62,1 | 62,1 | 62,1 | 62,1 | 62,1 | 62,1 |
| Polydimethylsiloxan 100cSt | 33,4 | 33 | 33,4 | 33,4 | 33,4 | 33,9 | 34 | 34 | 33,9 | 33,9 | 33,9 | 33,9 | 33,9 | 33,9 | 33,9 |
| Vinyl-tris(2-penta nonoxi mo)-silan | 2,2 | 2,2 | 2,2 | 2,2 | 2,2 | - | - | - | - | - | - | - | - | - | - |
| Methyl-tris (2-pentanonoximo)-silan | 2,2 | 2,2 | 2,2 | 2,2 | 2,2 | - | - | - | - | - | - | - | - | - | - |
| Mischung aus Vinyltris(2-propanonoximo)sil an; Methoxyvinyldi(2-propanonoximo)sil an, Dimethoxyvinyl-(2-propanonoximo)sil an | - | - | - | - | - | 4 | 4 | 4 | 4 | 4 | - | - | - | - | - |
| Methyltriacetoxysilan | - | - | - | - | - | - | - | - | - | - | 4 | 4 | 4 | 4 | 4 |
| Ti POSS | - | - | - | - | - | - | - | - | - | - | - | - | - | - | - |
| DBTL | 0,05 | 0,1 | 0,05 | 0,05 | 0,05 | 0,05 | 0,1 | 0,05 | 0,05 | 0,05 | 0,0025 | 0,005 - | 0,005 | 0,0025 | 0,0025 |
| Bismut-Neodecanoat | - | - | - | 0,05 | 0,083 | - | - | - | 0,05 | 0,083 | - | - | - | 0,0025 | 0,004 |
| | | | | | | | | | | | | | | | |
| Hautbildungszeit [min]¹ | 150 | 100 | 60 | 120 | 100 | 300 | 180 | 75 | 240 | 180 | 17 | 12 | 10 | 12 | 12 |
| Klebfreizeit [min]² | 360 | 300 | 150 | 330 | 300 | 540 | 480 | 180 | 540 | 480 | 80 | 60 | 50 | 80 | 60 |
| Durchhärtezeit [h]³ | 24 | 24 | 20 | 20 | 16 | 48 | 48 | 22 | 30 | 24 | 30 | 30 | 24 | 24 | 22 |
| | | | | | | | | | | | | | | | |
| Shore A [nach 7 d]⁴ | 10 | 10 | 6 | 6 | 5 | 8 | 8 | 8 | 4 | 3 | 7 | 6 | 7 | 6 | 4 |
| Zugfestigkeit [kPa]⁵ | - | 160 | - | - | 130 | - | 180 | - | - | 120 | - | 113 | - | - | 105 |
| Bruchdehnung [%]⁵ | - | 250 | - | - | 400 | - | 320 | - | - | 450 | - | 300 | - | - | 325 |

| | | | | | | | | | | | | | | | |
|---|---|---|---|---|---|---|---|---|---|---|---|---|---|---|---|
| - nicht bestimmt ¹ Zeitdauer, bei der die Polymeroberfläche durch leichtes Berühren mit einem Holzspatel irreversibel angehoben wird. ² Zeitdauer, bei der die Polymeroberfläche nach leichter Berührung mit einem Holzspatel keinerlei Klebeneigung besitzt. ³ Zeitdauer, bei der eine 4 mm dicke Polymerprobe im Inneren nicht mehr gelartig und komplett durchgehärtet ist. ⁴ ASTM D2240-15 ⁵ in Anlehnung an DIN 53504: 2017-03, S2-Prüfgeometrie | | | | | | | | | | | | | | | |

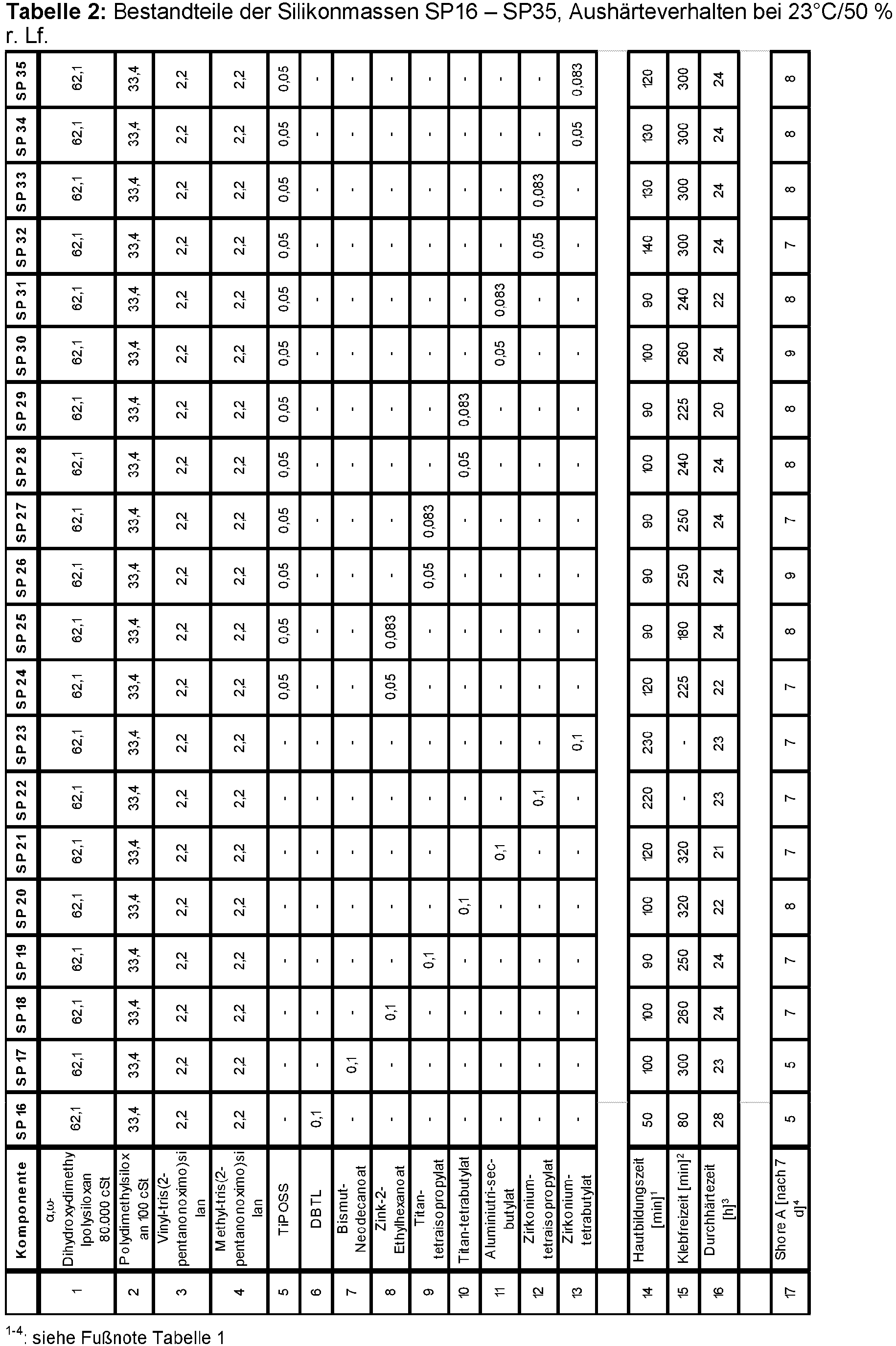

Tabelle 3 beschreibt die Aushärtung von Silikonpolymeren, die Katalysatorsysteme enthalten, die neben TiPOSS und DBTL noch eine dritte Metallkatalysatorkomponente aufweisen (SP36-SP39). Als dritte Katalysatorkomponente wurden hierfür Bismut-Neodecanoat, Titantetrabutylat, Aluminiumtri-sec-butylat und Zirkoniumtetrabutylat verwendet, da diese als Einzelkatalysatoren über eine gesteigerte katalytische Aktivität. Auch hier ist insgesamt zu beobachten, dass Hautbildungs-, Klebfrei- sowie Durchhärtezeit verkürzt werden. Allerdings resultiert kein verlängertes Verarbeitungsfenster.

**Tabelle 3: Bestandteile der Silikonmassen SP36 - SP39, Aushärteverhalten bei 23°C/50 % r. Lf**

| | **Komponente** | **SP36** | **SP37** | **SP38** | **SP39** |
|---|---|---|---|---|---|
| 1 | α,ω-Dihydroxy-dimethyl-polysiloxan 80.000 cSt | 62,1 | 62,1 | 62,1 | 62,1 |
| 2 | Polydimethylsiloxan 100 cSt | 33,4 | 33,4 | 33,4 | 33,4 |
| 3 | Vinyl-tris(2-pentanonoximo)silan | 2,2 | 2,2 | 2,2 | 2,2 |
| 4 | Methyl-tris(2-pentanonoximo)silan | 2,2 | 2,2 | 2,2 | 2,2 |
| 5 | TiPOSS | 0,05 | 0,05 | 0,05 | 0,05 |
| 6 | DBTL | 0,025 | 0,025 | 0,025 | 0,025 |
| 7 | Bismut-Neodecanoat | 0,025 | - | - | 0,025 |
| 8 | Titan-tetrabutylat | - | 0,025 | - | - |
| 9 | Aluminiutri-sec-butylat | - | - | 0,025 | - |
| 10 | Zirkonium-tetrabutylat | - | - | - | 0,025 |
| | | | | | |
| 11 | Hautbildungszeit [min]¹ | 90 | 60 | 90 | 100 |
| 12 | Klebfreizeit [min]² | 210 | 180 | 200 | 220 |
| 13 | Durchhärtezeit [h]³ | 24 | 20 | 20 | 22 |
| | | | | | |
| 14 | Shore A [nach 7 d]⁴ | 10 | 7 | 6 | 4 |

| | | | | | |
|---|---|---|---|---|---|
| ¹⁻⁴: siehe Fußnote Tabelle 1 | | | | | |

In Tabelle 4 ist die Aushärtecharakteristik sowie die techn. Werte von industrieüblichen Silikonpolymerrezepturen (auch Dichtstoffen) aufgeführt, die zusätzlich zu den in Tabelle 1-3, SP2, SP5, SP7 und SP10 angegeben Rezepturbestandteilen Kieselsäure und Haftvermittler aufweisen. In diesen Fällen konnte ebenfalls eine schnellere Durchhärtung der TiPOSS/Bismut(III)-tris(neodecanoat)festgestellt werden. Es werden weichere Produkte erhalten, bei gleichzeitig verbesserten Dehnungseigenschaften.

**Tabelle 4: Aushärteverhalten und techn. Werte von exemplarischen Silikonrezepturen, ermittelt bei 23°C/50 % r. Lf.**

| | **Komponente** | **SP40** | **SP41** | **SP42** | **SP43** |
|---|---|---|---|---|---|
| 1 | α,ω-Dihydroxy-dimethyl-polysiloxan 80.000 cSt | 56,1 | 56,1 | 62,1 | 62,1 |
| 2 | Polydimethylsiloxan 100 cSt | 33,4 | 33,4 | 33,9 | 33,9 |
| 3 | Vinyl-tris(2-pentanonoximo)silan | 2,2 | 2,2 | - | - |
| 4 | Methyl-tris(2-pentanonoximo)silan | 2,2 | 2,2 | - | - |
| 5 | Mischung aus Vinyl-tris(2-propanonoximo)silan; Methoxyvinyl-di-(2-propanonoximo)silan, Dimethoxyvinyl-(2-propanonoximo)silan | - | - | 4 | 4 |
| | | | | | |
| 6 | Kieselsäure 200 m²/g | 5 | 5 | 5 | 5 |
| 7 | 3-Aminopropyltrimethoxysilan | 1 | 1 | 1 | 1 |
| 8 | TiPOSS | 0,1 | 0,05 | 0,1 | 0,05 |
| 9 | Bismut-Neodecanoat | - | 0,083 | - | 0,083 |
| | | | | | |
| 10 | Hautbildungszeit [min]¹ | 90 | 90 | 180 | 180 |
| 11 | Klebfreizeit [min]² | 280 | 280 | 450 | 420 |
| 12 | Durchhärtezeit [h]³ | 22 | 16 | 24 | 20 |
| | | | | | |
| 13 | Shore A [nach 7 d]⁴ | 10 | 7 | 6 | 4 |
| 14 | Zugfestigkeit [kPa]⁵ | 250 | 250 | 320 | 300 |
| 15 | Bruchdehnung [%]⁵ | 375 | 425 | 600 | 700 |

| | | | | | |
|---|---|---|---|---|---|
| ¹⁻⁴: siehe Fußnote Tabelle 1 | | | | | |

Hieraus ergeben sich für den Anwender bei der katalytischen Modifizierung von TiPOSS enthaltenen Silikonpolymeren bei der zusätzlichen Verwendung von Metallkatalysatoren wie Bismut-Neodecanoat, Zink(II)-2-ethylhexanoat, Titantetraisopropylat, Titantetrabutylat, Alumniumtri-sec-butylat, Zirkoniumtetraisopropylat, Zirkoniumtetrabutylat oder Dibutylzinndilaurat folgende Vorteile:
1. Die zusätzliche Zugabe von Bismut(III)-tris(neodecanoat)bewirkt eine schnellere Aushärtung bzw. Durchhärtung der Silikonpolymere; die Hautbildungs- und Klebfreizeit werden weniger stark beschleunigt als bei Zugabe von TiPOSS. Dies bedeutet ein größeres Verarbeitungsfenster, da die Polymere im Bereich der Hautbildungszeit noch manipuliert werden können.
2. Bei zusätzlicher Verwendung von Bismut- Neodecanoat werden signifikant weichere Produkte erhalten, die zudem über ein deutlich höheres Bruchdehnungsniveau verfügen. Dies insbesondere in Anwendungsfällen von Vorteil, in denen Bauteile abgedichtet, verklebt oder verbunden werden müssen, die starke oder entgegengesetzte Bewegung ausführen.
3. Die zusätzliche Zugabe von Dibutylzinndilaurat zu Silikonpolymermischungen, die TiPOSS enthalten, bewirkt insgesamt eine schnellere Aushärtung bzw. Durchhärtung der Silikonpolymere, als bei alleiniger Verwendung von TiPOSS.
4. Die Verwendung von Metallkatalysatoren wie Zink(II)-2-ethylhexanoat, Titantetraisopropylat, Titantetrabutylat, Alumniumtri-sec-butylat, Zirkoniumtetraisopropylat und Zirkoniumtetrabutylat im Gemisch mit TiPOSS ist geeignet, um die von der alleinigen Verwendung von TiPOSS in Silikonpolymeren bekannte Aushärtecharakteristik vollumfänglich abzudecken.

### Fazit:

Die Hautbildungs-, Klebfrei- und Durchhärtezeit in Silikonpolymer-Systemen, die mit einem Pentanonoxim-Vernetzer (SP1), Propanonoxim-Vernetzer (SP6) oder Acetoxy-Vernetzer (SP11) unter Einsatz von TiPOSS als Katalysator hergestellt wurden, sind in Tabelle 1 aufgeführt. Weitere Zugabe von TiPOSS zu SP1, SP6 (jeweils 0,05 Gewichtsteile) oder SP11 (0,0025 Gewichtsteile), um beispielsweise ein schnelleres Aushärteverhalten zu initiieren (SP2, SP7 und SP12), führt zur Reduktion der Hautbildungs- und Klebfreizeit, bei ansonsten unveränderter Durchhärtezeit.

Das Aushärteverhalten von entsprechenden Silikonpolymer-Systemen, die in Analogie zu SP2 unter ausschließlicher Verwendung der Metall-Katalysatoren Dibutylzinndilaurat, Bismut-Neodecanoat, Zink(II)-2-ethylhexanoat, Titantetraisopropylat, Titantetrabutylat, Aluminiumtri-sec-butylat, Zirkoniumtetraisopropylat und Zirkoniumtetrabutylat SP16-SP23 hergestellt wurden, ist in Tabelle 2 abgebildet. Hieraus wird ersichtlich, dass Silikonpolymere unter Verwendung von Bismut(III)-tris(neodecanoat)(SP17), Titantetrabutylat (SP20), Aluminiumtri-sec.-butylat und Zirkoniumtetrabutylat zu einer schnelleren Durchhärtung führen, bei vergleichsweise gleichen bzw. verlängerten Zeiten für die Hautbildung und Klebfreizeit. Das DBTL-katalysierte Silikonpolymer (SP16) weist im Vergleich zu SP2 eine schnellere Hautbildungs- und Klebfreizeit auf, bei langsamerer Durchhärtung.

Das Aushärteverhalten von Silikonpolymeren, auf Basis von Metallkatalysatorgemischen aus TiPOSS und Dibutylzinndilaurat, Bismut-Neodecanoat, Zink(II)-2-ethylhexanoat, Titantetraisopropylat, Titantetrabutylat, Alumniumtri-sec-butylat, Zirkoniumtetraisopropylat sowie Zirkoniumtetrabutylat ist in SP3-SP5, S8-SP10, SP24-SP35 aufgelistet. Die Zugabe von DBTL zu SP1, SP6 (0,05 Gewichtsteile) oder SP11 (0,0025 Gewichtsteile) führt insgesamt zu einem beschleunigten Aushärteverhalten, mit einer vergleichsweise verkürzten Durchhärtezeit (SP3, SP8 und SP13). Besonders signifikant ist die Zugabe von Bismut(III)-tris(neodecanoat)zu SP1, SP6 (0,05 Gewichtsteile) oder SP11 (0,0025 Gewichtsteile). Diese führt gegenüber TiPOSS und allen anderen untersuchten TiPOSS/MetallkatalysatorGemischen zu einer geringeren Reduktion von Hautbildungs- und Klebfreizeit, bei signifikanter Absenkung der Durchhärtezeit (SP4, SP9 und SP14). Insgesamt betrachtet, lässt sich die Aushärtecharakteristik durch die in Tabelle 1 und Tabelle 2 genannten Katalysatorgemische aus TiPOSS und Dibutylzinndilaurat, Bismut-Neodecanoat, Zink(II)-2-ethylhexanoat, Titantetraisopropylat, Titantetrabutylat, Alumniumtri-sec-butylat, Zirkoniumtetraisopropylat sowie Zirkoniumtetrabutylat in einem weiten Bereich steuern.

Eine weitere Steigerung der Bismut-Neodecanoat-Menge in SP5, SP9 (0,033 Gewichtsteile) und SP15 (0,0015 Gewichtsteile) resultiert in einer weiteren Verkürzung der Hautbildungs- und Klebfreizeit. Ein Vergleich mit SP2, SP7 und SP12 zeigt, dass diese Werte auf gleichem Niveau liegen, bei gleichzeitig deutlich geringeren Durchhärtezeiten für SP5, SP10 und SP15. Diese Polymere sind neben den genannten Aushärteeigenschaften signifikant weicher und weisen darüber hinaus ein wesentlich höheres Dehnungsniveau auf (Besonders ausgeprägt in Systemen, die auf der Basis der Oximvernetzer (SP5 und SP 10) erhalten wurden.

## Patentansprüche

1. Zusammensetzung enthaltend mindestens eine hydroxyfunktionalisierte Polyorganosiloxanverbindung, mindestens einen Vernetzer und mindestens zwei Katalysatoren A und B, wobei der Katalysator A aus der Gruppe der Metall-Siloxan-Silanol(-at)-Verbindungen ausgewählt ist und Katalysator B ausgewählt ist aus einer Gruppe von Katalysatoren, die Metall-Siloxan-Silanol(-at)-Verbindungen nicht umfasst.

2. Zusammensetzung nach Anspruch 1, **dadurch gekennzeichnet, dass** der Katalysator B ausgewählt ist aus der Gruppe von metall-organischen Verbindungen.

3. Zusammensetzung nach Anspruch 1 oder 2, **dadurch gekennzeichnet, dass** der Katalysator B ausgewählt ist aus der Gruppe bestehend aus Tetraalkyltitanaten, wie Tetramethyltitanat, Tetraethyltitanat, Tetra-n-propyltitanat, Tetra-isopropyltitanat, Tetra-n-butyltitanat, Tetra-isobutyltitanat, Tetra-sec-butyltitanat, Tetraoctyltitanat, Tetra-(2-ethylhexyl)-titanat, Dialkyltitanate ((RO)₂TiO₂, worin R z.B. für iso-Propyl, n-Butyl, iso-Butyl steht), wie Isopropyl-n-butyltitanat; Titan-Acetylacetonat-Chelate, wie Di-isopropoxy-bis(acetylacetonat)titanat, Di-isopropoxy-bis(ethylacetylacetonat)titanat, Di-n-butyl-bis(acetylacetonat)titanat, Di-n-butyl-bis(ethylacetoacetat)titanat, Tri-isopropoxid-bis(acetylacetonat)titanat, Zirkontetraalkylate, wie Zirkontetraethylat, Zirkontetrabutylat, Zirkontetrabutyrat, Zirkontetrapropylat, Zirkoncarboxylate, wie Zirkondiacetat; Zirkon-Acetylacetonat-Chelate, wie Zirkontetra(acetylacetonat), Tributoxyzirkonacetylacetonat, Dibutoxyzirkon(bisacetylacetonat), Aluminiumtrisalkylate, wie Aluminiumtriisopropylat, Aluminium-sec-butyat; Aluminium-Acetylacetonat-Chelate, wie Aluminiumtris(acetylacetonat) und Aluminiumtris(ethylacetylacetonat), Organozinnverbindungen wie Dibutylzinndilaurat (DBTL), Dibutylzinnmaleat, Dibutylzinndiacetat, Zinn(II)-2-ethylhexanoat (Zinnoctoat), Zinn-Naphthenat, Dimethylzinndineodecanoat, Dioctylzinndineodecanoat, Dimethylzinndioleat, Dioctylzinndilaurat, Dimethylzinnmercaptide, Dibutylzinnmercaptide, Dioctylzinnmercaptide, Dibutylzinndithioglycolat, Dioctylzinnglycolat, Dimethylzinnglycolate, eine Lösung aus Dibutylzinnoxid, Reaktionsprodukte von Zink-Salzen und organischen Carbonsäuren (Carboxylate) wie Zink(II)-2-ethylhexanoat oder Zink(II)-neodecanoat, Gemische aus Bismut- und Zinkcarboxylaten, Reaktionsprodukte von Calcium-Salzen und organischen Carbonsäuren (Carboxylate) wie Calcium-bis(2-ethylhexanoat) oder Calcium-neodecanoat, Reaktionsprodukte von Natrium-Salzen und organischen Carbonsäuren (Carboxylate) wie Natrium(2-ethylhexanoat) oder Natrium-neodecanoat, Gemische aus Calcium- und Natriumcarboxylaten, Reaktionsprodukte von Bismut-Salzen und organischen Carbonsäuren wie Bismut(III)-tris(2-ethylhexonat) und Bismut(III)-tris(neodecanoat) sowie Bismut-Komplexverbindungen, Organoblei-Verbindungen wie Blei-Octylat, Organovanadium-Verbindungen oder Mischungen davon, bevorzugt ausgewählt aus Bismut-, Zink-, Aluminium-, Calcium-, Natrium-, und/oder Zirkonium-Carboxylaten, ganz besonders bevorzugt ausgewählt aus Dibutylzinndilaurat (DBTL), Zinn(II)-2-ethylhexanoat (Zinnoctoat), Zink(II)-2-ethylhexanoat, Zink(II)-neodecanoat (Zinn-Neodecanoat), Bismut(III)-tris(2-ethylhexonat), Bismut(III)-tris(neodecanoat) (Bismut-Neodecanoat), Titan-tetraisopropylat, Titan-tetrabutylat, Aluminium-sec-butylat, Zirkonium-tetraisopropylat, Zirkonium-tetrabutylat, Calcium-bis(2-ethylhexanoat), Natrium(2-ethylhexanoat) oder Mischungen davon, äußerst bevorzugt Bismut(III)-tris(neodecanoat), Bismut(III)-tris(2-ethylhexonat) oder Mischungen davon, äußerst bevorzugt Bismut(III)-tris(neodecanoat) ist.

4. Zusammensetzung nach einem der vorstehenden Ansprüche, **dadurch gekennzeichnet, dass** die hydroxyfunktionalisierte Polyorganosiloxanverbindung ein α,ω-Dihydroxypoylorganosiloxan ist.

5. Zusammensetzung nach Anspruch 4, **dadurch gekennzeichnet, dass** das α,ω-Dihydroxypolyorganosiloxan eine kinematische Viskosität nach DIN 53019-1:2008-09 von mindestens 10.000 cSt aufweist, bevorzugt mindestens 20.000 cSt, besonders bevorzugt mindestes 50.000 cSt, ganz besonders bevorzugt eine kinematische Viskosität von etwa 80.000 cSt aufweist.

6. Zusammensetzung nach einem der vorstehenden Ansprüche, **dadurch gekennzeichnet, dass** der Vernetzer ausgewählt ist aus der Gruppe bestehend aus Oxim-Vernetzern wie Vinyl-tris(2-pentanonoximo)silan, Ethyl-tris(2-propanonoxim)silan, Methyl-tris(2-pentanonoximo)silan, Vinyl-tris(2-propanonoximo)silan, Methoxyvinyl-di-(2-propanonoximo)silan, Dimethoxyvinyl-(2-propanonoximo)silan, Methyl-tris(2-butanonoximo)silan, Phenyl-tris(2-butanonoximo)silan, Vinyl-tris(2-butanonoximo)silan und Tetra(2-butanonoximo)silan oder Mischungen daraus, Acetat-Vernetzern wie Methyltriacetoxysilan, Etylhyltriacetoxysilan, Propyltriacetoxysilan oder Vinyltriacetoxysilan oder Mischungen daraus, Lactato-Vernetzern wie Tris(ethyllactato)methylsilan oder Tris(ethyllactato)vinylsilan oder Mischungen daraus, Salicylato-Vernetzern wie Tris(2-ethylhexylsalicylato)vinylsilan, Tris(2-ethylhexylsalicylato)methylsilan, Tris(2-ethylhexylsalicylato)propylsilan oder Mischungen daraus oder eine Mischungen aus allen vorgenannten Vernetzern.

7. Zusammensetzung nach einem der vorstehenden Ansprüche, **dadurch gekennzeichnet, dass** die Metall-Siloxan-Silanol(-at)-Verbindung die allgemeine Formel R^{*}_{q}SiᵣOₛMₜ aufweist, wobei jeder R^{*} unabhängig voneinander ausgewählt ist aus der Gruppe bestehend aus optional substituiertem C1- bis C20-Alkyl, optional substituiertem C3- bis C6-Cycloalkyl, optional substituiertem C2- bis C20-Alkenyl, optional substituiertem C6- bis C10-Aryl, -OH und -O-(C1- bis C10-Alkyl), jedes M unabhängig voneinander ausgewählt sind aus der Gruppe bestehend aus s- und p-Block Metallen, d- und f-Block Übergangsmetallen, Lanthanid- und Actinidmetallen und Halbmetallen, insbesondere aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi,
q eine ganze Zahl von 4 bis 19 ist,
r eine ganze Zahl von 4 bis 10 ist,
s eine ganze Zahl von 8 bis 30 ist, und
t eine ganze Zahl von 1 bis 8 ist.

8. Zusammensetzung nach Anspruch 7 **dadurch gekennzeichnet, dass** die Metall-Siloxan-Silanol(-at)-Verbindung ein Metall-Silsesquioxan der Struktur (IV) ist, 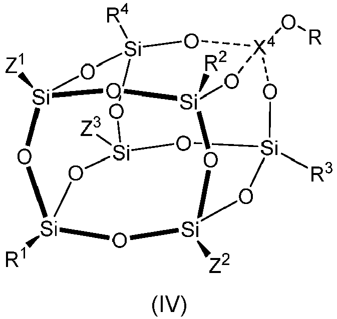 wobei
X4 ausgewählt aus der Gruppe ausgewählt ist aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonders bevorzugt aus der Gruppe bestehend aus Ti und Sn, ganz besonders bevorzugt Ti ist, und
X⁴ mit OR verknüpft ist, wobei R ausgewählt ist aus der Gruppe bestehend aus -H, Methyl, -Ethyl, -Propyl, -Butyl, -Octyl, -Isopropyl, und -Isobutyl, Z¹, Z² und Z³ jeweils unabhängig voneinander C1- bis C20-Alkyl, C3- bis C8-Cycloalkyl, C2- bis C20-Alkenyl und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-, und R¹, R², R³ und R⁴ jeweils unabhängig voneinander C1- bis C20-Alkyl, C3- bis C8-Cycloalkyl, C2- bis C20-Alkenyl, und C5- bis C10-Aryl bedeuten, insbesondere ausgewählt sind aus der Gruppe bestehend aus Methyl-, Ethyl-, Propyl-, Isopropyl-, Butyl-, Isobutyl-, Hexyl-, Heptyl-, Octyl-, Vinyl-, Allyl-, Butenyl- und Phenyl-, und Benzyl-.

9. Zusammensetzung nach Anspruch 8 **dadurch gekennzeichnet, dass** die Metall-Siloxan-Silanol(-at)-Verbindung ein Metall-Silsesquioxan der Struktur (IVb) ist, 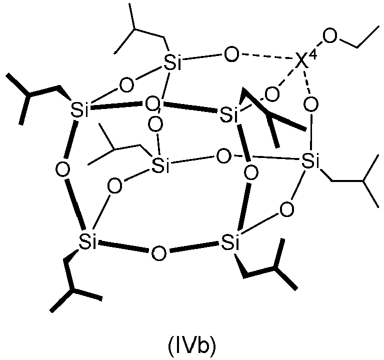 wobei
X⁴ ausgewählt ist aus der Gruppe bestehend aus Metallen der 1., 2., 3., 4., 5., 8., 10. und 11. Nebengruppe und Metallen der 1., 2., 3., 4. und 5. Hauptgruppe, bevorzugt aus der Gruppe bestehend aus Na, Zn, Sc, Nd, Ti, Zr, Hf, V, Fe, Pt, Cu, Ga, Sn und Bi; insbesondere bevorzugt aus der Gruppe bestehend aus Zn, Ti, Zr, Hf, V, Fe, Sn und Bi, ganz besonders bevorzugt aus der Gruppe bestehend aus Ti (ergo Heptaisobutyl POSS-Titanium(IV)-Ethoxid (TiPOSS) ist) und Sn (ergo Heptaisobutyl POSS-Zinn(IV)-Ethoxid (SnPOSS) ist), ganz besonders bevorzugt Ti (ergo Heptaisobutyl POSS-Titanium(IV)-Ethoxid (TiPOSS) ist) ist.

10. Zusammensetzung nach einem der vorstehenden Ansprüche **dadurch gekennzeichnet, dass** die Metall-Siloxan-Silanol(-at)-Verbindung in einer molaren Konzentration im Bereich von 0,000001 bis 0,01 mol/kg, insbesondere von 0,00005 bis 0,005 mol/kg oder 0.00007 bis 0,001 mol/kg, jeweils bezogen auf das Gesamtgewicht der Zusammensetzung, vorliegt.

11. Zusammensetzung nach einem der vorstehenden Ansprüche **dadurch gekennzeichnet, dass** die Metall-Siloxan-Silanol(-at)-Verbindung mit einem Gewichtsanteil von 0,001 bis 0,5 %, vorzugsweise von 0,006 bis 0,1 % vorliegt.

12. Zusammensetzung nach einem der vorstehenden Ansprüche **dadurch gekennzeichnet, dass** der Vernetzer ausgewählt ist der Gruppe bestehend aus Oxim-Vernetzern wie Vinyl-tris(2-pentanonoximo)silan, Methyl-tris(2-pentanonoximo)silan, Vinyl-tris(2-propanonoximo)silan, Methoxyvinyl-di-(2-propanonoximo)silan und Dimethoxyvinyl-(2-propanonoximo)silan oder Mischungen daraus oder Acetat-Vernetzern wie Methyltriacetoxysilan und Katalysator A ausgewählt aus der Gruppe bestehend aus einkernigen metallisierten Silsesquioxanen der Strukturformel (IV) oder Mischungen daraus und Katalysator B ausgewählt ist aus der Gruppe bestehend aus Dibutylzinndilaurat (DBTL), Zinn(II)-2-ethylhexanoat (Zinnoctoat), Zink(II)-2-ethylhexanoat, Zink(II)-neodecanoat, Calcium-bis(2-ethylhexanoat), Natrium(2-ethylhexanoat), Bismut(III)-tris(2-ethylhexonat), Bismut(III)-tris(neodecanoat), Titan-tetraisopropylat, Titan-tetrabutylat, Aluminium-sec-butylat, Zirkonium-tetraisopropylat, Zirkonium-tetrabutylat oder Mischungen daraus.

13. Zusammensetzung nach einem der vorstehenden Ansprüche **dadurch gekennzeichnet, dass** die Katalysatoren A und B in einem Verhältnis zueinander zwischen 1:10 und 10:1 vor, weiter bevorzugt liegen die Katalysatoren A und B in einem Verhältnis zwischen 1:8 und 8:1 zueinander vor, insbesondere bevorzugt liegen die Katalysatoren A und B in einem Verhältnis zwischen 1:5 und 5:1 zueinander vor, weiter insbesonders bevorzugt liegen die Katalysatoren A und B in einem Verhältnis zwischen 1:2 und 2:1 zueinander vor, ganz besonders bevorzugt in einem Verhältnis von 0,9:1,1 und 1,1:0,9 zueinander, äußerst bevorzugt in einem Verhältnis von 1:1 zueinander vorliegen, bezogen auf Gewichtsprozent.

14. Zusammensetzung nach Anspruch 13, **dadurch gekennzeichnet, dass** Katalysator A TiPOSS oder SnPOSS ist und Katalysator B ausgewählt ist aus der Gruppe bestehend aus Bismut(III)-tris(neodecanoat), Dibutylzinndilaurat (DBTL), Zink(II)-2-ethylhexanoat, Zirkonium-tetraisopropylat, Zirkonium-tetrabutylat oder Mischungen davon, besonders bevorzugt ist Katalysator A TiPOSS und Katalysator B ist Bismut(III)-tris(neodecanoat).

15. Verfahren zur Herstellung einer Zusammensetzung, wobei dieses folgende Verfahrensschritte enthält
a. Bereitstellen einer Zusammensetzung enthaltend
i. mindestens ein α,ω-Dihydroxypoiyorganosiioxan welches eine kinematische Viskosität nach DIN 53019-1:2008-09 von mindestens 50.000 cSt aufweist,
ii. einen Katalysator A, wobei der Katalysator TiPOSS oder SnPOSS ist, bevorzugt TiPOSS ist,
iii. einen Katalysator B, wobei der Katalysator Dibutylzinndilaurat (DBTL), Zinn(II)-2-ethylhexanoat (Zinnoctoat), Zink(II)-2-ethylhexanoat, Zink(II)-neodecanoat, Bismut(III)-tris(2-ethylhexonat), Bismut(III)-tris(neodecanoat), Titan-tetraisopropylat, Titan-tetrabutylat, Aluminium-sec-butylat, Zirkonium-tetraisopropylat, Zirkonium-tetrabutylat oder Mischungen daraus ist, bevorzugt Bismut(III)-tris(neodecanoat) ist,
iv. mindestens einen Vernetzer ausgewählt der Gruppe bestehend aus Oxim-Vernetzern wie Vinyl-tris(2-pentanonoximo)silan, Methyl-tris(2-pentanonoximo)silan, Vinyl-tris(2-propanonoximo)silan, Methoxyvinyl-di-(2-propanonoximo)silan und Dimethoxyvinyl-(2-propanonoximo)silan oder Mischungen daraus oder Acetat-Vernetzern wie Methyltriacetoxysilan,
b. Vermischen der in a. bereitgestellten Zusammensetzung unter Einsatz von mechanischer und/oder thermischer Energie.

16. Zusammensetzung erhältlich nach einem Verfahren gemäß Anspruch 14 oder 15.

17. Dichtstoffformulierung umfassend folgenden Komponenten:
- mindestens eine hydroxyfunktionalisierte Polyorganosiloxanverbindung nach einem der Ansprüche 4 oder 5,
- mindestens einen Vernetzer nach einem der Ansprüche 6 oder 12,
- mindestens zwei Katalysatoren A und B nach einem der Ansprüche 2, 3, 7-12 oder 14
- mindestens ein Weichmacher,
- mindestens ein Füllstoffe und
- mindestens einen Haftvermittler.

18. Verwendung von mindestens zwei Katalysatoren A und B nach einem der Ansprüche 2, 3, 7-12 oder 14 für die Herstellung von Silikonmassen mit einer Shore A-Härte <50, bevorzugt <25, besonders bevorzugt ≤ 15.

19. Verwendung nach Anspruch 18 für die Herstellung von Silikonmassen mit einer Bruchdehnung nach DIN 53504:2017-03, S2-Prüfgeometrie von mindestens 150 %, bevorzugt von mindestens 200 %, besonders bevorzugt von mindestens 250 %.

## Claims

1. Composition containing at least one hydroxyl-functionalised polyorganosiloxane compound, at least one curing agent and at least two catalysts A and B, wherein Catalyst A is selected from the group of metal siloxane-silanol(ate) compounds and Catalyst B is selected from a group of catalysts which does not comprise metal siloxane-silanol(ate) compounds.

2. Composition according to Claim 1, **characterised in that** Catalyst B is selected from the group of metal-organic compounds.

3. Composition according to Claim 1 or 2, **characterised in that** Catalyst B is selected from the group consisting of tetraalkyl titanates such as tetramethyl titanate, tetraethyl titanate, tetra-n-propyl titanate, tetra-isopropyl titanate, tetra-n-butyl titanate, tetra-isobutyl titanate, tetra-sec-butyl titanate, tetraoctyl titanate, tetra (2-ethylhexyl)titanate, dialkyl titanate ((RO)₂TiO₂, wherein R, for example, stands for iso-propyl, n-butyl, iso-butyl) such as isopropyl n-butyltitanate; titanium acetylacetonate chelates such as di-isopropoxy-bis(acetylacetonate)titanate, di-isopropoxy-bis(ethyl acetylacetonate)titanate, di-n- butyl-bis(acetylacetonate)titanate, di-n-butyl bis(ethyl acetoacetate)titanate, tri-isopropoxide bis(acetylacetonate)titanate, zirconium tetraalkylates such as zirconium tetraethylate, zirconium tetrabutylate, zirconium tetrabutyrate, zirconium tetrapropylate, zirconium carboxylates such as zirconium diacetate; zirconium acetylacetonate chelates such as zirconium tetra(acetylacetonate), tributoxy zirconium acetylacetonate, dibutoxy zirconium bis(acetylacetonate), aluminium tris alkylates such as aluminium tri-isopropylate, aluminium sec-butyate; aluminium acetylacetonate chelates such as aluminium tris(acetylacetonate) and aluminium tris(ethyl acetylacetonate), organotin compounds such as dibutyltin dilaurate (DBTL), dibutyltin maleate, dibutyltin diacetate, tin(II) 2-ethylhexanoate (tin octoate), tin naphthenate, dimethyltin dineodecanoate, dioctyltin dineodecanoate, dimethyltin dioleate, dioctyltin dilaurate, dimethyltin mercaptides, dibutyltin mercaptides, dioctyltin mercaptides, dibutyltin dithioglycolate, dioctyltin glycolate, dimethyltin glycolate, a solution of dibutyltin oxide, reaction products of zinc salts and organic carboxylic acids (carboxylates) such as zinc(II) 2-ethylhexanoate or zinc(II) neodecanoate, mixtures of bismuth and zinc carboxylates, reaction products of calcium salts and organic carboxylic acids (carboxylates) such as calcium bis(2- ethylhexanoate) or calcium neodecanoate, reaction products of sodium salts and organic carboxylic acids (carboxylates) such as sodium(2-ethylhexanoate) or sodium neodecanoate, mixtures of calcium and sodium carboxylates, reaction products of bismuth salts and organic carboxylic acids such as bismuth(III) tris(2-ethylhexonate) and bismuth(III) tris(neodecanoate) such as bismuth complex compounds, organolead compounds such as lead octylate, organovanadium compounds or mixtures thereof, preferably selected from bismuth, zinc, aluminium, calcium, sodium, and/or zirconium carboxylates, in particular most preferably selected from dibutyltin dilaurate (DBTL), tin(II) 2-ethylhexanoate (tin octoate), zinc(II) 2-ethylhexanoate, zinc(II) neodecanoate (tin neodecanoate), bismuth(III) tris(2- ethylhexonate), bismuth(III) tris(neodecanoate) (Bismuth neodecanoate), titanium tetraisopropylate, titanium tetrabutylate, aluminium sec-butylate, zirconium tetraisopropylate, zirconium tetrabutylate, calcium bis(2-ethylhexanoate), sodium(2-ethylhexanoate) or mixtures thereof, most preferably bismuth(III) tris(neodecanoate), bismuth(III) tris(2-ethylhexonate) or mixtures thereof, most preferably is bismuth(III) tris(neodecanoate).

4. Composition according to one of the preceding claims, **characterised in that** the hydroxyl-functionalised polyorganosiloxane compound is an α,ω-dihydroxy polyorganosiloxane.

5. Composition according to Claim 4, **characterised in that** the α,ω- dihydroxy polyorganosiloxane has a kinematic viscosity according to DIN 53019-1 :2008-09 of at least 10,000 cSt, preferably at least 20,000 cSt, more preferably has at least 50,000 cSt, most preferably has a kinematic viscosity of approximately 80,000 cSt.

6. Composition according to one of the preceding claims, **characterised in that** the curing agent is selected from the group consisting of oxime curing agents such as vinyl tris(2-pentanone oxime)silane, ethyl tris(2-propanone oxime)silane, methyl tris(2-pentanone oxime)silane, vinyl tris(2-propanone oxime)silane, methoxyvinyl di-(2- propanone oxime)silane, dimethoxyvinyl (2-propanone oxime)silane, methyl tris(2- butanone oxime)silane, phenyl tris(2-butanone oxime)silane, vinyl tris(2-butanone oxime)silane and tetra (2-butanone oxime)silane or mixtures thereof, acetate curing agents such as methyl triacetoxysilane, ethylhexyl triacetoxysilane, propyl triacetoxysilane or vinyl triacetoxysilane or mixtures thereof, lactate curing agents such as tris(ethyl lactate)methylsilane or tris(ethyl lactate)vinylsilane or mixtures thereof, salicylate curing agents such as tris(2-ethylhexyl salicylate)vinylsilane, tris(2-ethylhexyl salicylate)methylsilane, tris(2-ethylhexyl salicylate)propylsilane or mixtures thereof or a mixture of all the above-mentioned curing agents.

7. Composition according to one of the preceding claims, **characterised in that** the metal siloxane-silanol(ate) compound has the general formula R*_{q}SiᵣOₛMₜ, wherein each R* is selected independently of each other from the group consisting of optionally substituted C1- to C20-alkyl, optionally substituted C3- to C6-cycloalkyl, optionally substituted C2- to C20-alkenyl, optionally substituted C6- to C10-aryl, -OH and -O-(C1- to C10-alkyl), each M is selected independently of each other from the group consisting of s- and p-block metals, d- and f-block transition metals, lanthanide and actinide metals and semimetals, particularly from the group consisting of metals of the 1st, 2nd, 3rd, 4th, 5th, 8th, 10th and 11th secondary group and metals of the 1st, 2nd, 3rd, 4th and 5th primary group, preferably from the group consisting of Na, Zn, Sc, Nd, Ti, Zr, Hf, V, Fe, Pt, Cu, Ga, Sn and Bi; in particular preferably from the group consisting of Zn, Ti, Zr, Hf, V, Fe, Sn and Bi,
q is a whole number from 4 to 19,
r is a whole number from 4 to 10,
s is a whole number from 8 to 30, and
t is a whole number from 1 to 8.

8. Composition according to Claim 7 **characterised in that** the metal siloxane-silanol(ate) compound is a metal silsesquioxane of the structure (IV), 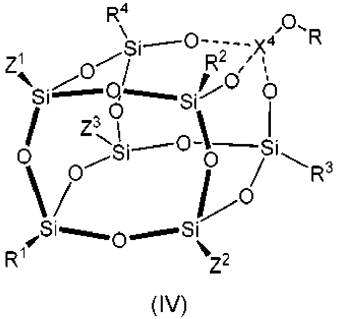 wherein
X4 is selected from the group consisting of metals of the 1st, 2nd, 3rd, 4th, 5th, 8th, 10th and 11th secondary group and metals of the 1st, 2nd, 3rd, 4th and 5th primary group, preferably from the group consisting of Na, Zn, Sc, Nd, Ti, Zr, Hf, V, Fe, Pt, Cu, Ga, Sn and Bi; in particular preferably from the group consisting of Zn, Ti, Zr, Hf, V, Fe, Sn and Bi, in particular even more preferably from the group consisting of Ti and Sn, in particular even more preferably Ti, and
X⁴ is linked to OR, wherein R is selected from the group consisting of -H, methyl, -ethyl, -propyl, -butyl, -octyl, -isopropyl, and -isobutyl, Z¹, Z² and Z³ each independently represent C1- to C20-alkyl, C3- to C8-cycloalkyl, C2- to C20-alkenyl and C5- to C10-aryl, are selected in particular from the group consisting of methyl-, ethyl-, propyl-, isopropyl-, butyl-, isobutyl-, hexyl-, heptyl-, octyl-, vinyl-, allyl-, butenyl- and phenyl-, and benzyl-, and R¹, R², R³ and R⁴ each independently represent C1- to C20-alkyl, C3- to C8-cycloalkyl, C2- to C20-alkenyl, and C5- to C10-aryl, are selected in particular from the group consisting of methyl-, ethyl-, propyl-, isopropyl-, butyl-, isobutyl-, hexyl-, heptyl-, octyl-, vinyl-, allyl-, butenyl- and phenyl-, and benzyl-.

9. Composition according to Claim 8 **characterised in that** the metal siloxane-silanol(ate) compound is a metal silsesquioxane of the structure (IVb), 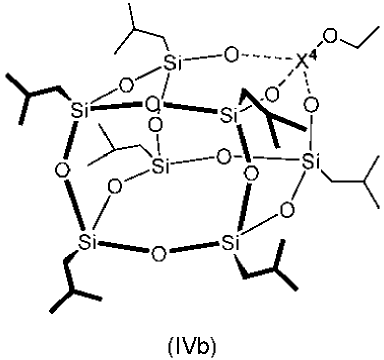 wherein
X⁴ is selected from the group consisting of metals of the 1st, 2nd, 3rd, 4th, 5th, 8th, 10th and 11th secondary group and metals of the 1st, 2nd, 3rd, 4th and 5th primary group, preferably from the group consisting of Na, Zn, Sc, Nd, Ti, Zr, Hf, V, Fe, Pt, Cu, Ga, Sn and Bi; in particular preferably from the group consisting of Zn, Ti, Zr, Hf, V, Fe, Sn and Bi, in particular even more preferably from the group consisting of Ti (ergo is hepta-isobutyl POSS titanium(IV) ethoxide (Ti-POSS)) and Sn (ergo is hepta-isobutyl POSS tin(IV) ethoxide (Sn-POSS)), in particular even more preferably Ti (ergo is hepta-isobutyl POSS titanium(IV) ethoxide (Ti-POSS)).

10. Composition according to one of the preceding claims, **characterised in that** the metal siloxane-silanol(ate) compound is present in a molar concentration in the range of 0.000001 to 0.01 mol/kg, particularly from 0.00005 to 0.005 mol/kg or 0.00007 to 0.001 mol/kg, each in relation to the total weight of the composition.

11. Composition according to one of the preceding claims, **characterised in that** the metal siloxane-silanol(ate) compound is present from 0.001 to 0.5% by weight, preferably from 0.006 to 0.1%.

12. Composition according to one of the preceding claims, **characterised in that** the curing agent is selected from the group consisting of oxime curing agents such as vinyl tris(2-pentanone oxime)silane, methyl tris(2-pentanone oxime)silane, vinyl tris(2-propanone oxime)silane, methoxyvinyl di-(2-propanone oxime)silane and dimethoxyvinyl (2-propanone oxime)silane or mixtures thereof or acetate curing agents such as methyl triacetoxysilane and Catalyst A selected from the group consisting of mononuclear metallised silsesquioxanes of the structural formula (IV) or mixtures thereof and Catalyst B is selected from the group consisting of dibutyltin dilaurate (DBTL), tin(II) 2-ethylhexanoate (tin octoate), zinc(II) 2-ethylhexanoate, zinc(II) neodecanoate, calcium bis(2-ethylhexanoate), sodium(2-ethylhexanoate), bismuth(III) tris(2-ethylhexonate), bismuth(III) tris(neodecanoate), titanium tetraisopropylate, titanium tetrabutylate, aluminium sec-butylate, zirconium tetraisopropylate, zirconium tetrabutylate or mixtures thereof.

13. Composition according to one of the preceding claims, **characterised in that** Catalysts A and B are present at a ratio of between 1:10 and 10:1 to each other, more preferably Catalysts A and B are present at a ratio of between 1:8 and 8:1 to each other, in particular preferably Catalysts A and B are present at a ratio of between 1:5 and 5:1 to each other, in particular more preferably Catalysts A and B are present at a ratio of between 1:2 and 2:1 to each other, in particular even more preferably at a ratio of 0.9:1.1 and 1.1:0.9 to each other, most preferably at a ratio of 1:1 to each other, in relation to percent by weight.

14. Composition according to Claim 13, **characterised in that** Catalyst A is Ti-POSS or Sn-POSS and Catalyst B is selected from the group consisting of bismuth(III) tris(neodecanoate), dibutyltin dilaurate (DBTL), zinc(ll) 2-ethylhexanoate, zirconium tetraisopropylate, zirconium tetrabutylate or mixtures thereof, in particular preferably Catalyst A is Ti-POSS and Catalyst B is bismuth(III) tris(neodecanoate).

15. Method for the production of a composition, wherein such composition contains the following method steps
a. Preparation of a composition containing
i. at least one α,ω-dihydroxy polyorganosiloxane, having a kinematic viscosity according to DIN 53019-1:2008-09 of at least 50,000 cSt,
ii. a Catalyst A, wherein the catalyst is Ti-POSS or Sn-POSS, preferably Ti-POSS,
iii. a Catalyst B, wherein the catalyst is dibutyltin dilaurate (DBTL), tin(II) 2-ethylhexanoate (tin octoate), zinc(II) 2-ethylhexanoate, zinc(II) neodecanoate, bismuth(III) tris(2-ethylhexonate), bismuth(III) tris(neodecanoate), titanium tetraisopropylate, titanium tetrabutylate, aluminium sec-butylate, zirconium tetraisopropylate, zirconium tetrabutylate or mixtures thereof, preferably bismuth(III) tris(neodecanoate),
iv. at least one curing agent selected from the group consisting of oxime curing agents such as vinyl tris(2-pentanone oxime)silane, methyl tris(2-pentanone oxime)silane, vinyl tris(2-propanone oxime)silane, methoxyvinyl di-(2-propanone oxime)silane and dimethoxyvinyl (2-propanone oxime)silane or mixtures thereof or acetate curing agents such as methyl triacetoxysilane,
b. Mixing of the composition prepared in a. by means of mechanical and/or thermal energy.

16. Composition obtainable by means of a method according to Claim 14 or 15.

17. Sealant formulation comprising the following components:
- at least one hydroxyl-functionalised polyorganosiloxane compound according to one of Claims 4 or 5,
- at least one curing agent according to one of Claims 6 or 12,
- at least two Catalysts A and B according to one of Claims 2, 3, 7-12 or 14
- at least one plasticiser,
- at least one filler and
- at least one bonding agent.

18. Use of at least two Catalysts A and B according to one of Claims 2, 3, 7-12 or 14 for the production of silicon compounds with a Shore A hardness of <50, preferably <25, in particular preferably ≤ 15.

19. Use according to Claim 18 for the production of silicon compounds with an elongation at break according to DIN 53504:2017-03, S2 test geometry of at least 150%, preferably at least 200%, in particular preferably at least 250%.

## Revendications

1. Composition contenant au moins un composé polyorganosiloxane à fonction hydroxy, au moins un agent de réticulation et au moins deux catalyseurs A et B, le catalyseur A étant choisi dans le groupe des composés siloxane-silanol(-at) métalliques et le catalyseur B étant choisi dans un groupe de catalyseurs qui ne comprend pas les composés siloxane-silanol(-at) métalliques.

2. Composition selon la revendication 1, **caractérisée en ce que** le catalyseur B est choisi dans le groupe des composés organométalliques.

3. Composition selon la revendication 1 ou 2, **caractérisée en ce que** le catalyseur B est choisi dans le groupe constitué par les titanates de tétraalkyle, tels que le titanate de tétraméthyle, le titanate de tétraéthyle, titanate de tétra-n-propyle, titanate de tétra-isopropyle, titanate de tétra-n-butyle, titanate de tétra-isobutyle, titanate de tétra-sec-butyle, titanate de tétraoctyle, titanate de tétra-(2-éthylhexyle), titanates de dialkyle ((RO)₂TiO₂, où R par ex. représente un iso-propyle, un n-butyle, un iso-butyle), tels que le titanate d'isopropyle et de n-butyle ; chélates d'acétylacétonate de titane, tels que le titanate de di-isopropoxy-bis(acétylacétonate), le titanate de di-isopropoxy-bis(acétylacétonate d'éthyle), le titanate de di-isopropoxy-bis(acétylacétonate d'éthyle) le titanate de di-n-butyle-bis(acétylacétoacétate d'éthyle), le bis(acétylacétonate)titanate de tri-isopropoxyde, le tétraalkylate de zirconium, tels que le tétraéthylate de zirconium, le tétrabutylate de zirconium, le tétrabutyrate de zirconium, le tétrapropylate de zirconium, les carboxylates de zirconium, tel que le diacétate de zirconium ; chélates d'acétylacétonate de zirconium, tels que le tétra(acétylacétonate) de zirconium, l'acétylacétonate de tributoxyzirconium, le bis(acétylacétonate) de dibutoxyzirconium, les trisalkylate d'aluminium, tels que le triisopropylate d'aluminium, le sec-butylate d'aluminium ; chélates d'acétylacétonate d'aluminium, tels que le tris(acétylacétonate) d'aluminium et le tris(acétylacétonate d'éthyle) d'aluminium, composés organostanniques tels que le dilaurate de dibutylétain (DBTL), le maléate de dibutylétain, le diacétate de dibutylétain, l'hexanoate de (II)-2-éthyle d'étain (octoate d'étain), le naphténate d'étain, le dinéodécanoate de diméthylétain, le dinéodécanoate de dioctylétain, le dioléate de diméthylétain, le dilaurate de dioctylétain, le mercaptide de diméthylétain, le mercaptide de dibutylétain, le mercaptide de dioctylétain, le dithioglycolate de dibutylétain, le glycolate de dioctylétain, le glycolate de diméthylétain, une solution d'oxyde de dibutylétain, produits de réaction de sels de zinc et d'acides carboxyliques organiques (carboxylates) tels que le 2-éthylhexanoate de zinc(ll) ou le néodécanoate de zinc(II), mélanges de carboxylates de bismuth et de zinc, produits de réaction de sels de calcium et d'acides carboxyliques organiques (carboxylates) tels que le bis(2-éthylhexanoate) de calcium ou le néodécanoate de calcium, produits de réaction de sels de sodium et d'acides carboxyliques organiques (carboxylates) tels que le (2-éthylhexanoate) de sodium ou le néodécanoate de sodium, mélanges de carboxylates de calcium et de sodium, produits de réaction de sels de bismuth et d'acides carboxyliques organiques tels que le tris(2-éthylhexonate) de bismuth(III) et le tris(néodécanoate) de bismuth(III), ainsi que les composés complexes de bismuth, les composés organo-plombiques tels que l'octylate de plomb, les composés organo-vanadium ou leurs mélanges, de préférence choisis parmi les carboxylates de bismuth, de zinc, d'aluminium, de calcium, de sodium et/ou de zirconium, tout particulièrement choisis parmi le dilaurate de dibutylétain (DBTL), l'hexanoate d'étain(II)-2-éthyle (octoate d'étain), l'hexanoate de zinc(ll)-2-éthyle, le néodécanoate de zinc(ll) (néodécanoate d'étain), le tris(2-éthylhexonate) de bismuth (III), le tris(néodécanoate) de bismuth(III) (néodécanoate de bismuth), le tétraisopropylate de titane, le tétrabutylate de titane, le sec-butylate d'aluminium, tétraisopropylate de zirconium, le tétrabutylate de zirconium, le bis(2-éthylhexanoate) de calcium, le (2-éthylhexanoate) de sodium ou leurs mélanges, de préférence le tris(néodécanoate) de bismuth(III), le tris(2-éthylhexonate) de bismuth(III) ou leurs mélanges, de préférence le tris(néodécanoate) de bismuth(III).

4. Composition selon l'une des revendications précédentes, **caractérisée en ce que** le composé polyorganosiloxane à fonction hydroxy est un α,ω-dihydroxypolyorganoshoxane.

5. Composition selon la revendication 4, **caractérisée en ce que** l'α,ω-dihydroxypolyorganosiloxane comporte une viscosité cinématique selon la norme DIN 53019-1:2008-09 d'au moins 10 000 cSt, de préférence d'au moins 20 000 cSt, de manière particulièrement préférée d'au moins 50 000 cSt, de manière tout particulièrement préférée une viscosité cinématique d'environ 80 000 cSt.

6. Composition selon l'une des revendications précédentes, **caractérisée en ce que** l'agent de réticulation est choisi dans le groupe constitué par les agents de réticulation oxime tels que le vinyl-tris(2-pentanonoximo)silane, l'éthyl-tris(2-propanonoximo)silane, le méthyl-tris(2-pentanonoximo)silane, le vinyl-tris(2-propanonoximo)silane, le méthoxyvinyl-di-(2-propanonoximo)silane, le diméthoxyvinyl-(2-propanonoximo)silane, le méthyl-tris(2-butanonoximo)silane, le phényl-tris(2-butanonoximo)silane, le vinyl-tris(2-butanonoximo)silane et le tétra(2-butanonoximo)silane ou leurs mélanges, des agents de réticulation acétate tels que le méthyltriacétoxysilane, l'éthyltriacétoxysilane, le propyltriacétoxysilane ou le vinyltriacétoxysilane ou leurs mélanges, des agents de réticulation lactate tels que le tris(éthyllactato)méthylsilane ou le tris(éthyllactato)vinylsilane ou leurs mélanges, des agents de réticulation salicylés tels que le tris(2-éthylhexylsalicylato)vinylsilane, le tris(2-éthylhexylsalicylato)méthylsilane, le tris(2-éthylhexylsalicylato)propylsilane ou leurs mélanges, ou un mélange de tous les agents de réticulation précités.

7. Composition selon l'une des revendications précédentes, **caractérisée en ce que** le composé siloxane-silanol(-at) métallique comporte la formule générale R*_{q}SiᵣOₛMₜ, dans laquelle chaque R* est indépendamment choisi dans le groupe constitué par un alkyle en C1 à C20 éventuellement substitué, un cycloalkyle en C3 à C6 éventuellement substitué, un alcényle en C2 à C20 éventuellement substitué, un aryle en C6 à C10 éventuellement substitué, -OH et -O-(alkyle en C1 à C10), chaque M est choisi indépendamment dans le groupe constitué par les métaux des blocs s et p, les métaux de transition des blocs d et f, les métaux de type lanthanide et actinide et les semi-métaux, en particulier dans le groupe constitué par les métaux des 1er, 2e, 3e, 4e, 5e, 8e, 10e et 11e sous-groupes et les métaux des 1er, 2e, 3e, 4e et 5e groupes principaux, de préférence du groupe constitué par Na, Zn, Sc, Nd, Ti, Zr, Hf, V, Fe, Pt, Cu, Ga, Sn et Bi ; de manière particulièrement préférée du groupe constitué par Zn, Ti, Zr, Hf, V, Fe, Sn et Bi,
q étant un nombre entier de 4 à 19,
r étant un nombre entier de 4 à 10,
s étant un nombre entier de 8 à 30, et
t étant un nombre entier de 1 à 8.

8. Composition selon la revendication 7, **caractérisée en ce que** le composé métal-siloxane-silanol(-at) est un métal-silsesquioxane de structure (IV), 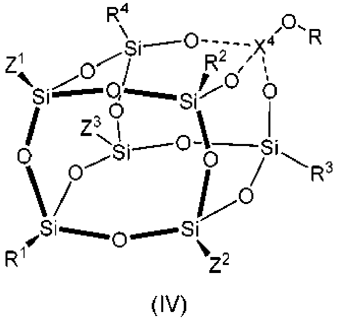
X4 étant choisi dans le groupe constitué par les métaux des 1er, 2e, 3e, 4e, 5e, 8e, 10e et 11e sous-groupes et les métaux des 1er, 2e, 3e, 4e et 5e groupes principaux, de préférence dans le groupe constitué par Na, Zn, Sc, Nd, Ti, Zr, Hf, V, Fe, Pt, Cu, Ga, Sn et Bi ; de manière particulièrement préférée dans le groupe constitué par Zn, Ti, Zr, Hf, V, Fe, Sn et Bi, de manière particulièrement préférée dans le groupe constitué par Ti et Sn, de manière particulièrement préférée Ti, et
X⁴ est lié à OR, R étant choisi dans le groupe constitué par -H, méthyle, -éthyle, -propyle, - butyle, -octyle, -isopropyle et -isobutyle, Z¹, Z² et Z³ sont chacun indépendamment un groupe alkyle en C1 à C20, représentent un cycloalkyle en C3 à C8, un alcényle en C2 à C20 et un aryle en C5 à C10, en particulier sont choisis dans le groupe constitué par les groupes méthyle, éthyle, propyle, isopropyle, butyle, isobutyle, hexyle, heptyle, octyle, vinyle, allyle, butényle et phényle, et benzyle, et R¹, R², R³ et R⁴ représentent chacun indépendamment un alkyle en C1 à C20, un cycloalkyle en C3 à C8, un alcényle en C2 à C20, et un aryle en C5 à C10, sont en particulier choisis dans le groupe constitué par les groupes méthyle, éthyle, propyle, isopropyle, butyle, isobutyle, hexyle, heptyle, octyle, vinyle, allyle, butényle et phényle, et benzyle.

9. Composition selon la revendication 8 , **caractérisée en ce que** le composé métal-siloxane-silanol(-at) est un métal-silsesquioxane de structure (IVb), 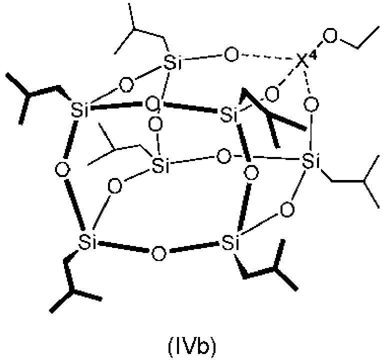
X⁴ étant choisi dans le groupe constitué par les métaux des 1er, 2e, 3e, 4e, 5e, 8e, 10e et 11e sous-groupes et les métaux des 1er, 2e, 3e, 4e et 5e groupes principaux, de préférence du groupe constitué par Na, Zn, Sc, Nd, Ti, Zr, Hf, V, Fe, Pt, Cu, Ga, Sn et Bi ; de manière particulièrement préférée du groupe constitué par Zn, Ti, Zr, Hf, V, Fe, Sn et Bi,
de manière particulièrement préférée dans le groupe constitué par Ti (ergo heptaisobutyle POSS-oxyde de titane (IV) (TiPOSS)) et Sn (ergo heptaisobutyle POSS-oxyde d'étain (IV) (SnPOSS)), de manière particulièrement préférée Ti (ergo heptaisobutyle POSS-oxyde de titane (IV) (TiPOSS)).

10. Composition selon l'une des revendications précédentes, **caractérisée en ce que** le composé siloxane-silanol(-at) métallique est présent à une concentration molaire comprise entre 0,000001 et 0,01 mole/kg, en particulier entre 0,00005 et 0,005 mole/kg ou entre 0,00007 et 0,001 mole/kg, dans chaque cas par rapport au poids total de la composition.

11. Composition selon l'une des revendications précédentes **caractérisée en ce que** le composé siloxane silanol(-at) métallique est présent à une teneur pondérale de 0,001 à 0,5 %, de préférence de 0,006 à 0,1 %.

12. Composition selon l'une des revendications précédentes, **caractérisée en ce que** l'agent de réticulation est choisi dans le groupe constitué par les agents de réticulation oxime tels que le vinyl-tris(2-pentanonoximo)silane, le méthyl-tris(2-pentanonoximo)silane, le vinyl-tris(2-propanonoximo)silane, le méthoxyvinyl-di-(2-propanonoximo)silane et le diméthoxyvinyl-(2-propanonoximo)silane ou des mélanges de ceux-ci ou des agents de réticulation acétate tels que le méthyltriacétoxysilane et le catalyseur A est choisi dans le groupe constitué par les silsesquioxanes métallisés mononucléaires de formule développée (IV) ou des mélanges de ceux-ci et le catalyseur B est choisi dans le groupe constitué par le dilaurate de dibutylétain (DBTL), hexanoate d'étain (II)-2-éthyle (octoate d'étain), hexanoate d'éthyle-2-zinc(II), néodécanoate de zinc(II), bis(2-éthylhexanoate) de calcium, (2-éthylhexanoate) de sodium, tris(2-éthylhexonate) de bismuth(III), tris(néodécanoate) de bismuth(III), tétraisopropylate de titane, tétrabutylate de titane, sec-butylate d'aluminium, tétraisopropylate de zirconium, tétrabutylate de zirconium ou leurs mélanges.

13. Composition selon l'une des revendications précédentes, **caractérisée en ce que** les catalyseurs A et B sont présents dans un rapport l'un par rapport à l'autre compris entre 1:10 et 10:1, de préférence encore les catalyseurs A et B sont présents dans un rapport l'un par rapport à l'autre compris entre 1:8 et 8:1, de préférence à d'autres les catalyseurs A et B sont présents dans un rapport compris entre 1:5 et 5:1 l'un par rapport à l'autre, de manière encore plus préférée, les catalyseurs A et B sont présents dans un rapport compris entre 1:2 et 2:1 l'un par rapport à l'autre, de manière particulièrement préférée dans un rapport de 0,9:1,1 et 1,1:0,9 l'un par rapport à l'autre, de manière extrêmement préférée dans un rapport de 1:1 l'un par rapport à l'autre, sur la base du pourcentage en poids.

14. Composition selon la revendication 13, **caractérisée en ce que** le catalyseur A est TiPOSS ou SnPOSS et le catalyseur B est choisi dans le groupe constitué par le tris(néodécanoate) de bismuth(III), le dilaurate de dibutylétain (DBTL), le 2-éthylhexanoate de zinc(II), le tétraisopropylate de zirconium, le tétrabutylate de zirconium ou leurs mélanges, de manière particulièrement préférée, le catalyseur A est le TiPOSS et le catalyseur B est le tris(néodécanoate) de bismuth(III).

15. Procédé de fabrication d'une composition, comportant les étapes suivantes
a. mise à disposition d'une composition contenant
i. au moins un α,ω-dihydroxypolyorganosiloxane qui comporte une viscosité cinématique selon DIN 53019-1:2008-09 d'au moins 50 000 cSt,
ii. un catalyseur A, ledit catalyseur étant TiPOSS ou SnPOSS, de préférence TiPOSS,
iii. un catalyseur B, ledit catalyseur étant du dilaurate de dibutylétain (DBTL), de l'hexanoate d'étain(II)-2-éthyle (octoate d'étain), de l'hexanoate de zinc(ll)-2-éthyle, du néodécanoate de zinc(II), du tris(2-éthylhexonate) de bismuth(III), du tris(néodécanoate) de bismuth(III), du tétraisopropylate de titane, du tétrabutylate de titane, du sec-butylate d'aluminium, du tétraisopropylate de zirconium, du tétrabutylate de zirconium ou leurs mélanges, de préférence le tris(néodécanoate) de bismuth(III),
iv. au moins un agent de réticulation choisi dans le groupe constitué par les agents de réticulation de type oxime tels que le vinyl-tris(2-pentanonoximo)silane, le méthyl-tris(2-pentanonoximo)silane, le vinyl-tris(2-propanonoximo)silane, le méthoxyvinyl-di-(2-propanonoximo)silane et le diméthoxyvinyl-(2-propanonoximo)silane ou des mélanges de ceux-ci ou des agents de réticulation de type acétate tels que le méthyltriacétoxysilane,
b. mélange de la composition mise à disposition en a. en utilisant de l'énergie mécanique et/ou thermique.

16. Composition pouvant être obtenue par un procédé selon la revendication 14 ou 15.

17. Formulation de mastic comprenant les composants suivants :
- au moins un composé polyorganosiloxane à fonction hydroxy selon l'une des revendications 4 ou 5,
- au moins un agent de réticulation selon l'une des revendications 6 ou 12,
- au moins deux catalyseurs A et B selon l'une des revendications 2, 3, 7 à 12 ou 14
- au moins un plastifiant,
- au moins un matériau de remplissage et
- au moins un agent adhésif.

18. Utilisation d'au moins deux catalyseurs A et B selon l'une des revendications 2, 3, 7 à 12 ou 14 pour la fabrication de masses en silicone ayant une dureté Shore A <50, de préférence <25, de manière particulièrement préférée ≤15.

19. Utilisation selon la revendication 18 pour la fabrication de masses en silicone ayant un allongement à la rupture selon DIN 53504:2017-03, géométrie d'essai S2 d'au moins 150 %, de préférence d'au moins 200 %, de manière particulièrement préférée d'au moins 250 %.
